(19) Europäisches Patentamt
European Patent Office
Office européen des brevets

(11) **EP 4 629 614 A1**

(12) **EUROPEAN PATENT APPLICATION**
published in accordance with Art. 153(4) EPC

(43) Date of publication:
**08.10.2025 Bulletin 2025/41**

(21) Application number: **22966900.7**

(22) Date of filing: **01.12.2022**

(51) International Patent Classification (IPC):
**H04N 19/00** *(2014.01)*

(52) Cooperative Patent Classification (CPC):
**H04N 19/00**

(86) International application number:
**PCT/CN2022/135906**

(87) International publication number:
**WO 2024/113311 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Yanzhuo
Dongguan, Guangdong 523860 (CN)**

• HUO, Junyan
**Dongguan, Guangdong 523860 (CN)**
• QIU, Ruipeng
**Dongguan, Guangdong 523860 (CN)**
• ZHANG, Hongli
**Dongguan, Guangdong 523860 (CN)**
• LI, Ming
**Dongguan, Guangdong 523860 (CN)**

(74) Representative: **Penza, Giancarlo
Bugnion S.p.A.
Viale Lancetti, 17
20158 Milano (IT)**

(54) **ENCODING AND DECODING METHOD, CODEC, BITSTREAM, AND STORAGE MEDIUM**

(57)     The present application provides an encoding and decoding method, a codec, a bitstream, and a storage medium. The codec determines at least one piece of motion vector information of a current block, and a type indication parameter and/or a geometric mode parameter (101), determines at least one reference predicted value of the current block according to the at least one piece of motion vector information, and determines at least one weight parameter of the current block according to the type indication parameter and/or the geometric mode parameter (102), and determines a predicted value of the current block on the basis of the at least one reference predicted value and the at least one weight parameter (103). The present application greatly improves the accuracy of weighted prediction, and thus improves the encoding efficiency and the compression performance.

FIG. 5

**Description**

TECHNICAL FIELD

Embodiments of the present disclosure relate to the field of picture processing technologies, and in particular, to an encoding and decoding method, an encoder, a decoder, a bitstream, and a storage medium.

BACKGROUND

In the field of video encoding and decoding, in addition to intra prediction, inter prediction may also be used during encoding and decoding a current block. The inter prediction may include inter Geometrical Partitioning Mode (GPM) and translational prediction.

In a natural video, factors such as brightness changes in a sequence of contents may not follow overall and consistent changes. When performing a inter weighted prediction, used weight values are often determined in a unit of a slice, a coding unit/block, so there will be a problem that the accuracy of inter prediction values is not high, thus reducing compression performance.

SUMMARY

Embodiments of the present disclosure provide a encoding and decoding method, an encoder, a decoder, a bitstream, and a storage medium, which greatly improve the accuracy of weighted prediction, thereby improving encoding efficiency and compression performance.

Technical solutions of the embodiments of the present disclosure can be implemented as follows.

In a first aspect, the embodiments of the present disclosure provide a decoding method. The method is applied to a decoder. The method includes the following operations.

A bitstream is decoded to determine information of at least one motion vector of a current block, and at least one of a type indication parameter or a geometrical mode parameter of the current block.

At least one reference prediction value of the current block is determined according to the information of at least one motion vector, and at least one weight parameter for the current block is determined according to at least one of the type indication parameter or the geometrical mode parameter.

A prediction value of the current block is determined based on the at least one reference prediction value and the at least one weight parameter.

In the second aspect, the embodiments of the present disclosure provide an encoding method. The method is applied to an encoder. The method includes the following operations.

Information of at least one motion vector of a current block, and at least one of a type indication parameter or a geometrical mode parameter of the current block are determined.

At least one reference prediction value of the current block is determined according to the information of at least one motion vector, and at least one weight parameter for the current block is determined according to at least one of the type indication parameter or the geometrical mode parameter.

A prediction value of the current block is determined based on the at least one reference prediction value and the at least one weight parameter.

In the third aspect, the embodiments of the present disclosure provide an encoder. The encoder includes the first determining unit.

The first determining unit is configured to determine information of at least one motion vector of a current block, and at least one of a type indication parameter or a geometrical mode parameter of the current block, determine at least one reference prediction value of the current block according to the information of at least one motion vector, determine at least one weight parameter for the current block according to at least one of the type indication parameter or the geometrical mode parameter, and determine a prediction value of the current block based on the at least one reference prediction value and the at least one weight parameter.

In the fourth aspect, the embodiments of the present disclosure provide an encoder. The encoder includes the first processor and the first memory storing instructions executable by the first processor. The instructions, when executed by the first processor, implement the method of the second aspect.

In the fifth aspect, the embodiments of the present disclosure provide a decoder. The decoder includes a decoding unit and the second determining unit.

The decoding unit is configured to decode a bitstream.

The second determining unit is configured to determine information of at least one motion vector of a current block, and at least one of a type indication parameter or a geometrical mode parameter of the current block, determine at least one reference prediction value of the current block according to the information of at least one motion vector,

determine at least one weight parameter for the current block according to at least one of the type indication parameter or the geometrical mode parameter, and determine a prediction value of the current block based on the at least one reference prediction value and the at least one weight parameter.

In the sixth aspect, the embodiments of the present disclosure provide a decoder. The decoder includes the second processor and the second memory storing instructions executable by the second processor. The instructions, when executed by the second processor, implement the method of the first aspect.

In the seventh aspect, the embodiments of the present disclosure provide a bitstream. The bitstream is generated by bit encoding according to to-be-encoded information. The to-be-encoded information includes at least one of: an inter prediction mode parameter of a current block, information of at least one motion vector of the current block, a type indication parameter and/or a geometrical mode parameter.

In the eighth aspect, the embodiments of the present disclosure provide a computer storage medium. The computer storage medium stores a computer program. The method of the second aspect is implemented when the computer program is executed by the first processor, or the method of the first aspect is implemented when the computer program is executed by the second processor.

Embodiments of the present disclosure provide an encoding and decoding method, an encoder, a decoder, a bitstream, and a storage medium. The encoder/decoder can determine information of at least one motion vector of a current block, and a type indication parameter and/or a geometrical mode parameter of the current block, determine at least one reference prediction value of the current block according to the information of at least one motion vector, determine at least one weight parameter for the current block according to the type indication parameter and/or the geometrical mode parameter, and determine a prediction value of the current block based on the at least one reference prediction value and the at least one weight parameter. It can be understood that in the embodiments of the present disclosure, the encoder/decoder can determine the pixel-level weight parameter of the current block through the type indication parameter and/or the geometrical mode parameter, and then can perform prediction process on the current block according to the pixel-level weight parameter. It can be seen that in the embodiments of the present disclosure, the weight used for the prediction processing is no longer fixed, but the pixel-level weight value adapted to the change of the pixel is selected, which greatly improves the accuracy of the weighted prediction, thereby improving the encoding efficiency and the compression performance.

BRIEF DESCRIPTION OF THE DRAWINGS

FIG. 1 is a schematic diagram of neighboring blocks.
FIG. 2 is a schematic structure diagram of an encoder.
FIG. 3 is a schematic structure diagram of a decoder.
FIG. 4 is a schematic diagram of a network architecture of a codec system according to an embodiment of the present disclosure.
FIG. 5 is a schematic flowchart of an implementation of a decoding method.
FIG. 6 is a first schematic diagram of a gradient mode.
FIG. 7 is a second schematic diagram of a gradient mode.
FIG. 8 is a third schematic diagram of a gradient mode.
FIG. 9 is a fourth schematic diagram of a gradient mode.
FIG. 10 is a fifth schematic diagram of a gradient mode.
FIG. 11 is a sixth schematic diagram of a gradient mode.
FIG. 12 is a seventh schematic diagram of a gradient mode.
FIG. 13 is an eighth schematic diagram of a gradient mode.
FIG. 14 is a first schematic diagram of a pre-stored matrix.
FIG. 15 is a second schematic diagram of a pre-stored matrix.
FIG. 16 is a first schematic diagram of an interpolation process.
FIG. 17 is a second schematic diagram of an interpolation process.
FIG. 18 is a third schematic diagram of an interpolation process.
FIG. 19 is a fourth schematic diagram of an interpolation process.
FIG. 20 is a schematic flowchart of an implementation of an encoding method.
FIG. 21 is a first schematic structure diagram of an encoder.
FIG. 22 is a second schematic structure diagram of an encoder.
FIG. 23 is a first schematic structure diagram of a decoder.
FIG. 24 is a second schematic structure diagram of a decoder.

DETAILED DESCRIPTION

Hereinafter, technical solutions in embodiments of the present disclosure will be clearly and completely described with reference to the accompanying drawings in the embodiments of the present disclosure. It can be understood that specific embodiments described herein are merely for the purpose of explaining the related application, and are not limiting the present disclosure. It should also be noted that, for convenience of description, only parts related to the relevant application are illustrated in the drawings.

At present, a block-based hybrid coding framework is adopted in common video codec standards. Each picture in a video is partitioned into square Largest Coding Units (LCUs) or Coding Tree Units (CTUs) of a same size (such as 128 × 128, 64 × 64, etc.). Each LCU or CTU may be further partitioned into rectangular Coding Units (CUs) according to a rule. Moreover, each CU may be further partitioned into smaller prediction units (PUs). Specifically, the hybrid coding framework may include prediction modules, transform modules, quantization modules, entropy coding modules, in-loop filtering modules, and the like. The prediction module may include intra prediction and inter prediction. The inter prediction may include motion estimation and motion compensation. Because there is a strong correlation between adjacent pixels in a picture of a video, spatial redundancy between adjacent pixels can be eliminated by using the intra prediction in video codec technologies. However, because there is a strong similarity between adjacent pictures in the video, temporal redundancy between adjacent pictures can be eliminated by using the inter prediction in the video codec technologies, thus improving the codec efficiency.

Basic operation flows of a video codec are as follows. At an encoding end, a picture is partitioned into blocks. Intra prediction or inter prediction is performed for a current block to generate a prediction block of the current block. A residual block is obtained by subtracting the prediction block from an original block of the current block. Transform and quantization are performed on the residual block to obtain a quantized coefficient matrix. The quantized coefficient matrix is entropy coded and output to a bitstream. At a decoding end, intra prediction or inter prediction is used for the current block to generate a prediction block of the current block. On the other hand, the bitstream is decoded to obtain a quantized coefficient matrix. Inverse quantization and inverse transform are performed on the quantized coefficient matrix to obtain a residual block. The prediction block and the residual block are added to obtain a reconstructed block. The reconstructed block constitutes a reconstructed picture. In-loop filter is performed on the reconstructed picture based on pictures or blocks to obtain a decoded picture. At the encoding end, similar operations as the decoding end need to be performed to obtain the decoded picture. The decoded picture may be used as a reference picture for inter prediction for a subsequent picture. Block partition information, mode or parameter information of prediction, transformation, quantization, entropy coding, in loop filter, etc., determined at the encoding end need to be output to the bitstream if necessary. The decoding end determines the block partition information, mode or parameter information of prediction, transformation, quantization, entropy coding, in loop filter, etc., which are as same as that of the encoding end by parsing and analyzing according to existing information, so as to ensure that the decoded picture obtained at the encoding end is the same as a decoded picture obtained at the decoding end. The decoded picture obtained at the encoding end is usually also called a reconstructed picture. When prediction, the current block may be partitioned into PUs. When transformation, the current block may be partitioned into transform units. The partitioning for the prediction units may be different from the partitioning for the transform units. The above is the basic operation flows of the video codec under the block-based hybrid coding framework. With the development of technologies, some modules or operations of the framework or flows may be optimized. Embodiments of the present disclosure are applicable to the basic operation flows of the video codec under the block-based hybrid coding framework, but are not limited to the framework and flows.

The current block may be a current CU, a current PU, or the like.

The Versatile Video Coding (VVC) standard adopts Slice-level weighted prediction and Bi-prediction with CU-level Weight (BCW) techniques. When the Slice-level weighted prediction is used, a same group of parameters is shared by all CUs in Slice, which is classified as explicit prediction. When the BCW is used, a weighted value is determined by each CU by using an index, which is classified as a default weighting.

In addition, when the Slice-level weighted prediction and the BCW are not used, a calculated pixel prediction value is also classified as the default weighted prediction (when the Slice-level weighted prediction is not enabled). The default weighted prediction method is relatively simple. Weights and offset values are not used, and there are three situations only according to different reference lists.

In the first situation, only a forward reference list List0 is used, and a predicted pixel is calculated as follows:

$$PredSamples = Clip\left(\left(PredSampleL0 + offset1\right)? \quad shift1\right) \quad \dots\dots\dots\dots(1)$$

In the second situation, only a forward reference list List1 is used, and the predicted pixel is calculated as follows:

$$PredSamples = Clip\left(\left(PredSampleL1 + offset1\right) ?\ shift1\right) \ldots\ldots\ldots\ldots\ldots (2)$$

In the third situation, both the forward reference list List0 and the backward reference list List1 are used, and the predicted pixel is calculated as follows:

$$PredSamples = Clip\left(\left(PredSampleL0 + PredSampleL1 + offset2\right) ?\ shift2\right) \qquad (3)$$

Here, $PredSampleL0$ and $PredSampleL1$ are reference pixel values in the reference lists List0 and List1, respectively.

$$\begin{aligned}
shift1 &= Max\left(2, 14 - bitDepth\right), \\
shift2 &= Max\left(3, 15 - bitDepth\right), \\
offset1 &= 1 = \left(shift1 - 1\right), \\
offset2 &= 1 = \left(shift2 - 1\right)
\end{aligned} \qquad (4)$$

It should be noted that the reference pixel values $PredSampleL0$ and $PredSampleL1$ have been amplified during sub-pixel interpolation (the whole pixel value has also been amplified), and the above operation is rounded.

For the Slice-level weighted prediction, when the lighting intensity changes, global or local brightness changes may be appeared in a same scene in the video, such as an aperture change during shooting, or artificially edited fade-in and fade-out effects. In this type of video, contents of adjacent pictures are still similar, but corresponding pixel values are quite different, and the residuals obtained by traditional motion compensation prediction technologies are larger. Therefore, slice-level weighted prediction can effectively deal with this type of scene with overall gradient of brightness. That is, a prediction value is obtained by performing a linear transformation (a linear function defined by a weight and an offset value) on the reconstructed pixel value of the reference picture.

For usage conditions and syntax element parsing of the Slice-level weighted prediction, H.266/VVC limits the usage of Slice-level weighted prediction technology. CUs that meet the following conditions can use the Slice-level weighted prediction.

(1) When a value of a SPS parameter *sps_weighted_pred_flag* s is 1, P Slice is allowed to use the Slice-level weighted prediction.
(2) When a value of a PPS parameter *pps _weighted_pred_flag* is 1, a corresponding P Slice uses the Slice-level weighted prediction.
(3) When a value of a SPS parameter *sps_weighted_bipred_flag* is 1, B Slice is allowed to use the Slice-level weighted prediction.
(4) When a value of a PPS parameter *pps _weighted_bipred_flag* is 1, a corresponding B Slice uses the Slice-level weighted prediction.
(5) The CU does not adopt Decode MV Refinement (DMVR).

When a value of a PPS syntax element *pps_wp_info_in_ph_flag* is 1, weighting coefficients are included in a picture header. Otherwise weighting coefficients are included in a Slice header. For P Slice, each reference picture in a reference picture list L0 may have a set of weighting coefficients. For B Slice, in addition to the reference picture list L0, each reference picture in a reference picture list L1 may also have a set of weighting coefficients. Both luma components and chroma components have different weighting coefficients.

Here, for acquiring of reference pixel values for the Slice-level weighted prediction, the Slice-level weighted prediction may be used for both unidirectional prediction and bidirectional prediction. For a unidirectionally predicted CU, the reference pixel values are acquired through the following three situations. When only the forward reference list List0 is used, forward motion information MVL0 of the current CU is acquired, and the forward motion vector information MVL0 is used to perform motion compensation prediction to obtain a forward prediction value $PredSampleL0$. When only the backward reference list List1 is used, backward motion vector information MVL1 of the current CU is acquired, and the backward motion vector information is used to perform motion compensation prediction to obtain a backward prediction value $PredSampleL1$. For the bidirectional prediction, both the forward reference list List0 and the backward reference list List1 are used, the forward motion vector information is used to perform motion compensation prediction to obtain the forward prediction value $PredSampleL0$, and the backward motion vector information is used to perform motion compensation prediction to obtain the backward prediction value $PredSampleL1$.

For acquiring of a Slice-level weighted prediction value, when performing the Slice-level weighted prediction, the Slice header information includes multiple sets of weighting parameters, and one or two sets of weighting parameters are adopted for all CUs in the Slice.

For the unidirectional prediction,

$$PredSamples = Clip\left(\left(\left(PredSampleL0 \cdot w_{L0} + 2^{\log_2 W_d - 1}\right)? \quad \log_2 W_d\right) + o\_L0\right) \tag{5}$$

or,

$$PredSamples = Clip\left(\left(\left(PredSampleL1 \cdot w_{L1} + 2^{\log_2 W_d - 1}\right)? \quad \log_2 W_d\right) + o\_L1\right) \tag{6}$$

For the bidirectional prediction,

$$PredSamples = Clip\left(\left(\begin{array}{c} PredSampleL0 \cdot w_{L0} + PredSampleL1 \cdot w_{L1} + \\ (o\_L0 + o\_L1 + 1) = \quad \log_2 W_d \end{array}\right)? \quad (\log_2 W_d + 1)\right) \tag{7}$$

For a luma block,

$$\log_2 W_d = luma\_log2\_weight\_denom + shift1 \tag{8}$$

For a chroma block,

$$\log_2 W_d = chroma\_log2\_weight\_denom + shift1 \tag{9}$$

Here, *PredSampleL0* and *PredSampleL1* are reference pixel values in the reference lists list0 and list1, respectively. $w_{L0}$ and $w_{L1}$ are weights for a forward block and a backward block, respectively. *o_L0* and *o_L0* represent corresponding offsets. In order to improve the prediction accuracy, intermediate operation results have higher accuracy than the reference pixel values. *log2_weight_denom* and *chroma_log2_weight_denom* represent the improved accuracy of weighting coefficients. *shift1* is the improved accuracy of reference pixel values in the calculation process of sub-pixel interpolation (the whole pixel values are also amplified). Clip () operation is to clamp the pixel values within the valid range, such as the valid values of 8 bits are within [0, 255] and the valid values of 10 bits are within [0, 1023].

For usage conditions and syntax element parsing of CU-level bidirectional weighted prediction (BCW), H.266/VVC limits the usage of BCW technology. Only CUs that meet the following conditions can use BCW.

(1) When a value of a SPS syntax element *sps_bcw_enabled_flag* is 1, BCW is allowed to be used.
(2) The current CU is predicted through bidirectional prediction.
(3) Neither a luma component nor a chroma component of the current CU uses Slice-level weighted prediction.
(4) A product of a width and a height of the current coded block is not less than 256.

In BCW, only a small number of predefined weights are used, and the weight sets are different under different configurations. When it is a Low Delay B (LDB) configuration, the weight set is {4, 5, 3, 10, -2}. When it is a Random Access (RA) configuration, the weight set is {4, 5, 3}. Whether it is the LDB or the RA configuration is determined through decoding *NoBackwardPredFlag*.

For the determination of the weight set of BCW, only the weight index *bcw_idx* needs to be encoded. If it does not exist, the weight index is 0 by default. Correspondingly, the forward prediction values and the backward prediction values are weighted and averaged by equal weights.

For the CU in Merge mode, the BCW weight is directly acquired by the Merge candidate. For the CU in the affine Merge mode, the BCW weight corresponding to the first CPMV is used. In CUs encoded by using DMVR, BDOF, and CIIP modes, the index of BCW is 0 by default. Correspondingly, forward prediction values and backward prediction values are weighted and averaged by equal weights.

Here, for acquisition of the weighted prediction values of the CU-level bidirectional weighted prediction, both the forward reference list List0 and the backward reference list List1 are used for the bidirectional prediction. The forward motion vector information MV0 in the forward reference list List0 is used for performing motion compensation prediction to obtain the forward prediction value *PredSampleL0*. The backward motion vector information MV1 in the backward reference list List1 is used for performing motion compensation prediction to obtain the backward prediction value *PredSampleL*1.

For a CU adopting the bidirectional prediction, the BCW is initiated only for the CU adopting the bidirectional prediction, only a small number of predefined weights are used, and an index of which is encoded.

When the BCW is used, the weighted predicted value is:

$$PredSamples = Clip\left(\left(\begin{array}{c}PredSampleL0 \cdot (8-w) + \\ PredSampleL1 \cdot w + offset3\end{array}\right) ? \ (shift1+3)\right)$$

$$offset3 = 1 = (shift1+2) \qquad (10)$$

$$shift1 = Max(2, 14 - bitDepth)$$

Here, *PredSampleL*0 and *PredSampleL*1 are reference pixel values in the reference lists List0 and List1, respectively. w is a weight for the backward reference pixel value.

In H.266/VVC, a prediction coding tool in Merge mode that can utilize intra prediction values, that is, Combined inter and intra prediction (CIIP), is introduced. An intra prediction values and a inter prediction value are combined in this technology. The intra prediction value $P_{intra}$ is obtained after conventional intra prediction processing is performed on the current block through Planar mode. The inter prediction value $P_{inter}$ is obtained by performing conventional Merge mode prediction on the current block. Then, a final value for the combined intra and inter prediction is obtained by the weighted average of the intra prediction value and inter prediction value.

For usage conditions and syntax element parsing of the CIIP, in VVC, the condition that the CIIP technology is allowed to be applied to the current CU is that: when the current CU is encoded in the Merge mode, the current CU is allowed to indicate the use of the CIIP technology only if the size of the current CU is greater than 64 and less than 128.

Acquisition of the intra prediction weight *wt* in CIIP is related to encoding modes for the top and left neighboring blocks of the current CU. The encoding modes for the neighboring blocks are identified by two Flags: *isIntraTop, isIntraLeft* . When *isIntraTop* is 1, the upper neighboring block is available and the encoding mode is the intra mode. When *isIntraLeft* is 1, the left neighboring block is available and the encoding mode is the intra mode.

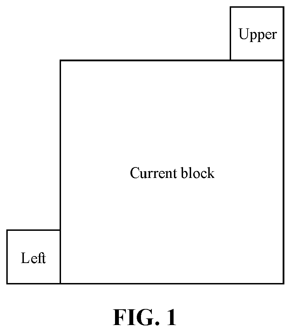

For acquisition of the weighted prediction value for CIIP, after the intra prediction value and the inter prediction value of the current CU are obtained, it is necessary to perform a weighted average of the two prediction values. The weights used in the weighting calculation depend on the encoding modes for the upper neighboring block and the left neighboring block of the current CU. For example, FIG. 1 is a schematic diagram of neighboring blocks. As illustrated in FIG. 1, the specific judgment is as follows: if (*isIntraLeft* + *isIntraLeft*) is equal to 2, the weight *wt* for the intra prediction block is equal to 3. Otherwise, if (*isIntraLeft* + *isIntraLeft)* is equal to 1, the weight wt for the intra prediction corresponding to the current CU is equal to 2. Otherwise, the weight *wt* for the intra prediction is equal to 1.

The final CIIP prediction value is calculated as follows. $P_{intra}$ is an intra prediction value obtained after conventional intra prediction processing is performed through the Planar mode on the current block, $P_{inter}$ is an inter prediction value, and *wt* is a weight for intra prediction.

$$P_{CIIP} = \left((4-wt)*P_{inter} + wt*P_{intra} + 2\right) ? \ 2 \qquad (11)$$

In VVC and Enhanced Compression Model (ECM) technologies, the weight value in inter weighted prediction takes a fixed value based on a unit of a Slice or a CU/coding block. Considering that factors such as brightness changes in a sequence of contents may not follow overall and consistent changes, it is not an optimal scheme to use a fixed weight for the whole slice or coding block during weighted prediction, which results in low encoding efficiency.

In view of the above problems, in embodiments of the present disclosure, a pixel-level weight parameter for the current block can be determined through a type indication parameter and/or a geometrical mode parameter during encoding and decoding, and then prediction processing may be performed on the current block according to the pixel-level weight parameter. It can be seen that in the embodiments of the present disclosure, the weight used for the prediction processing is no longer fixed, but the pixel-level weight value adapted for the change in the pixels is selected, which greatly improves the accuracy of the weighted prediction, thereby improving the encoding efficiency and the compression performance.

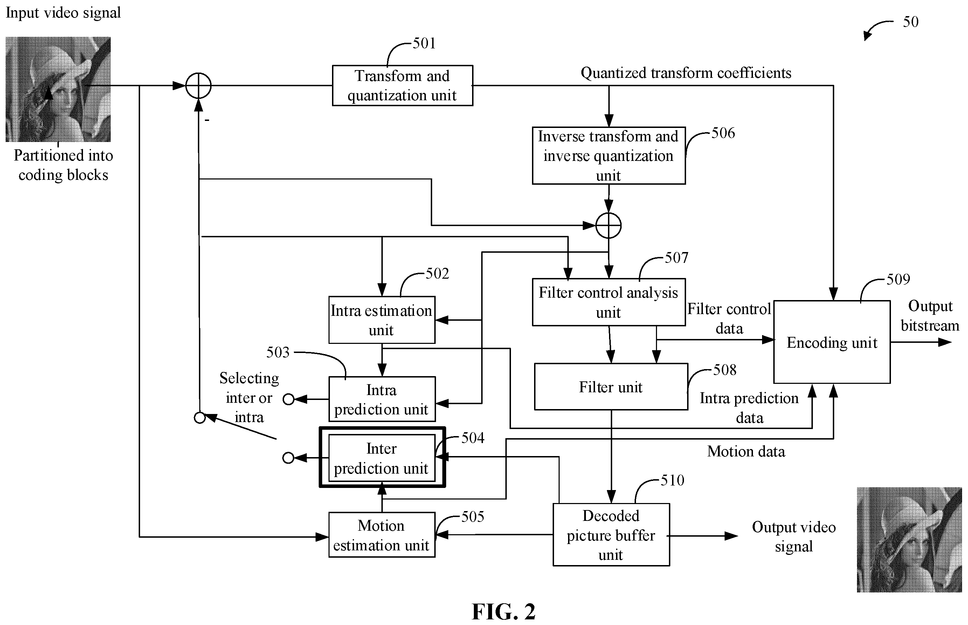

Referring to FIG. 2, a schematic structure diagram of an encoder according to an embodiment of the present disclosure is illustrated. As illustrated in FIG. 2, an encoder (specifically, a "video encoder") 50 may include a transform and quantization unit 501, an intra estimation unit 502, an intra prediction unit 503, an inter prediction unit 504, a motion estimation unit 505, an inverse transform and inverse quantization unit 506, a filter control analysis unit 507, a filter unit 508, an encoding unit 509, a decoded picture buffer unit 510, and the like. The filter unit 508 may implement de-block filtering and Sample Adaptive Offset (SAO) filtering. The encoding unit 509 may implement header information encoding and Context-based Adaptive Binary Arithmetic Coding (CABAC). For an input original video signal, a coding block of the video may be obtained by the partitioning of Coding Tree Units (CTUs). Then, residual pixel information obtained after performing intra or inter prediction is transformed for the coding block through the transform and quantization unit 501, which includes that the residual information is transformed from the pixel domain to the transform domain, and the obtained transform coefficient is quantized to further reduce the bit rate. The intra estimation unit 502 and the intra prediction unit 503 are configured to perform intra prediction on the coding block of the video. Specifically, the intra estimation unit 502 and the intra prediction unit 503 are configured to determine an intra prediction mode to be used to code the coding block of the video. The inter prediction unit 504 and the motion estimation unit 505 are configured to perform inter prediction coding of the received coding block of the video with respect to one or more blocks in the one or more reference pictures to provide temporal prediction information. Motion estimation performed by the motion estimation unit 505 is used to generate a motion vector. The motion vector may be used to estimate the motion of the coding block of the video. Motion compensation is performed by the inter prediction unit 504 based on the motion vector determined by the motion estimation unit 505. So, the inter prediction unit 504 may also be referred to as a motion compensation unit. After determining the intra prediction mode, the intra prediction unit 503 is further used to provide selected intra prediction data to the encoding unit 509, and the motion estimation unit 505 also transmits motion vector data determined by calculating to the encoding unit 509. Further, the inverse transform and inverse quantization unit 506 is configured to reconstruct the coding block of the video. A residual block is reconstructed in the pixel domain. Block effect artifacts are removed from the reconstructed residual block by the filter control analysis unit 507 and the filter unit 508. Then the reconstructed residual block is added to a prediction block in the picture in the decoded picture buffer unit 510 to generate the reconstructed coding block of the video. The encoding unit 509 is configured to code various coding parameters and quantized transform coefficients. In the CABAC-based coding algorithm, context content may be based on adjacent encoding blocks, and the encoding unit 509 is used to code the information indicating a determined intra prediction mode to output a bitstream of the video signal. The decoded picture buffer unit 510 is configured to store the reconstructed coding block of the video to be used for prediction reference. As the coding of pictures of the video progresses, new reconstructed coding blocks of the video are continuously generated, and these reconstructed encoding blocks of the video are stored in the decoded picture buffer unit 510.

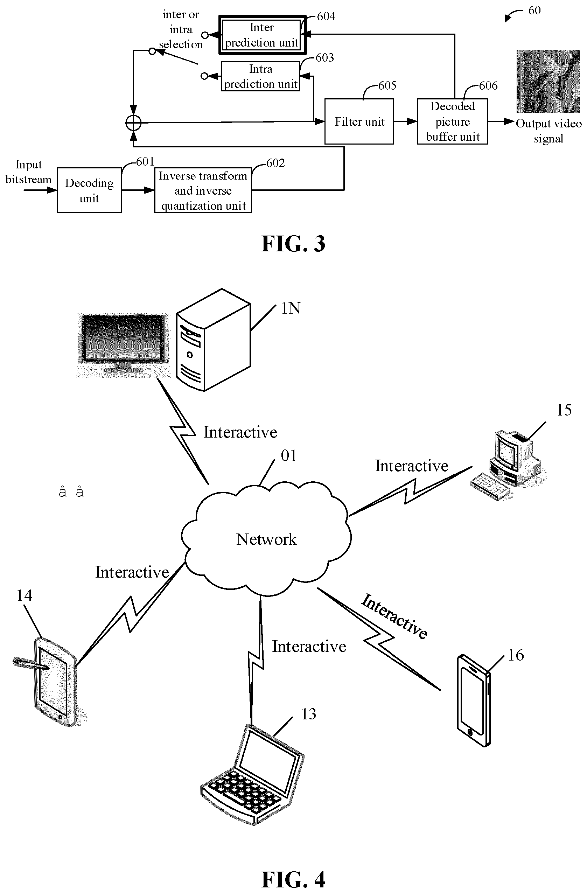

Referring to FIG. 3, a schematic structure diagram of a decoder according to an embodiment of the present disclosure is illustrated. As illustrated in FIG. 3, the decoder (specifically, a "video decoder") 60 includes a decoding unit 601, an inverse transform and inverse quantization unit 602, an intra prediction unit 603, an inter prediction unit 604, a filter unit 605, a decoded picture buffer unit 606, and the like. The decoding unit 601 may implement header information decoding and CABAC decoding. The filter unit 605 may implement de-block filtering and SAO filtering. After the input video signal is encoded in FIG. 2, a bitstream of the video signal is output. The bitstream is input into the decoder 60. The bitstream firstly is processed by the decoding unit 601 to obtain the decoded transform coefficient. The transform coefficient is processed by the inverse transform and inverse quantization unit 602 to generate a residual block in the pixel domain. The intra prediction unit 603 may be configured to generate prediction data for a current decoding block of the video based on the determined intra prediction mode and data from a previously decoded block of the current frame or picture. The inter prediction unit 604 determines prediction information for the decoding block of the video by parsing the motion vector and other associated syntax elements, and uses the prediction information to generate a prediction block for the decoding block of the video being decoded. The decoded video block is obtained by summing the residual block from the inverse transform and inverse quantization unit 602 with the corresponding prediction block generated by the intra prediction unit 603 or the inter prediction unit 604. Block effect artifacts is removed from the decoded video signal by the filter unit 605 to improve the video quality. The decoded video block is then stored in the decoded picture buffer unit 606. The decoded picture buffer unit 606 is used to store reference pictures for subsequent intra prediction or motion compensation, and also used to output the video signal. That is, the recovered original video signal is obtained.

Further, the embodiments of the present disclosure further provide a network architecture of a codec system including encoders and decoders. FIG. 4 is a schematic diagram of a network architecture of a codec system according to an embodiment of the present disclosure. As illustrated in FIG. 4, the network architecture includes one or more electronic devices 13 to 1N and a communication network 01. The electronic devices 13 to 1N may transmit videos with each other through the communication network 01. In an implementation, the electronic device may be various types of devices having video encoding and decoding functions. For example, the electronic device may include a smartphone, a tablet computer, a personal computer, a personal digital assistant, a navigator, a digital phone, a video phone, a television, a sensing device, a server, and the like, which is not limited in the embodiments of the present disclosure. Here, the decoder or encoder described in the embodiments of the present disclosure may be the above electronic device.

The encoding and decoding method in the embodiments of the present disclosure may be applied to a video encoding system, a video decoding system, or may be applied to both the video encoding system and the video decoding system, which is not limited in the embodiments of the present disclosure. It should be noted that when the encoding and decoding method is applied to a video encoding system, the "current block" specifically refers to a current coding block in the inter prediction. When the encoding and decoding method is applied to a video decoding system, the "current block" specifically refers to a current decoding block in the inter prediction.

Hereinafter, the technical solutions in the embodiments of the present disclosure will be clearly and completely described with reference to the accompanying drawings in the embodiments of the present disclosure.

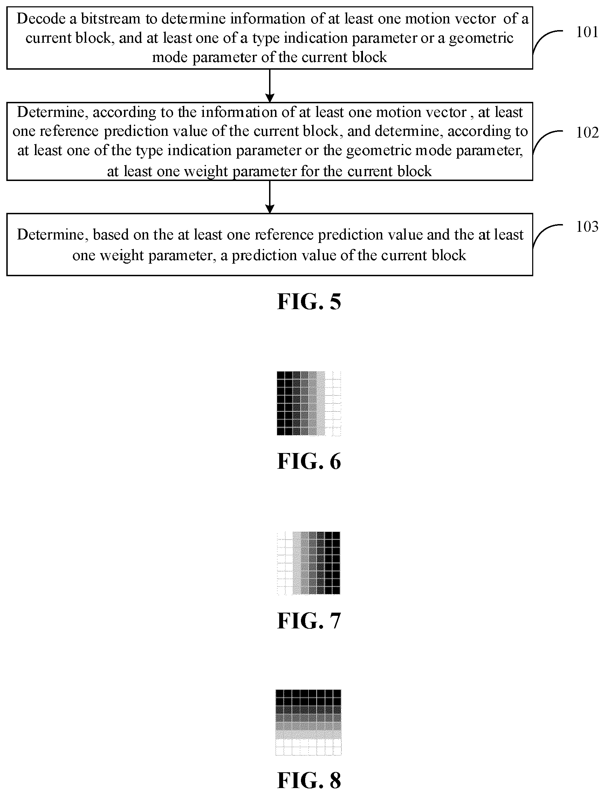

Embodiments of the present disclosure propose a decoding method. The method is applied to a decoder. FIG. 5 is a schematic flowchart of implementing the decoding method. As illustrated in FIG. 5, the decoding method performed by the decoder may include the following operations.

In operation 101, a bitstream is decoded to determine information of at least one motion vector of a current block, and at least one of a type indication parameter or a geometrical mode parameter of the current block.

In the embodiments of the present disclosure, when decoding the bitstream, the decoder may firstly determine information of at least one motion vector of the current block, and may also determine the type indication parameter and/or the geometrical mode parameter of the current block.

It should be noted that, in the embodiments of the present disclosure, since the codec scheme of the present disclosure may be applied to unidirectional prediction or bidirectional prediction, information of at least one motion vector of the current block may include a forward motion vector and/or a backward motion vector. The forward motion vector of the current block may be used to perform forward prediction to obtain a prediction value of the current block. The backward motion vector of the current block may be used to perform backward prediction to obtain a prediction value of the current block.

Exemplarily, in the embodiments of the present disclosure, the forward motion vector may be represented as MVL0, and the backward motion vector may be represented as MVL1.

It should be noted that, in the embodiments of the present disclosure, the type indication parameter is a type index parameter. The type indication parameter may be used to select a type of a pixel-level weighting parameter. That is, the type indication parameter may be used to select a manner of determining the pixel-level weighting parameter.

It may be understood that, in the embodiments of the present disclosure, the type of pixel-level weighting parameter, i.e., the manner of determining the pixel-level weighting parameter may include, but is not limited to, the following types (manners): weighting parameters defined by a pre-stored matric, and weighting parameters defined by a geometrical mode parameter.

That is, in the embodiments of the present disclosure, the type indication parameter may be used to determine whether the pre-stored matrix or the geometrical mode parameter is used to derive the pixel-level weighting parameter. It may also be understood that whether the pre-stored matrix is used to derive the pixel-level weighting parameter is determined according to the type indication parameter, or whether the geometrical mode parameter is used to derive the pixel-level weighting parameter is determined according to the type indication parameter.

It should be noted that in the embodiments of the present disclosure, the geometrical mode parameter may include one or more of: gradient mode information, gradient slope information, change direction information, change start position information, change center position information, change end position information, gradient upper/lower limit information (i.e., a lower limit weight and a upper limit weight, which may be derived from other geometrical mode parameters or may be preset), change range width information, and change segment information. Here, in some embodiments, the gradient slope information may also be represented as change range width information.

It should be noted that, in the embodiments of the present disclosure, the gradient mode information may be determined by using *modeParm.* The gradient mode formation *modeParm* may indicate a gradient mode. That is, the gradient mode formation *modeParm* may indicate a type of the gradient mode.

Exemplarily, in the embodiments of the present disclosure, the type of the gradient mode may include, but are not limited to, a horizontal gradient weighting, a vertical gradient weighting, an oblique gradient weighting, a radiation gradient weighting, an affine gradient weighting, and the like.

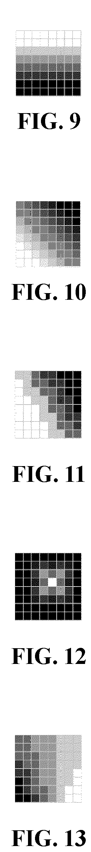

For example, FIG. 6 is a first schematic diagram of the gradient mode, and FIG. 7 is a second schematic diagram of the gradient mode. As illustrated in the figures, the horizontal gradient mode may include two different change directions. FIG. 8 is a third schematic diagram of the gradient mode, and FIG. 9 is a fourth schematic diagram of the gradient mode. As illustrated in FIG. 8 and FIG. 9, the vertical gradient mode may include two different change directions. FIG. 10 is a fifth schematic diagram of the gradient mode, and FIG. 11 is a sixth schematic diagram of the gradient mode. As illustrated in FIG. 10 and FIG. 11, the oblique gradient mode not only includes multiple different change directions, but also may include multiple different gradient slope information. FIG. 12 is a seventh schematic diagram of the gradient mode. As illustrated in FIG. 12, the radiation gradient mode involves a change center position. FIG. 13 is an eighth schematic diagram of the gradient mode. Two affine gradient modes are illustrated in FIG. 13.

Further, in the embodiments of the present disclosure, an optimal gradient mode of the current CU/coding block may be determined through template matching. Specifically, pixels at the upper row and/or left column of the current CU/coding block are used as templates. In the process of constructing pixel values predicted from the templates, gradient weighting process is performed on prediction values from different sources, and geometrical parameters of an optimal gradient weighting scheme are selected as parameters of the gradient weighting scheme for the current CU/coding block.

Further, in the embodiments of the present disclosure, for a CU/coding block with small size, some gradient modes having a greater gradient width range may be skipped. For a CU/coding block with large size, some gradient modes having a small gradient width range may be skipped.

Further, in the embodiments of the present disclosure, for a sequence with a higher resolution or a block with a larger size, the number of segments for the gradient mode may be adaptively increased, thereby improving the prediction accuracy.

It should be noted that, in the embodiments of the present disclosure, the gradient slope information may be determine by using *slopeParm.* The gradient slope information *slopeParm* may indicate the speed of change, that is, it may indicate the speed of change of gradient weight parameters with the distances between pixels and a specified position (a position of a point or line).

It should be noted that in the embodiments of the present disclosure, linear gradient slope information may be indicated by an index. For example, 0 represents no gradient and direct jump, m indicates that the gradient weight parameters reach the maximum or minimum when the distance from the specified position reaches $(2m - 1)/M$ pixel, the gradient weight parameters are linearly gradient when closer to the specified position, and remain the maximum or minimum when farther away from the specified position. Here, the value of M may be 2, 1, 1/2, etc.

Exemplarily, in the embodiments of the present disclosure, it is assumed that the linear gradient slope information is indicated by an index. Specifically, 0 represents that w is a constant, with no gradient or jump, m indicates that the gradient weight parameters reach the maximum or minimum when the distance reaches $t \times width/(2m-1)$. Here, width is a width (slice width or coding block width) corresponding to a unit for which the gradient weight parameters are calculated, and t is a constant.

It should be noted that, in the embodiments of the present disclosure, the change direction information may be determined by *dirParm.* The change direction information *dirParm* may indicate a direction in which the change slope changes. That is, it may indicate a direction in which gradient slope of weight parameters for a first prediction pixel changes.

Exemplarily, in the embodiments of the present disclosure, it is assumed that the change direction information is indicated by an index, for example, 0 represents from the smallest to the largest, and 1 represents from the largest to the smallest.

It should be noted that, in the embodiments of the present disclosure, the change start position information may be determined by *startPosParm* . The change start position information *startPosParm* may include different numbers of parameters according to different gradient types. That is, the number of parameters included in the change start position information corresponds to the gradient type (gradient mode information).

Exemplarily, in the embodiments of the present disclosure, when the gradient mode information indicates that the gradient mode is a horizontal gradient mode, the change start position information may include a coordinate position at the horizontal axis. When the gradient mode information indicates that the gradient mode is an oblique gradient mode, the change start position information may include a set of parameters representing a straight line in a Cartesian coordinate system, one of which represents a slope and the other represents an intercept. For example, in the oblique gradient mode, the change start position information may include a set of parameters representing a straight line in a polar coordinate system, one of which represents an angle and the other represents a distance. When the gradient mode information indicates that the gradient mode is a radiation gradient mode, the change start position information may include a set of parameters representing a radiation shape and its corresponding position. For example, in the case that the radiation shape is a circle, when the start position is a point, the set of parameters include a horizontal and a vertical coordinate in the Cartesian coordinate system, or include an angle and a distance in the polar coordinate system. When the gradient mode information indicates that the gradient mode is an affine gradient mode, the change start position information may include a set of parameters representing positions of multiple control points or positions of multiple control lines. It should be noted that the oblique gradient may include horizontal and vertical gradient modes.

It should be noted that, in the embodiments of the present disclosure, the change center position information may be determined by *centerPosParm.* The change center position information *centerPosParm* represents a position where a median value of weight parameters for a gradient region is located. For example, when a gradient interval of the weight parameters is from 0 to 1, the median value is 0.5, and the weight parameter gradually increases or decreases to both sides based on this position.

It may be understood that in the embodiments of the present disclosure, the change center position information *centerPosParm* may include different numbers of parameters according to different gradient types. That is, the number of parameters included in the change center position information corresponds to the gradient type (gradient mode information).

Exemplarily, in the embodiments of the present disclosure, when the gradient mode information indicates that the gradient mode is a horizontal gradient mode, the change center position information may include a coordinate position at a horizontal axis. When the gradient mode information indicates that the gradient mode is an oblique gradient mode, the change center position information may include a set of parameters representing a straight line in a Cartesian coordinate system, one of which represents a slope and the other represents an intercept. When the gradient mode information indicates that the gradient mode is oblique gradient mode, the change center position information may include a set of parameters representing a straight line in a polar coordinate system, one of which represents an angle and the other represents a distance. When the gradient mode information indicates that the gradient mode is the radiation gradient mode, the change center position information may include a set of parameters representing a radiation shape and its corresponding position. For example, in the case that the radiation shape is a circle, the center positions form a circle, the set of parameters includes a horizontal and a vertical coordinate and a radius in the Cartesian coordinate system, or include position information of a center point and a radius in the polar coordinate system. When the center point is aligned with the original point, the set of parameters includes only the radius information. When the gradient mode information indicates that the gradient mode is an affine gradient mode, the change center position information may include a set of parameters representing positions of multiple control points or positions of multiple control line positions.

It should be noted that, in the embodiments of the present disclosure, the change end position information may be determined by *endPosParm.* The change end position *ndPosParm* may include different numbers of parameters according to different gradient types. That is, the number of parameters included in the change end position information corresponds to the gradient type (gradient mode information).

Exemplarily, in the embodiments of the present disclosure, when the gradient mode information indicates that the gradient mode is a horizontal gradient mode, the change end position information may include a coordinate position at a horizontal axis. When the gradient mode information indicates that the gradient mode is an oblique gradient mode, the change end position information may include a set of parameters representing a straight line in a Cartesian coordinate system, one of which represents a slope and the other represents an intercept. When the gradient mode information indicates that the gradient mode is the oblique gradient mode, the change end position information may include a set of parameters representing a straight line in a polar coordinate system, one of which represents an angle and the other represents a distance. When the gradient mode information indicates that the gradient mode is the radiation gradient mode, the change end position information may include a set of parameters representing a radiation shape and its corresponding position. For example, in the case that the radiation shape is a circle, the end positions form a circle, the end position information includes a horizontal and a vertical coordinate and a radius in the Cartesian coordinate system or the end position information includes position information of a center point and a radius in the polar coordinate system. When the center point is aligned with the original point, the end position information includes only the radius information. When the gradient mode information indicates that the gradient mode is an affine gradient mode, the change end position information may include a set of parameters representing positions of multiple control points or positions of multiple control lines.

It should be noted that, in the embodiments of the present disclosure, the gradient upper/lower limit information (a minimum weight and a maximum weight) may be determined by *max Wvalue* / *min Wvalue* . The gradient upper/lower limit information max *Wvalue* / min *Wvalue* may be used to indicate upper/lower limit information of the weight parameter, and may be derived from other geometrical mode parameters, or may be preset.

Exemplarily, in the embodiments of the present disclosure, the gradient upper/lower limit information max*Wvalue*/min*Wvalue* may be values corresponding to the weights 0 and 1 under a corresponding accuracy requirement. For example, it is assumed that the accuracy reaches the third place after the decimal point in binary representation, then after fixed-point quantization, the lower limit 0 corresponds to 0, and the upper limit 1 corresponds to 8. It is assumed that the accuracy reaches the fifth place after the decimal point in binary representation, then after fixed-point quantization, the lower limit 0 corresponds to 0 and the upper limit 1 corresponds to 32.

It may be understood that in the embodiments of the present disclosure, the lower limit of the weighting parameter generally corresponds to 0. That is, the reference pixel at the corresponding position is not used to perform the weighting. The upper limit of the weighting parameter generally corresponds to 1. That is, only the reference pixel at corresponding position is used to perform weighting.

It should be noted that, in the embodiments of the present disclosure, the gradient upper/lower limit information max*Wvalue*/min*Wvalue* may not be a weight value corresponding to 0 or 1. For example, it may be a value corresponding to 0.2 or 0.4 under a corresponding accuracy requirement.

Further, in the embodiments of the present disclosure, the change segment information may be determined by *segParm.* The change segment information *segParm* may indicate information related to a continuous gradient composed of multiple segments, and may include information whose meaning covers the above-described multiple parameters.

Exemplarily, in the embodiments of the present disclosure, the change segment information *segParm* may include information of multiple segments, such as gradient slope information (change range width information), change direction information, change start position information, and change end position information for each segment. Alternatively, the change segment information *segParm* may include information of multiple segments, such as change direction information, change start position information, change end position information, gradient upper limit and gradient lower limit information for each segment.

Further, in the embodiments of the present disclosure, any one of the geometrical mode parameters, that is, any one of the gradient mode information, the gradient slope information, the change direction information, the change start position information, the change center position information, the change end position information, the gradient upper/-lower limit information, the change range width information, and the change segment information, may be represented in an index form through quantization.

It should be understood that in the embodiments of the present disclosure, the geometrical mode parameter may be used to indicate a geometrical change set. The geometrical change set includes change start position information, change center position information, and change end position information.

Exemplarily, in the embodiments of the present disclosure, different possibilities may be specified for the change start position information, the change center position information, and the change end position information, and all possible lines are predefined as an ordered set, so these positions may be specified by only one index. One index may correspond to one ordered set, so that the corresponding position information may be specified.

Further, in the embodiments of the present disclosure, the type indication parameter may be used to determine whether a pre-stored matrix or a geometrical mode parameter is used to derive a pixel-level weighting parameter.

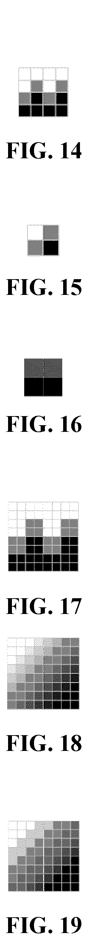

It may be understood that in the embodiments of the present disclosure, in the weighting mode defined by a pre-stored matrix, the number and dimensions of pre-defined matrixes are limited. FIG. 14 is a schematic diagram of a first pre-stored matrix, and FIG. 15 is a schematic diagram of a second pre-stored matrix. As illustrated in the figures, the pre-stored matrixes are two predefined weighting matrixes of different dimensions. For a weighting matrix with predefined dimensions, it may be applied to multiple areas with different dimensions and different accuracy requirements through interpolation and other manners.

Exemplarily, in the embodiments of the present disclosure, FIG. 16 is a first schematic diagram of a interpolation process, FIG. 17 is a second schematic diagram of a interpolation process, FIG. 18 is a third schematic diagram of a interpolation process, and FIG. 19 is a fourth schematic diagram of a interpolation process. FIG. 16 illustrates a weighting matrix obtained by performing interpolation on the first pre-stored matrix under a requirement of a smaller dimension. FIG. 17 illustrates a weighting matrix obtained by performing interpolation on the first pre-stored matrix under a requirement of a larger dimension. FIG. 18 illustrates, a weighting matrix obtained by performing interpolation on the second pre-stored matrix under a higher precision requirement. FIG. 19 illustrates a weighting matrix obtained by performing interpolation on the second pre-stored matrix under a lower precision requirement.

Further, in the embodiments of the present disclosure, a weighting parameter defined by the geometrical parameter (geometrical mode parameter) refers to a weighting parameter calculated from the geometrical parameter. The weighting parameter on a plane changes according to a certain geometrical rule with the position of the pixels. Such a weighting parameter *wtParm* changing according to the certain geometrical rule may be expressed by at least one of several parameters including gradient mode information *modeParm,* gradient slope information *slopeParm,* change direction information *dirParm ,* change start position information *startPosParm ,* change center position information *centerPosParm ,* change end position information *endPosParm,* gradient upper/lower limit information *minParm*/*maxParm,* and change segment information *segParm .*

Further, in the embodiments of the present disclosure, if the geometrical mode parameters of different picture blocks are the same, for example, when the geometrical mode parameters such as gradient slope information and change direction information of respective CUs are basically consistent, one or more weight matrices may be predefined firstly, and pixel-level weights for a coding unit block may be obtained by performing up-sampling, down-sampling, or intercepting on a predefined weight matrix.

It should be noted that, in the embodiments of the present disclosure, the mode type for deriving the pixel-level weighting parameter may be selected by an index based on the type indication parameter. For example, an index number of a mode is determined based on the type indication parameter, and then a mode type for deriving the pixel-level weighting parameter is determined according to the index number of the mode. That is, whether the pixel-level weighting parameter is derived from the weighting parameter defined by the pre-stored matrix or the weighting parameter defined by the geometrical parameter is determined.

Exemplarily, in the embodiments of the present disclosure, when the weighting parameter is obtained from the pre-stored matrix or is calculated from a gradient weighting mode defined by a geometrical parameter, the weighting mode indicated by an index is as shown in the table 1.

Table 1

| index number of mode | Mode type |
| --- | --- |
| 0 | Weighting parameters defined by the pre-stored matric |
| 1 | Linear gradient weighting mode 1 defined by the geometrical parameter |
| ... | ... |
| N | Linear gradient weighting mode N defined by the geometrical parameter |

**EP 4 629 614 A1**

Exemplarily, in the embodiments of the present disclosure, when the weighting parameter is calculated only based on a certain gradient weighting mode defined by the geometrical parameter, the weighting mode indicated by the index is as shown in the table 2.

Table 2

| index number of mode | Mode type |
|---|---|
| 0 | Linear gradient weighting mode 1 defined by the geometrical parameter |
| 1 | Linear gradient weighting mode 2 defined by the geometrical parameter |
| ... | ... |
| N-1 | Linear gradient weighting mode N defined by the geometrical parameter |

Exemplarily, in the embodiments of the present disclosure, when the weighting parameter is calculated based on a certain nonlinear weighting mode defined by the geometrical parameter, the weighting mode indicated by an index is as shown in the table 3.

Table 3

| index number of mode | Mode type |
|---|---|
| 0 | Nonlinear gradient weighting mode 1 defined |
| | by the geometrical parameter |
| 2 | Nonlinear gradient weighting mode 2 defined by the geometrical parameter |
| ... | ... |
| N-1 | Nonlinear gradient weighting mode N defined by the geometrical parameter |

Exemplarily, in the embodiments of the present disclosure, when the weighting parameter is calculated from a certain nonlinear weighting mode defined by the geometrical parameter, the weighting mode indicated by an index is as shown in the table 4.

Table 4

| index number of mode | Mode type |
|---|---|
| 0 | Multi-segment gradient weighting mode 1 defined by the geometrical parameter |
| 2 | Multi-segment gradient weighting mode 2 defined by the geometrical parameter |
| ... | ... |
| N-1 | Multi-segment gradient weighting mode N defined by the geometrical parameter |

Further, in the embodiments of the present disclosure, after the bitstream is decoded, the inter prediction mode parameter of the current block may be determined firstly. If the inter prediction mode parameter indicates that a pixel-level weight value is used to determine the inter prediction value of the current block, the process for determining the type indication parameter and/or the geometrical mode parameter may be determined to be performed.

That is, in the embodiments of the present disclosure, an identifier information (such as an inter prediction mode parameter) may be used to indicate whether to use the encoding and decoding method for performing prediction using the pixel-level weight value proposed in the embodiments of the present disclosure. If it is determined based on the inter prediction mode parameter that the pixel-level weight value is used to determine the inter prediction value of the current block, the process of determining the type indication parameter and/or the geometrical mode parameter may be performed, thereby further completing the determination of at least one weight parameter for the current block according to the type indication parameter and/or the geometrical mode parameter.

In operation 102, at least one reference prediction value of the current block is determined according to the information of at least one motion vector, and at least one weight parameter for the current block is determined according to the at least one of the type indication parameter or the geometrical mode parameter.

In the embodiments of the present disclosure, after determining the information of the at least one motion vector of the current block and the type indication parameter and/or the geometrical mode parameter of the current block, at least one reference prediction value of the current block may be determined according to the information of at least one motion vector. Also at least one weight parameter for the current block may be determined according to the type indication parameter and/or the geometrical mode parameter.

It may be understood that in the embodiments of the present disclosure, at least one weight parameter for the current block may be at least one pixel-level weight parameter. The at least one weight parameter may include at least one pixel weight value and may include at least one pixel offset value. That is, the at least one weight parameter may include at least one pixel-level weight coefficient, or may include at least one pixel-level weight coefficient and at least one pixel-level offset value.

It should be noted that, in the embodiments of the present disclosure, since the encoding and decoding solution of the present disclosure may be applied to unidirectional prediction or bidirectional prediction, at least one reference prediction value for the current block may include a forward reference value and/or a backward reference value. The forward reference value for the current block may be a prediction result obtained by performing forward prediction on the current block, and the backward reference value for the current block may be a prediction result obtained by performing backward prediction on the current block.

Exemplarily, in the embodiments of the present disclosure, the forward reference value may be represented as *PredSamplesL0,* and the backward reference value may be represented as *PredSamplesL1.*

Further, in the embodiments of the present disclosure, since the type indication parameter (type index parameter) may be used to select the type of the pixel-level weighting parameter, that is, a weighting parameter defined by a pre-stored matrix or a weighting parameter defined by a geometrical mode parameter may be selected to use. Therefore, whether to use the geometrical mode parameter is determined according to the type indication parameter, that is, whether to select to use the geometrical mode parameter to determine the weighting parameter is determined based on the type indication parameter.

It may be understood that, in the embodiments of the present disclosure, if the type indication parameter indicates that the geometrical mode parameter is not used, then a pre-stored matrix may be further determined, and at least one weight parameter may be determined according to the pre-stored matrix. Accordingly, if the type indication parameter indicates that the geometrical mode parameter is used, the at least one weight parameter may be determined directly according to the geometrical mode parameter.

Further, in the embodiments of the present disclosure, when at least one weight parameter for the current sample is at least one pixel weight value (at least one pixel weight coefficient), position information of the sample in the current block in combination with the geometrical mode parameter may be used to further determine the at least one weight parameter.

It should be noted that, in the embodiments of the present disclosure, the at least one pixel weight value may be determined according to the position information of the sample in the current block and the geometrical mode parameter.

Further, in the embodiments of the present disclosure, the derivation of the weighting parameter (at least one weighting parameter) may be performed at different levels. For example, the pixel-level weight may be derived at the slice level, or may be derived at the CU/coding block level. The weighting parameter has certain accuracy and upper and lower limits. Weighting parameters with sub-pixel accuracy may be obtained by interpolation filtering for an already derived whole pixel weighting parameter.

It should be noted that, in the embodiments of the present disclosure, at least one weight parameter may be determined using different manners for different levels.

Further, in the embodiments of the present disclosure, when at least one weight parameter for the current block is derived at the slice level, the lower limit weight and the upper limit weight may be determined firstly according to the gradient mode information, the change start position information, the change end position information, and the change direction information under a requirement of a predefined calculation accuracy. Then, a first distance may be determined according to position information of a sample in the current block and the change start position information, and a second distance may be determined according to the position information of the sample in the current block and the change end position information. Finally, at least one pixel weight value may be further determined according to the first distance, the second distance, the lower limit weight, and the upper limit weight.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameter.

Exemplarily, in the embodiments of the present disclosure, it may be predefined that the lower limit weight is 0 and the upper limit weight is 8. Alternatively, the upper limit weight may be determined to be 16 based on the predefined calculation accuracy. Alternatively, the upper limit weight may be determined to be 32 based on the geometrical mode parameter.

It should be noted that, in the embodiments of the present disclosure, when slice-level weighting based on the pixel-level weight is performed, several geometrical mode parameters related to the weight, including gradient mode information *modeParm,* Slice-level change direction information *sliceDirParm ,* Slice-level change start position information *sliceStartPosParm,* Slice-level change end position information *sliceEndPosParm,* Slice-level gradient lower limit information *minWvalue,* and Slice-level gradient upper limit information *maxWvalue,* are determined based on the current Slice, and these geometric mode parameters may be used to determine a comprehensive weight parameter *slicewtParm* for the current Slice, which is used to derive a weight $wLX_{ij}$ and offset $o\_LX_{ij}$ used in Slice-level weighted prediction. X is an index of a reference list, when X is 0, it represents the forward reference list List0, otherwise it represents a backward reference list List1.

Exemplarily, in the embodiments of the present disclosure, the gradient mode information *modeParm* may be used to indicate that the gradient mode is a single-segment linear oblique gradient mode defined by a geometrical parameter.

Exemplarily, in the embodiments of the present disclosure, the slice-level change direction information *sliceDirParm* may be used to indicate that the change direction of the weighting value for the first prediction pixel has different possibilities: from left to right, from right to left, from upper to lower, from lower to upper, etc., for example, the weighting value for the first prediction pixel gradually increases from upper left (the calculated distance is negative) to lower right (the calculated distance is positive).

Exemplarily, in the embodiments of the present disclosure, the slice-level change start position information *sliceStartPosParm* may be used to indicate that the gradient start position is a straight line with a slope of $\alpha_1$ and an intercept of $\beta_1$ (or an angle of $\theta_1$ and a distance of $d_1$ represented in a polar coordinate). That is, the straight line is the gradient start position. The upper/lower limit weight value is for the upper left of this position. The weight value for the position specified by the parameter may be determined as the lower limit weight value *minWvalue* in combination with the direction specified by *sliceDirParm.* That is, the gradient lower limit information is determined.

Exemplarily, in the embodiments of the present disclosure, the slice-level change end information *sliceEndPosParm* may be used to indicate that the gradient end position is a straight line with a slope of $\alpha_2$ and an intercept of $\beta_2$ (or an angle of $\theta_2$ and a distance of $d_2$ represented in a polar coordinate). That is, the gradient ends at the straight line. The lower/upper limit weight value is for the lower right of this position. The weight value for the position specified by the parameter may be determined as the upper limit weight value *maxWvalue* in combination with the direction specified by *sliceDirParm .* That is, the gradient upper limit information is determined.

That is, in the embodiments of the present disclosure, the lower limit weight and the upper limit weight may be determined according to the gradient mode information, the change start position information, the change end position information, and the change direction information under a requirement of a predefined calculation accuracy. Also, a distance between a pixel and the gradient start position and a distance between the pixel and the gradient end position may be further determined with reference to position information of a sample in the current block. The first distance may be determined according to the position information of the sample in the current block and the change start position information, and the second distance may be determined according to the position information of the sample in the current block and the change end position information.

Exemplarily, in the embodiments of the present disclosure, if the gradient mode information indicates that the gradient mode is a linear oblique gradient mode, for each CU in the slice, the first distance $d_{L0s}[x0][y0]$ between the position of the sample in the current block and the gradient start position *sliceStartPosParm,* and the second distance $d_{L0e}[x0][y0]$ between the position of the sample in the current block and the gradient end position *sliceEndPosParm* may be calculated, respectively, so that the weight parameter $w_{L0}[x0][y0]$ for the pixel may be further determined according to the first distance and the second distance. The at least one pixel weight value may be determined according to the first distance, the second distance, the lower limit weight, and the upper limit weight.

Further, in the embodiments of the present disclosure, the weight parameter $w_{L0}[x0][y0]$ for the pixel may be determined from the first distance $d_{L0s}[x0][y0]$ and the second distance $d_{L0e}[x0][y0]$ according to the following formula:

$$w_{L0}\big[x0\big]\big[y0\big] = \begin{cases} \min Wvalue, d_{L0s}\big[x0\big]\big[y0\big] < 0 \\ \min Wvalue + \dfrac{d_{L0s}\big[x0\big]\big[y0\big]\big(\max Wvalue - \min Wvalue\big)}{d_{L0s}\big[x0\big]\big[y0\big] - d_{L0e}\big[x0\big]\big[y0\big]}, d_{L0s}\big[x0\big]\big[y0\big] \geq 0 \text{ and } d_{L0e}\big[x0\big]\big[y0\big] \leq 0 \\ \max Wvalue, d_{L0e}\big[x0\big]\big[y0\big] > 0 \end{cases}$$

$$(12)$$

Here, *maxWvalue* is the upper limit weight, i.e., the gradient upper limit information, and *minWvalue* is the lower limit weight, i.e., the gradient lower limit information.

Further, in the embodiments of the present disclosure, for bidirectional prediction, a first prediction weight may be determined firstly according to the first distance, the second distance, the lower limit weight, and the upper limit weight. Then the value of the sum of weights is determined according to the lower limit weight and upper limit weight. Finally, a second prediction weight may be determined based on the first prediction weight and the value of the sum of weights.

It should be noted that, in the embodiments of the present disclosure, if the slice-level weighted prediction is bidirectional weighted prediction, then a value of the sum of the forward weight value and the backward weight value for the pixel is the same as a value of the sum of the upper limit weight value and the lower limit weight value. That is, according to the following formulas, after the value of the sum of the weights *sumvalue* is determined, one already determined weight value (such as the forward weight value $w_{L0}[x0][y0]$ ) for a pixel may be used to determine the other weight value (such as the backward weight value $w_{L1}[x0][y0]$) for the pixel.

$$sumValue = minWvalue + maxWvalue \qquad (13)$$

$$w_{L1}[x0][y0] = sumValue - w_{L0}[x0][y0] \qquad (14)$$

Further, in the embodiments of the present disclosure, the at least one weight parameter for the current block may include at least one pixel weight value, or may include at least one pixel offset value. Here, for the pixel offset value, the pixel offset value may be set to a constant for transmission, or the pixel offset value may be acquired by using a determined pixel weight value.

It may be understood that in the embodiments of the present disclosure, at least one pixel offset value of the current block may be determined by decoding a bitstream. Taking bidirectional prediction as an example, the offset parameters (offset values) o_L0[x0][y0] and o_L1[x0][y0] may be transmitted separately as constants.

It may be understood that in the embodiments of the present disclosure, at least one pixel offset value may be determined according to at least one pixel weight value. Taking bidirectional prediction as an example, the offset parameters (offset values) o_L0[x0][y0] and o_L1[x0][y0] may be linearly related to $w_{L0}[x0][y0]$ and $w_{L1}[x0][y0]$, respectively.

Further, in the embodiments of the present disclosure, when at least one weight parameter for the current block is derived at the CU level, such as BCW weighting based on the pixel level weight, the lower limit weight and the upper limit weight may be determined according to the gradient mode information, gradient slope information, change direction information, and change center position information, under a requirement of a predefined calculation accuracy, and a weight for a change center position may be determined according to the upper limit weight and the lower limit weight. Next, a third distance may be determined according to the position information of the sample in the current block and the weight for the change center position. Finally, at least one pixel weight value may be determined according to the third distance and the weight for the change center position.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameter.

Exemplarily, in the embodiments of the present disclosure, it may be predefined that the lower limit weight is 0 and the upper limit weight is 8. Alternatively, the upper limit weight may be determined to be 16 based on a predefined calculation accuracy. Alternatively, the upper limit weight may be determined to be 32 based on the geometrical mode parameter.

It should be noted that, in the embodiments of the present disclosure, when the CU-level weighting based on the pixel-level weight is performed, several geometrical mode parameters related to the weight, including gradient mode information *modeParm,* CU-level gradient slope information *cbSlopeParm,* CU-level change direction information *cbDirParm,* and CU-level change center position information *cbCenterPosParm,* are determined based on the forward reference block of the current CU, and these geometrical mode parameters are used to determine a comprehensive weight parameter *cbwtParm* for the current CU, which is used to derive the weights $wL0_{ij}$, $wL1_{ij}$ and the offsets $o\_L0_{ij}$, $o\_L1_{ij}$ used in the CU-level bidirectional weighted prediction.

Exemplarily, in the embodiments of the present disclosure, the gradient mode information *modeParm* may be used to indicate that the gradient mode is a single-segment linear oblique gradient mode defined by a geometrical parameter.

Exemplarily, in the embodiments of the present disclosure, the CU-level gradient slope information *cbSlopeParm* may be used to indicate the gradient slope for the gradient mode. For example, *cbSlopeParm* may indicate that the gradient weight value reaches to maximum or minimum when a distance from a specified position is n pixels.

Exemplarily, in the embodiments of the present disclosure, the CU-level change direction information *cbDirParm* may be used to indicate that a change direction of weighting values for the first prediction pixel has different possibilities: from left to right, from right to left, from upper to lower, from lower to upper, etc. For example, the weighting values for the first prediction pixel gradually increase from upper left (the calculated distance is negative) to lower right (the calculated distance is positive).

Exemplarily, when *cbDirParm* is 1, it is indicated that the weighting values for the first prediction pixel gradually decrease as the distance values change from negative to positive, and when *cbDirParm* is 0, it is indicated that the weighting values for the first prediction pixel gradually increase as the distance values change from negative to positive, and here the value of *cbDirParm* is taken to be 0.

Exemplarily, in the embodiments of the present disclosure, the CU-level change center position information *cbCenterPosParm* may be determined according to the slope and intercept of the center position in the oblique gradient mode. For example, it is determined to be a straight line with a slope α and an intercept β (or an angle θ and a distance d represented in a polar coordinate).

Exemplarily, in the embodiments of the present disclosure, based on the change center position information *cbCenterPosParm*, combined with the information given by *cbDirParm* and *cbSlopeParm*, a position that is -n pixels away from the straight line is a gradient start position, and the lower limit weight min *Wvalue* is for the left or the lower of the start position, that is, the gradient lower limit information is determined. A position that is n pixels away from the straight line is a gradient end position, and the upper limit weight max *Wvalue* is for the right or upper of the end position, that is, the gradient lower limit information is determined. The weights change gradually in the range from the start position to end position.

That is, in the embodiments of the present disclosure, a gradient range [-n, n] and a gradient direction may be determined based on *modeParm, cbSlopeParm,* and *cbDirParm.* Further, the lower limit weight min*Wvalue* and the upper limit weight max*Wvalue* may be determined by using the gradient range [-n, n] and the gradient direction. Then, in the case of linear gradient, a weight for the change center position may be determined based on the upper limit weight max*Wvalue* and the lower limit weight min *Wvalue* and the change center position information *cbCenterPosParm .* The weight *wCenterPos* for the change center position information *cbCenterPosParm* should be an average value of the upper limit weight max*Wvalue* and the lower limit weight min *Wvalue,* as shown in the following formula.

$$wCenterPos = \left(maxWvalue + minWvalue + 1\right) ?\quad 1 \tag{15}$$

It is assumed that *minWvalue* is 0, and *maxWvalue* is 1.

Further, in the embodiments of the present disclosure, if the gradient mode information indicates that the gradient mode is a linear oblique gradient mode, a third distance firstly needs to be determined when calculating at least one pixel weight value $w[x0][y0]$ which linearly changes according to the distance. The third distance may be determined according to the position information of the sample in the current block and the change center position information.

Exemplarily, in the embodiments of the present disclosure, for each pixel in forward reference blocks of the current CU, a distance parameter L1, that is, the third distance, between a sample in the current block and a pixel determined from the gradient center position *cbCenterPosParm* of the forward reference block is calculated according to the position information of the sample in the current block, as shown in the following formula.

$$L1 = x0 * \cos\partial - y0 * \sin\partial + \rho \tag{16}$$

Here, $\rho$ represents a distance between the gradient center position and an original point. It is assumed that the original point is at the center point of the entire block area, and then, for a block with width cbWidth and height cbHeight, distances dx and dy of the upper left pixel relative to the original point may be shown as follows:

$$dx = cbWidth/2 - 0.5 \text{ pixels} \tag{17}$$

$$dy = cbHeight/2 - 0.5 \text{ pixels} \tag{18}$$

Then further, it is determined that the third distance L1 may be calculated according to the following formula:

$$L1 = \left(x0 + offsetX + 0.5\right) * \cos\partial - (y0 + offsetY + 0.5) * \sin\partial \tag{19}$$

Here, offset values *offsetX* and *offsetY* describe horizontal and vertical components of a distance between the gradient center position line and the original point, respectively.

Further, in the embodiments of the present disclosure, after the third distance is determined, the third distance and the weight for the change center position may be used to determine at least one pixel weight value, which includes a first prediction weight value $w_{L0}[x0][y0]$ (for example, a weight for a pixel of a forward reference block or a pixel weight for a reference block in intra prediction, etc.) and a second prediction weight value $w_{L1}[x0][y0]$ (for example, a weight for a pixel of a backward reference block or a weight for a pixel of a reference block in intra prediction, etc.).

Exemplarily, in the embodiments of the present disclosure, the first prediction weight value $w_{L0}[x0][y0]$ may be calculated by using the third distance L1 according to the following formulas:

$$wl = cbDirParm ? (n + L1) : (n - L1) \quad\quad (20)$$

$$w_{L0}[x0][y0] = Clip3(0,1, \quad wl * wCenterPos / n) \quad\quad (21)$$

It may be understood that in the embodiments of the present disclosure, in order to ensure the operation accuracy, the intermediate operation result of the above calculation process may be appropriately amplified and restored to an appropriate size before the clip operation, that is, fixed-point qualification may be used in the intermediate operation process, and the amplifying operation may be performed according to the accuracy requirement. For example:

$$L1 = ((x0 + offsetX) << 1 + 1) * (\cos\partial * 2^{shift0}) - ((y0 + offsetY) << 1 + 1) * (\sin\partial * 2^{shift0}) \quad (22)$$

$$wl = cbDirParm ? (n << (shift0 + 1) + L1) : (n << (shift0 + 1) - L1) \quad\quad (23)$$

$$w_{L0}[x0][y0] = Clip3(0, 1 << shift1, ((wl * wCenterPos) >> (shift0 + 1)) / n) \quad\quad (24)$$

Here, shift0 is a factor related to data amplification for intermediate operations in order to retain sufficient accuracy.

When the values of n, shift0, and shift1 are fixed, most of the data in the above formulas except x0, *offsetX*, y0 and *offsetY* are constants, and the calculation may be combined and simplified. For example, when *maxWvalue* and n are both powers of 2, the calculation process may become:

$$L1 = ((x0 + offsetX) << 1 + 1) * (\cos\partial * 2^{shift0}) - ((y0 + offsetY) << 1 + 1) * (\sin\partial * 2^{shift0}) \quad (25)$$

$$wl = cbDirParm ? (n << (shift0 + 1) + L1) : (n << (shift0 + 1) - L1) \quad\quad (26)$$

$$w_{L0}[x0][y0] = Clip3(0, 1 << shift1, \quad wl >> (shift0 + 1 + \log_2 n - \log_2 wCenterPos)) \quad\quad (27)$$

It may be understood that, in the embodiments of the present disclosure, the operation of amplifying the intermediate operation result to ensure accuracy includes the appropriately amplifying of weight itself. The shift1 corresponds to this amplifying operation, and then the weight is restored to an appropriate pixel value range when the weighted prediction value is calculated below.

Further, in the embodiments of the present disclosure, after the first prediction weight value $w_{L0}[x0][y0]$ (for example, a weight for a pixel in a forward reference block or a weight for a pixel in a reference block for intra prediction, etc.,) is determined, a second prediction weight value $w_{L1}[x0][y0]$ (for example, a weight for a pixel in a backward reference block or a weight for a pixel in a reference block for intra prediction, etc.,) may be further derived by using $w_{L0}[x0][y0]$ according to the following formula:

$$w_{L1}[x0][y0] = 1 << shift1 - w_{L0}[x0][y0] \quad\quad (28)$$

Further, in the embodiments of the present disclosure, when deriving at least one weight parameter for the current block in the process of CIIP weighting based on the pixel-level weight, the lower limit weight and the upper limit weight may be determined according to the gradient mode information, the gradient slope information, the change direction information, and the change center position information under the requirement of the predefined calculation accuracy. Then a weight for a change center position may be determined according to the upper limit weight and the lower limit weight. Next, a fourth distance may be determined according to position information of a sample in the current block and the change center position information. Finally, at least one pixel weight value may be determined based on the fourth distance, the lower limit weight, the upper limit weight, and the weight for the change center position.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameters.

Exemplarily, in the embodiments of the present disclosure, it may be predefined that the lower limit weight is 0 and the upper limit weight is 8. Alternatively, the upper limit weight may be determined to be 16 based on a predefined calculation accuracy. Alternatively, the upper limit weight may be determined to be 32 based on the geometrical mode parameter.

It should be noted that, in the embodiments of the present disclosure, the determination of the CIIP intra prediction weight wt based on the pixel level is related to the coding modes for the top and left neighboring blocks of the current CU in addition to *modeParm, cbSlopeParm, cbDirParm* and *cbCenterPosParm* of the current CU. The coding modes for the neighboring blocks may be identified by two Flags: *isIntraTop* and *isIntraLeft*. Here, when *isIntraTop* is 1, the upper neighboring block is available and the coding mode is the intra mode, and when *isIntraLeft* is 1, the left neighboring block is available and the coding mode is the intra mode.

A comprehensive parameter *cbwtParm* is determined by several parameters including *modeParm, cbSlope-Parm, cbDirParm* and *cbCenterPosParm,* and the coding mode information *isIntraTop and isIntraLef* of neighboring blocks. The weight wt [*x*0][*y*0] for each pixel when the intra mode is adopted for the current block may be determined by using the comprehensive parameter. Here, *x*0 = 0...cbWidth - 1, *y*0 = *0...*cbHeight-1.

Exemplarily, in the embodiments of the present disclosure, the gradient mode information *modeParmmay* be used to indicate that the gradient mode is a single-segment linear oblique gradient mode defined by a geometrical parameter.

Exemplarily, in the embodiments of the present disclosure, the gradient slope information *cbSlopeParmmay* be used to indicate the gradient slope of the gradient mode. For example, *cbSlopeParm* may indicate that the gradient weight value reaches to maximum or minimum when a distance from a specified position is 4 pixels.

Exemplarily, in the embodiments of the present disclosure, the change direction information *cbDirParm* may be used to indicate that the change direction of the weighting values for the first prediction pixel has different possibilities: from left to right, from right to left, from upper to lower, from lower to upper, etc. For example, the weighting value for the first prediction pixels gradually increase from upper left (the calculated distance is negative) to lower right (the calculated distance is positive).

For example, when *cbDirParm* is 1, it is indicated that the weighting values for the first prediction pixel gradually decrease as the distance values change from negative to positive, and when *cbDirParm* is 0, it is indicated that the weighting values for the first prediction pixel gradually increase as the distance values change from negative to positive, and here the value of *cbDirParmis* taken to be 0.

Exemplarily, in the embodiments of the present disclosure, the change center position information *cbCenter-PosParm* may be determined according to the slope and intercept of the center position in the oblique gradient mode. For example, it is determined to be a straight line with a slope $\alpha$ and an intercept $\beta$ (or an angle $\theta$ and a distance d represented in a polar coordinate).

Exemplarily, in the embodiments of the present disclosure, based on the change center position information *cbCenterPosParm ,* combined with the information given by *cbDirParm* and *cbSlopeParm,* a position that is -n pixels away from the straight line is a gradient start position, and the lower limit weight min *Wvalue* is for the left or the lower of the start position, that is, the gradient lower limit information is determined. A position that is n pixels away from the straight line is a gradient end position, and the upper limit weight *maxWvalue* is for the right or upper of the end position, that is, the gradient lower limit information is determined. The weights change gradually in the range from the start position to end position.

That is, in the embodiments of the present disclosure, a gradient range [-n, n] and a gradient direction may be determined based on *modeParm, cbSlopeParm,* and *cbDirParm.* Further, the lower limit weight min *Wvalue* and the upper limit weight max *Wvalue* may be determined by using the gradient range [-n, n] and the gradient direction. Then, in the case of linear gradient, a weight for the change center position may be determined based on the upper limit weight max*Wvalue* and the lower limit weight min *Wvalue* and the change center position information *cbCenterPosParm .* The weight *wCenterPos* for the change center position information *cbCenterPosParm* should be an average value of the upper limit weight max *Wvalue* and the lower limit weight min*Wvalue,* as shown in the following formula.

$$wCenterPos = \left(maxWvalue + minWvalue + 1\right)? \ 1 \qquad (29)$$

It is assumed that *minWvalue* is 0, and *maxWvalue* is 1.

Further, in the embodiments of the present disclosure, if the gradient mode information indicates that the gradient mode is a linear oblique gradient mode, a fourth distance firstly needs to be determined when calculating at least one pixel weight value $w[x0][y0]$ which linearly changes according to the distance. The fourth distance may be determined according to the position information of the sample in the current block and the change center position information.

Exemplarily, in the embodiments of the present disclosure, for each pixel in a forward reference block of the current CU, a distance parameter L2, that is, the fourth distance, between a sample in the current block and a pixel determined from the gradient center position *cbCenterPosParm* of the forward reference block is calculated according to the position information of the sample, as shown in the following formula.

$$L2 = x0 * \cos\partial - y0 * \sin\partial + \rho \qquad (30)$$

Here, $\rho$ represents a distance between the gradient center position and an original point. It is assumed that the original point is at the center point of the entire block area, and then, for a block with width cbWidth and height cbHeight, the distances dx and dy of the upper left pixel relative to the original point may be shown as follows:

$$dx = cbWidth/2\text{-}0.5 \text{ pixels} \qquad (31)$$

$$dy = cbHeight/2\text{-}0.5 \text{ pixels} \qquad (32)$$

Then further, it is determined that the fourth distance L2 may be calculated according to the following formula:

$$L2 = \left(x0 + offsetX + 0.5\right) * \cos\partial - (y0 + offsetY + 0.5) * \sin\partial \qquad (33)$$

Here, offset values *offsetX* and *offsetY* describe the horizontal and vertical components of the distance between the gradient center position line and the original point, respectively.

Further, in the embodiments of the present disclosure, after the fourth distance is determined, the fourth distance, the upper limit weight, lower limit weight and the weight for the change center position may be used to determine at least one pixel weight value, which includes a first prediction weight value $w_{L0}[x0][y0]$ (for example, a weight for a pixel in a forward reference block or a weight for a pixel in a reference block for intra prediction, etc.) and a second prediction weight value $w_{L1}[x0][y0]$ (for example, a weight for a pixel in a backward reference block or a weight for a pixel in a reference block for intra prediction etc.).

Exemplarily, in the embodiments of the present disclosure, the first prediction weight value $w_{L0}[x0][y0]$ may be calculated by using the fourth distance L2 according to the following formula:

$$wl = cbDirParm?\left(n + L2\right) : \left(n - L2\right) \qquad (34)$$

$$w_{L0}\left[x0\right]\left[y0\right] = minWvalue + Clip3(0, \ maxWvalue - minWvalue, \\ wl * \left(wCenterPos - \min Wvalue\right)/n) \qquad (35)$$

Here, gradient pixels on both sides of the gradient center position are n pixels, and offset values *offsetX* and *offsetY* of the current CU block are determined according to the size and gradient mode of the current CU block.

It may be understood that in the embodiments of the present disclosure, in order to improve the operation accuracy, the weight value here may be appropriately multiplied by a coefficient, or shifted left by shift3 bits to amplify. Alternatively, the amplifying of the weight value is pre-considered when specifying min*Wvalue* and *maxWvalue ,* for example, they are amplified by $2^{shift3}$ times than the real weights, respectively.

It should be noted that in the embodiments of the present disclosure, for bidirectional weighted prediction, a value of the sum of the forward weight value and the backward weight value for the pixel is the same as a value of the sum of the upper limit weight value and the lower limit weight value. That is, according to the following formulas, after the value of the sum of the weights *sumValue* is determined, one already determined weight value (such as the forward weight value $w_{L0}[x0][y0]$) for a pixel may be used to determine the other weight value (such as the backward weight value $w_{L1}[x0][y0]$) for the pixel.

$$sumValue = minWvalue + maxWvalue \qquad (36)$$

$$w_{L1}[x0][y0] = sumValue - w_{L0}[x0][y0] \qquad (37)$$

Further, in the embodiments of the present disclosure, the at least one weight parameter for the current block may be a pixel-level weight parameter or a weight parameter for at least one sub-block of the current block. That is, the at least one weight parameter may include a weight value for at least one sub-block of the current block.

It may be understood that in the embodiments of the present disclosure, when the weighting parameter is applied to derive the predicted pixel value, the weighting parameters that change gradually at the pixel level may be selected to perform calculation for the pixels at different positions. In order to reduce calculation complexity, a same method for determining the weight with a unit of sub-blocks (for example, sub-blocks with a size of $2 \times 2$ or $4 \times 4$) is adopted.

Further, in the embodiments of the present disclosure, weighting parameters on a plane may be changed according to a certain geometrical rule with reference to positions of pixels, or may be changed according to combined multiple different geometrical rules. For example, the pixel-level weight value may change with the distance of the pixel from the center change position, and when the distance value is between [0, L1], it is changed in first gradient mode, and when the distance value is between (L1, L2], it is changed in the second gradient mode.

Further, in the embodiments of the present disclosure, not only the pixel-level weight value may change with the distance between the pixel and the center change position, but also different linear or nonlinear gradient modes may be determined for different positions. For example, when the distance value is between [0, L1], the gradient mode is a linear gradient mode, and when the distance is between (L1, L2], the gradient mode is a nonlinear gradient mode, etc.

It may be seen that the encoding and decoding method proposed in the embodiments of the present disclosure may be used for unidirectional prediction or bidirectional prediction. It may be used in the case where all prediction is derived from inter prediction, or in the case where part or all of the predicted pixel values are derived from intra prediction.

It may be understood that in the embodiments of the present disclosure, the case for unidirectional prediction is similar to the WP mode, and pixel-level weighting parameter (weight parameter) for only one prediction source is derived, which may include a weighting coefficient (weight value) and an offset.

It may be understood that in the embodiments of the present disclosure, the case for bidirectional prediction may be similar to the WP mode, and pixel-level weighting parameters (weight parameters) for two prediction sources may be derived, which may include weighting coefficients (weight values) and offsets. The case for bidirectional prediction may also be similar to BCW or CIIP, and only pixel-level weighting coefficients (weight values) for two prediction sources are derived.

Further, in the embodiments of the present disclosure, when determining at least one pixel-level weight parameter for the current block, a weight for a pixel may be calculated by using coordinates of the pixel, may be generated by selecting a predefined weight parameter using a preset matrix, or may be derived from the weight parameters for pixels at adjacent top and left positions of the pixel.

That is, in the embodiments of the present disclosure, for position information of one sample in the current block, the pixel weight for the position information of the sample may be determined according to the pixel weight for the position information of other sample adjacent to the position information of the sample.

Exemplarily, in the embodiments of the present disclosure, a weight $w_c$ for one pixel may be derived from the weights $w_t$, $w_l$ for pixels at adjacent top and left positions of the coordinates of the pixel, according to the following formula:

$$w_c = (w_l + w_t + 1)/2 \qquad (38)$$

In operation 103, a prediction value of the current block is determined based on the at least one reference prediction value and the at least one weight parameter.

In the embodiments of the present disclosure, after determining the at least one reference prediction value of the current block according to the information of at least one motion vector and determining the at least one weight parameter for the current block according to the type indication parameter and/or the geometrical mode parameter, the prediction value of the current block may be further determined based on the at least one reference prediction value and the at least one weight parameter.

Further, in the embodiments of the present disclosure, after determining at least one weight parameter for the current block including at least one pixel weight value, or including at least one pixel weight value and at least one pixel offset value, the prediction process may be performed based on the at least one pixel weight value (or at least one pixel weight value and at least one pixel offset value) and at least one reference prediction value of the current block, to obtain the prediction value of the current block.

It may be understood that in the embodiments of the present disclosure, in the process of calculating the prediction value for the slice-level weighted prediction, the prediction value of the current block may be determined according to at least one reference prediction value, at least one pixel weight, and at least one pixel offset value.

Exemplarily, in the embodiments of the present disclosure, after acquiring a syntax element for the slice-level weighted prediction and the reference pixel value (reference prediction value) of each CU of the current slice, in case of unidirectional prediction, taking forward prediction as an example, the weighted prediction process may be performed according to the following formula to determine the prediction value $Pred_{WP}$ of the current block.

$$Pred_{WP} = Clip\left(\left(\left(\mathrm{Pr}edSampleL0 \cdot w_{L0}[x0][y0] + 2^{\log_2 W_d - 1}\right)? \quad \log_2 W_d\right) + o\_L0[x0][y0]\right) \quad (39)$$

Exemplarily, in the embodiments of the present disclosure, after acquiring the syntax element for the slice-level weighted prediction and the reference pixel value (reference prediction value) of each CU of the current slice, in case of unidirectional prediction, taking the backward prediction as an example, the weighted prediction processing may be performed according to the following formula to determine the prediction value $Pred_{WP}$ of the current block.

$$Pred_{WP} = Clip\left(\left(\left(\mathrm{Pr}edSampleL1 \cdot w_{L1}[x0][y0] + 2^{\log_2 W_d - 1}\right)? \quad \log_2 W_d\right) + o\_L1[x0][y0]\right) \quad (40)$$

Exemplarily, in the embodiments of the present disclosure, after acquiring the syntax element for the slice-level weighted prediction and the reference pixel value (reference prediction value) of each CU of the current slice, in case of bidirectional prediction, the weighted prediction process may be performed according to the following formula to determine the prediction value $Pred_{WP}$ of the current block:

$$Pred_{WP} = Clip\left(\left(\begin{matrix} 0redSampleL0 \cdot w_{L0}[x0][y0] + PredSampleL1 \cdot w_{L1}[x0][y0] + \\ (o\_L0[x0][y0] + o\_L1[x0][y0] + 1) = \quad \log_2 W_d \end{matrix}\right)? \quad (\log_2 W_d + 1)\right) \quad (41)$$

It should be noted that in the embodiments of the present disclosure, for a luma block,

$$\log_2 W_d = luma\_log2\_weight\_denom + shift1 \quad (42)$$

It should be noted that in the embodiments of the present disclosure, for a chroma block,

$$\log_2 W_d = chroma\_log2\_weight\_denom + shift1 \quad (43)$$

Here, $PredSamplesL0$ and $PredSamplesL1$ are reference pixel values in the reference lists List0 and List1, respectively. $w_{L0}[x0][y0]$ and $w_{L1}[x0][y0]$ are pixel-level weight values for the forward reference block and the backward reference block, respectively, i.e., pixel-level weight values for the current block, and o_L0[x0][y0] and o_L1[x0][y0] represent corresponding offsets, i.e., pixel-level offset values of the current block.

It may be understood that in the embodiments of the present disclosure, in order to improve the prediction accuracy, the intermediate operation result has higher accuracy than the reference pixel value. *log2_weight_denom* and *chroma_log2_weight_denom* represent an improved accuracy of weighting coefficients. *shift*1 is an improved accuracy of reference pixel value in the calculation process of sub-pixel interpolation (the whole pixel value is also amplified). Clip () operation is to clamp the pixel value within a valid range. For example, the valid value of 8 bits is [0, 255] and the valid value of 10 bits is [0, 1023].

It may be understood that in the embodiments of the present disclosure, for the BCW weighting based on the pixel-level weight, in the process of calculating the prediction value, the prediction value of the current block may be determined according to at least one reference prediction value and at least one pixel weight.

It should be noted that, in the embodiments of the present disclosure, both the forward reference list List0 and the backward reference list List1 are used for bidirectional prediction. Information of a forward motion vector MV0 in the forward reference list List0 is used for performing motion compensation prediction to obtain the forward prediction value (forward reference value) PredSamplesL0, and information of a backward motion vector MV1 in the backward reference list List1 is used for performing motion compensation prediction to obtain the backward prediction value (backward reference value) PredSamplesL1.

It may be understood that in the embodiments of the present disclosure, the BCW is initiated only for the CU adopting the bidirectional prediction, only a small number of predefined weights are used, and indexes of which are encoded.

Exemplarily, in the embodiments of the present disclosure, when BCW with pixel-level weights is adopted, the prediction value of the current block, that is, the weighted prediction value is:

$$\Pr edSamples = Clip\left(\left(\begin{array}{l}\Pr edSamplesL0 \ \times \ w_{L1}\left[x0\right]\left[y0\right] + \\ \Pr edSamplesL1 \ \times \ w_{L0}\left[x0\right]\left[y0\right] + offset1\end{array}\right) >> \left(shift1 + shift2\right)\right)$$

$$offset1 = 1 << \left(shift1 + shift2 \text{-}1\right) \tag{44}$$

$$shift2 = Max\left(2, \max TempBitDepth \text{-} bitDepth\right)$$

Here, *PredSamplesLO* and *PredSamplesL1* are reference pixel values in the reference lists List0 and List1, respectively. $w_{L1}[x0][y0]$ is a weight for a backward reference pixel value at a relative position $(x0, y0)$ in a block. $w_{L0}[x0][y0]$ is a weight for a forward reference pixel value at the relative position $(x0, y0)$ in the block. Here, x0 = 0...cbWidth -1, y0 = O...cbHeight -1, and maxTempBitDepth is the maximum bit depth allowed during the operation intermediate process.

It may be understood that in the embodiments of the present disclosure, for the CIIP weighting based on the pixel-level weight, in the process of calculating the prediction value, the prediction value of the current block may be determined according to at least one reference prediction value and at least one pixel weight.

It should be noted that, in the embodiments of the present disclosure, when calculating the CIIP weighted prediction value based on the pixel-level weight, the used $P_{intra}$ is an intra prediction value obtained after the normal intra prediction process is performed on the current block through the Planar mode, the $P_{inter}$ is an inter prediction value, and *wt* $[x0][y0]$ is a weight for the intra prediction.

Exemplarily, in the embodiments of the present disclosure, when CIIP with pixel-level weight is adopted, the prediction value of the current block, that is, the weighting prediction value $Predsamples_{CIIP}$ is:

$$Predsamples_{CIIP} = \left(w_{L1}\left[x0\right]\left[y0\right] * P_{inter} + w_{L0}\left[x0\right]\left[y0\right] * P_{intra} + offset2\right)? \ shift3$$

$$offset2 = 1 << \left(shift3 \text{-}1\right) \tag{45}$$

Here, $w_{L0}[x0][y0]$ is a weight for the forward reference pixel value, and $w_{L1}[x0][y0]$ is a weight for the backward reference pixel value, shift3 is a parameter that is obtained by amplifying a weight value in the previous operation to improve the operation accuracy, and the right shift is used to restore the prediction pixel value to a reasonable value range. If no amplification, $Predsamples_{CIIP}$ may be simply written as:

$$Predsamples_{CIIP} = w_{L1}\left[x0\right]\left[y0\right] * P_{inter} + w_{L0}\left[x0\right]\left[y0\right] * P_{intra} \tag{46}$$

Thus, in the embodiments of the present disclosure, when the encoding and decoding method proposed in the present disclosure is applied to weighting based on slice level, two Inter prediction weighting at the CU level (BCW) and one Inter and one Intra prediction weighting at the CU level (CIIP), respectively, the determination of pixel-level weighting parameters may be completed, thus the encoding efficiency and performance of weighted prediction can be improved.

That is, in the embodiments of the present disclosure, for the weight value at the pixel level used in the weighted prediction process, the weight value for the entire forward reference block or the backward reference block is no longer fixed to a fixed value, but the weighting parameter for the current Slice or the CU may be adaptively adjusted according to factors such as brightness changes in a sequence of contents. That is, the weight value at the pixel level is used to perform the inter weighted prediction instead of the weight value at each reference block level being a fixed value, which further improves the accuracy of the inter weighted prediction, and thus can improve the encoding efficiency of the weighted prediction.

It should be noted that, in the embodiments of the present disclosure, although slice-level weighting, two Inter prediction weighting at the CU level, and one Inter and one Intra prediction weighting at the CU level are illustratively described, the encoding and decoding method proposed in the embodiments of the present disclosure does not have a different design for the slice level or the CU level alone, and does not have a different design when each prediction participating in the weighting comes from the Inter or Intra prediction method.

The embodiments of the present disclosure propose a decoding method. A decoder may determine information of at least one motion vector of a current block, and a type indication parameter and/or a geometrical mode parameter of the current block; determine at least one reference prediction value of the current block according to the information of at least one motion vector; determine at least one weight parameter for the current block according to the type indication parameter and/or the geometrical mode parameter; and determine a prediction value of the current block based on the at least one reference prediction value and the at least one weight parameter. It may be understood that in the embodiments of the present disclosure, during coding and decoding process, the pixel-level weight parameter for the current block may be determined from the type indication parameter and/or the geometrical mode parameter, and then the prediction process may be performed on the current block according to the pixel-level weight parameter. It may be seen that in the embodiments of the present disclosure, the weight used for the prediction process is no longer fixed, but the pixel-level weight value adapted to the change of the pixels is selected, which greatly improves the accuracy of the weighted prediction, thereby improving the encoding efficiency and the compression performance.

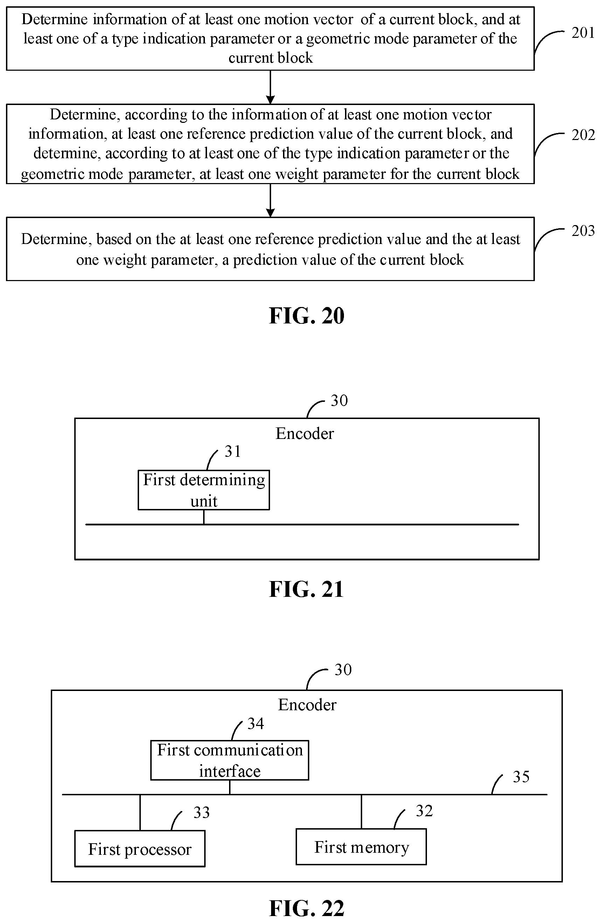

Embodiments of the present disclosure propose an encoding method. The method is applied to an encoder. FIG. 20 is a schematic flowchart of implementing the encoding method. As illustrated in FIG. 20, the encoding method performed by the encoder may include the following operations.

In operation 201, information of at least one motion vector of a current block, and a type indication parameter and/or a geometrical mode parameter of the current block are determined.

In the embodiments of the present disclosure, the encoder may firstly determine information of at least one motion vector of the current block, and may also determine the type indication parameter and/or the geometrical mode parameter of the current block.

It should be noted that, in the embodiments of the present disclosure, since the codec scheme of the present disclosure may be applied to unidirectional prediction or bidirectional prediction, information of at least one motion vector of the current block may include a forward motion vector and/or a backward motion vector. The forward motion vector of the current block may be used to perform forward prediction to obtain a prediction value of the current block. The backward motion vector of the current block may be used to perform backward prediction to obtain a prediction value of the current block.

Exemplarily, in the embodiments of the present disclosure, the forward motion vector may be represented as MVL0, and the backward motion vector may be represented as MVL1.

It should be noted that, in the embodiments of the present disclosure, the type indication parameter is a type index parameter. The type indication parameter may be used to select a type of a pixel-level weighting parameter. That is, the type indication parameter may be used to select a manner of determining the pixel-level weighting parameter.

It may be understood that, in the embodiments of the present disclosure, the type of pixel-level weighting parameter, i.e., the manner of determining the pixel-level weighting parameter may include, but is not limited to, the following types (manners): weighting parameters defined by a pre-stored matric, and weighting parameters defined by a geometrical mode parameter.

That is, in the embodiments of the present disclosure, the type indication parameter may be used to determine whether the pre-stored matrix or the geometrical mode parameter is used to derive the pixel-level weighting parameter. It may also be understood that whether the pre-stored matrix is used to derive the pixel-level weighting parameter is determined according to the type indication parameter, or whether the geometrical mode parameter is used to derive the pixel-level weighting parameter is determined according to the type indication parameter.

It should be noted that in the embodiments of the present disclosure, the geometrical mode parameter may include one or more of: gradient mode information, gradient slope information, change direction information, change start position information, change center position information, change end position information, gradient upper/lower limit information (i.e., lower limit weight and upper limit weight, which may be derived from other geometrical mode parameters or may be preset), change range width information, and change segment information. Here, in some embodiments, the gradient slope information may also be represented as change range width information.

It should be noted that, in the embodiments of the present disclosure, the gradient mode information may be determined by using *modeParm*. The gradient mode formation *modeParm* may indicate a gradient mode. That is, the gradient mode formation *modeParm* may indicate a type of the gradient mode.

Exemplarily, in the embodiments of the present disclosure, the type of the gradient mode may include, but are not limited to, a horizontal gradient weighting, a vertical gradient weighting, an oblique gradient weighting, a radiation gradient weighting, an affine gradient weighting, and the like.

For example, the horizontal gradient mode may include two different change directions. The vertical gradient mode may include two different change directions. The oblique gradient mode not only includes multiple different change directions, but also may include multiple different gradient slope information. The radiation gradient mode involves a change center position.

Further, in the embodiments of the present disclosure, an optimal gradient mode of the current CU/coding block may be determined through template matching. Specifically, pixels at the upper row and/or left column of the current CU/coding block are used as templates. In the process of constructing pixel values predicted from the templates, gradient weighting process is performed on prediction values from different parts, and geometrical parameters of an optimal gradient weighting scheme are selected as parameters of a gradient weighting scheme for the current CU/coding block.

Further, in the embodiments of the present disclosure, for a CU/coding block with small size, some gradient modes having a greater gradient width range may be skipped. For a CU/coding block with large size, some gradient modes having a small gradient width range may be skipped.

Further, in the embodiments of the present disclosure, for a sequence with a higher resolution or a block with a larger size, the number of segments of the gradient mode may be adaptively increased, thereby improving the prediction accuracy.

It should be noted that, in the embodiments of the present disclosure, the gradient slope information may be determine by using *slopeParm.* The gradient slope information *slopeParm* may indicate the speed of change, that is, it may indicate the speed of change of gradient weight parameters with the distances between pixels and a specified position (a position of a point or line).

It should be noted that in the embodiments of the present disclosure, the linear gradient slope information may be indicated by an index. For example, 0 represents no gradient and direct jump, m indicates that the gradient weight parameters reach the maximum or minimum when the distance from the specified position reaches $(2m - 1)/M$ pixel position, the gradient weight parameters are linearly gradient when closer to the specified position, and remain the maximum or minimum when farther away from the specified position. Here, the value of M may be 2, 1, 1/2, etc.

Exemplarily, in the embodiments of the present disclosure, it is assumed that the linear gradient slope information is indicated by an index. Specifically, 0 represents that w is a constant, with no gradient or jump, m indicates that the gradient weight parameters reach the maximum or minimum when the distance reaches $t \times width/(2m-1)$. Here, width is a width (slice width or coding block width) corresponding to a unit for which the gradient weight parameters are calculated, and t is a constant.

It should be noted that, in the embodiments of the present disclosure, the change direction information may be determined by *dirParm* . The change direction information *dirParm* may indicate a direction in which the change slope changes. That is, it may indicate a direction in which gradient slope of weight parameters for a first prediction pixel changes.

Exemplarily, in the embodiments of the present disclosure, it is assumed that the change direction information is indicated by an index, for example, 0 represents from the smallest to the largest, and 1 represents from the largest to the smallest.

It should be noted that, in the embodiments of the present disclosure, the change start position information may be determined by *startPosParm* . The change start position information *startPosParm* may include different numbers of parameters according to different gradient types. That is, the number of parameters included in the change start position information corresponds to the gradient type (gradient mode information).

Exemplarily, in the embodiments of the present disclosure, when the gradient mode information indicates that the gradient mode is a horizontal gradient mode, the change start position information may include a coordinate position at the horizontal axis. When the gradient mode information indicates that the gradient mode is an oblique gradient mode, the change start position information may include a set of parameters representing a straight line in a Cartesian coordinate system, one of which represents a slope and the other represents an intercept. For example, in the oblique gradient mode, the change start position information may include a set of parameters representing a straight line in a polar coordinate system, one of which represents an angle and the other represents a distance. When the gradient mode information indicates that the gradient mode is a radiation gradient mode, the change start position information may include a set of parameters representing the radiation shape and its corresponding position. For example, in the case that the radiation shape is a circle, when the start position is a point, the set of parameters include a horizontal and a vertical coordinate in the Cartesian coordinate system, or include an angle and a distance in the polar coordinate system. When the gradient mode information indicates that the gradient mode is an affine gradient mode, the change start position information may include a set of parameters representing positions of multiple control points or positions of multiple control lines. It should be noted that the oblique gradient may include horizontal and vertical gradient modes.

It should be noted that, in the embodiments of the present disclosure, the change center position information may be determined by *centerPosParm.* The change center position information *centerPosParm* represents a position where a median value of weight parameters for a gradient region is located. For example, when a gradient interval of the weight parameters is from 0 to 1, the median value is 0.5, and the weight parameter gradually increases or decreases to both sides based on this position.

It may be understood that in the embodiments of the present disclosure, the change center position information *centerPosParm* may include different numbers of parameters according to different gradient types. That is, the number of parameters included in the change center position information corresponds to the gradient type (gradient mode information).

Exemplarily, in the embodiments of the present disclosure, when the gradient mode information indicates that the gradient mode is a horizontal gradient mode, the change center position information may include a coordinate position at a horizontal axis. When the gradient mode information indicates that the gradient mode is an oblique gradient mode, the change center position information may include a set of parameters representing a straight line in a Cartesian coordinate system, one of which represents a slope and the other represents an intercept. When the gradient mode information indicates that the gradient mode is oblique gradient mode, the change center position information may include a set of parameters representing a straight line in a polar coordinate system, one of which represents an angle and the other represents a distance. When the gradient mode information indicates that the gradient mode is the radiation gradient mode, the change center position information may include a set of parameters representing a radiation shape and its corresponding position. For example, in the case that the radiation shape is a circle and the center positions form a circle, the set of parameters include a horizontal and a vertical coordinate and a radius in the Cartesian coordinate system, or include position information of a center point and a radius in the polar coordinate system. When the center point is aligned with the original point, the set of parameters include only the radius information. When the gradient mode information indicates that the gradient mode is an affine gradient mode, the change center position information may include a set of parameters representing positions of multiple control points or positions of multiple control line positions.

It should be noted that, in the embodiments of the present disclosure, the change end position information may be determined by *endPosParm* . The change end position *endPosParm* may include different numbers of parameters according to different gradient types. That is, the number of parameters included in the change end position information corresponds to the gradient type (gradient mode information).

Exemplarily, in the embodiments of the present disclosure, when the gradient mode information indicates that the gradient mode is a horizontal gradient mode, the change end position information may include a coordinate position at a horizontal axis. When the gradient mode information indicates that the gradient mode is an oblique gradient mode, the change end position information may include a set of parameters representing a straight line in a Cartesian coordinate system, one of which represents a slope and the other represents an intercept. When the gradient mode information indicates that the gradient mode is the oblique gradient mode, the change end position information may include a set of parameters representing a straight line in a polar coordinate system, one of which represents an angle and the other represents a distance. When the gradient mode information indicates that the gradient mode is the radiation gradient mode, the change end position information may include a set of parameters representing a radiation shape and its corresponding position. For example, in the case that the radiation shape is a circle, the end positions form a circle, the end position information includes a horizontal and a vertical coordinate and a radius in the Cartesian coordinate system or the end position information includes position information of a center point and a radius in the polar coordinate system. When the center point is aligned with the original point, the end position information includes only the radius information. When the gradient mode information indicates that the gradient mode is an affine gradient mode, the change end position information may include a set of parameters representing positions of multiple control points or positions of multiple control lines.

It should be noted that, in the embodiments of the present disclosure, the gradient upper/lower limit information (minimum weight and maximum weight) may be determined by max *Wvalue* / min *Wvalue.* The gradient upper/lower limit information max *Wvalue* / min *Wvalue* may be used to indicate upper/lower limit information of the weight parameter, and may be derived by other geometrical mode parameters, or may be preset.

Exemplarily, in the embodiments of the present disclosure, the gradient upper/lower limit information max*Wvalue*/*minWvalue* may be values corresponding to the weights 0 and 1 under a corresponding accuracy requirement. For example, it is assumed that the accuracy reaches the third place after the decimal point in binary representation, then after fixed-point quantization, the lower limit 0 corresponds to 0, and the upper limit 1 corresponds to 8. It is assumed that the accuracy reaches the fifth place after the decimal point in binary representation, then after fixed-point quantization, the lower limit 0 corresponds to 0 and the upper limit 1 corresponds to 32.

It may be understood that in the embodiments of the present disclosure, the lower limit of the weighting parameter generally corresponds to 0. That is, the reference pixel at the corresponding position is not used to perform the weighting. The upper limit of the weighting parameter generally corresponds to 1. That is, only the reference pixel at corresponding position is used to perform weighting.

It should be noted that, in the embodiments of the present disclosure, the gradient upper/lower limit information max*Wvalue*/*minWvalue* may not be a weight value corresponding to 0 or 1. For example, it may be a value corresponding to 0.2 or 0.4 under a corresponding accuracy requirement.

Further, in the embodiments of the present disclosure, the change segment information may be determined by *segParm* . The change segment information *segParm* may indicate information related to a continuous gradient composed of multiple segments, and may include information whose meaning covers the above multiple parameters.

Exemplarily, in the embodiments of the present disclosure, the change segment information *segParm* may include information of multiple segments, such as gradient slope information (change range width information), change direction information, change start position information, and change end position information for each segment. Alternatively, the change segment information *segParm* may include information of multiple segments, such as change direction information, change start position information, change end position information, gradient upper limit and gradient lower limit information for each segment.

Further, in the embodiments of the present disclosure, any one of the geometrical mode parameters, that is, any one of the gradient mode information, the gradient slope information (change range width information), the change direction information, the change start position information, the change center position information, the change end position information, the gradient upper/lower limit information, and the change segment information, may be represented in an index form through quantization.

It should be understood that in the embodiments of the present disclosure, the geometrical mode parameter may be used to indicate a geometrical change set. The geometrical change set includes change start position information, change center position information, and change end position information.

Exemplarily, in the embodiments of the present disclosure, the change start position information, the change center position information, and the change end position information may specify different possibilities, and each possible line is predefined as an ordered set, so these positions may be specified by only one index. One index may correspond to one ordered set, so that the corresponding position information may be specified.

Further, in the embodiments of the present disclosure, the type indication parameter may be used to determine whether a pre-stored matrix or a geometrical mode parameter is used to derive a pixel-level weighting parameter.

It may be understood that in the embodiments of the present disclosure, in a weighting mode defined by a pre-stored matrix, the number and dimensions of the pre-defined matrixes are limited. A weighting matrix with predefined dimensions may be applied to multiple areas with different dimensions and different accuracy requirements through interpolation and other manners.

Further, in the embodiments of the present disclosure, a weighting parameter defined by the geometrical parameter (geometrical mode parameter) refers to a weighting parameter calculated from the geometrical parameter. The weighting parameter on a plane changes according to a certain geometrical rule with the position of the pixels. Such a weighting parameter *wtParm* changing according to the certain geometrical rule may be expressed by at least one of several parameters including gradient mode information *modeParm,* gradient slope information *slopeParm,* change direction information *dirParm,* change start position information *startPosParm,* change center position information *centerPosParm,* change end position information *endPosParm,* gradient upper/lower limit information *minParm* / *maxParm,* and change segment information *segParm* .

Further, in the embodiments of the present disclosure, if the geometrical mode parameters of different picture blocks are the same, for example, when the geometrical mode parameters such as gradient slope information and change direction information of respective CUs are basically consistent, one or more weight matrices may be predefined firstly, and pixel-level weights for a coding unit block may be obtained by performing upsampling, downsampling, or intercepting on a predefined weight matrix.

It should be noted that, in the embodiments of the present disclosure, the mode type for deriving the pixel-level weighting parameter may be selected by an index based on the type indication parameter. For example, an index number of a mode is determined based on the type indication parameter, and then a mode type for deriving the pixel-level weighting parameter is determined according to the index number of the mode. That is, whether the pixel-level weighting parameter is derived from a weighting parameter defined by a pre-stored matrix or a weighting parameter defined a geometrical parameter is determined.

Exemplarily, in the embodiments of the present disclosure, when the weighting parameter is obtained from a pre-stored matrix or is calculated from a gradient weighting mode defined by a geometrical parameter, the weighting mode indicated by an index is as shown in the table 1. Exemplarily, in the embodiments of the present disclosure, when the weighting parameter is calculated only from a certain gradient weighting mode defined by the geometrical parameter, the weighting mode indicated by an index is as shown in the table 2.

Exemplarily, in the embodiments of the present disclosure, when the weighting parameter is calculated based on a certain nonlinear weighting mode defined by the geometrical parameter, the weighting mode indicated by an index is as shown in the table 3. Exemplarily, in the embodiments of the present disclosure, when the weighting parameter is calculated from a certain nonlinear weighting mode defined by the geometrical parameter, the weighting mode indicated by an index is as shown in the table 4.

Further, in the embodiments of the present disclosure, the inter prediction mode parameter of the current block may be determined firstly. If the inter prediction mode parameter indicates that a pixel-level weight value is used to determine the inter prediction value of the current block, the process for determining the type indication parameter and/or the geometrical mode parameter may be determined to be performed.

That is, in the embodiments of the present disclosure, an identifier information (such as an inter prediction mode parameter) may be used to indicate whether to use the encoding and decoding method for performing prediction using the pixel-level weight value proposed in the embodiments of the present disclosure. If it is determined based on the inter prediction mode parameter that the pixel-level weight value is used to determine the inter prediction value of the current block, the process of determining the type indication parameter and/or the geometrical mode parameter may be performed, thereby further completing the determination of at least one weight parameter for the current block according to the type indication parameter and/or the geometrical mode parameter.

In operation 202, at least one reference prediction value of the current block is determined according to the information of at least one motion vector, and at least one weight parameter for the current block is determined according to the type indication parameter and/or the geometrical mode parameter.

In the embodiments of the present disclosure, after determining the information of the at least one motion vector of the current block and the type indication parameter and/or the geometrical mode parameter of the current block, at least one reference prediction value of the current block may be determined according to the information of at least one motion vector. Also at least one weight parameter for the current block may be determined according to the type indication parameter and/or the geometrical mode parameter.

It may be understood that in the embodiments of the present disclosure, at least one weight parameter for the current block may be at least one pixel-level weight parameter. The at least one weight parameter may include at least one pixel weight value or may include at least one pixel offset value. That is, the at least one weight parameter may include at least one pixel-level weight coefficient, or may include at least one pixel-level weight coefficient and at least one pixel-level offset value.

It should be noted that, in the embodiments of the present disclosure, since the encoding and decoding solution of the present disclosure may be applied to unidirectional prediction or bidirectional prediction, at least one reference prediction value for the current block may include a forward reference value and/or a backward reference value. The forward reference value for the current block may be a prediction result obtained by performing forward prediction on the current block, and the backward reference value for the current block may be a prediction result obtained by performing backward prediction on the current block.

Exemplarily, in the embodiments of the present disclosure, the forward reference value may be represented as *PredSamplesL*0, and the backward reference value may be represented as *PredSamplesL*1.

Further, in the embodiments of the present disclosure, since the type indication parameter (type index parameter) may be used to select the type of the pixel-level weighting parameter, that is, a weighting parameter defined by a pre-stored matrix or a weighting parameter defined by a geometrical mode parameter may be selected to use. Therefore, whether to use the geometrical mode parameter is determined according to the type indication parameter, that is, whether to select to use the geometrical mode parameter to determine the weighting parameter is determined based on the type indication parameter.

It may be understood that, in the embodiments of the present disclosure, if the type indication parameter indicates that the geometrical mode parameter is not used, then a pre-stored matrix may be further determined, and at least one weight parameter may be determined according to the pre-stored matrix. Accordingly, if the type indication parameter indicates that the geometrical mode parameter is used, the at least one weight parameter may be determined directly according to the geometrical mode parameter.

Further, in the embodiments of the present disclosure, when at least one weight parameter for the current sample is at least one pixel weight value (at least one pixel weight coefficient), position information of the sample in the current block in combination with the geometrical mode parameter may be used to further determine the at least one weight parameter.

It should be noted that, in the embodiments of the present disclosure, the at least one pixel weight value may be determined according to the position information of the sample in the current block and the geometrical mode parameter.

Further, in the embodiments of the present disclosure, the derivation of the weighting parameter (at least one weighting parameter) may be performed at different levels. For example, the pixel-level weight may be derived at the slice level, or may be derived at the CU/coding block level. The weighting parameter has certain accuracy and upper and lower limits. Weighting parameters with sub-pixel accuracy may be obtained by interpolation filtering for an already derived whole pixel weighting parameter.

It should be noted that, in the embodiments of the present disclosure, at least one weight parameter may be determined using different manners for different levels.

Further, in the embodiments of the present disclosure, when at least one weight parameter for the current block is derived at the slice level, the lower limit weight and the upper limit weight may be determined firstly according to the gradient mode information, the change start position information, the change end position information, and the change direction information under a requirement of a predefined calculation accuracy. Then, a first distance may be determined according to position information of a sample in the current block and the change start position information, and a second distance may be determined according to the position information of the sample in the current block and the change end position information. Finally, at least one pixel weight value may be further determined according to the first distance, the second distance, the lower limit weight, and the upper limit weight.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameter.

Exemplarily, in the embodiments of the present disclosure, it may be predefined that the lower limit weight is 0 and the upper limit weight is 8. Alternatively, the upper limit weight may be determined to be 16 based on the predefined calculation accuracy. Alternatively, the upper limit weight may be determined to be 32 based on the geometrical mode parameter.

It should be noted that, in the embodiments of the present disclosure, when slice-level weighting based on the pixel-level weight is performed, several geometrical mode parameters related to the weight, including gradient mode information *modeParm,* Slice-level change direction information *sliceDirParm,* Slice-level change start position information *sliceStartPosParm,* Slice-level change end position information *sliceEndPosParm,* Slice-level gradient lower limit information *minWvalue,* and Slice-level gradient upper limit information *maxWvalue,* are determined based on the current Slice, and these geometric mode parameters may be used to determine a comprehensive weight parameter *slicewtParm* for the current Slice, which is used to derive a weight $wLX_{ij}$ and offset $o\_LX_{ij}$ used in Slice-level weighted prediction. X is an index of a reference list, when X is 0, it represents the forward reference list List0, otherwise it represents a backward reference list List1.

Exemplarily, in the embodiments of the present disclosure, the gradient mode information *modeParm* may be used to indicate that the gradient mode is a single-segment linear oblique gradient mode defined by a geometrical parameter.

Exemplarily, in the embodiments of the present disclosure, the slice-level change direction information *sliceDirParm* may be used to indicate that the change direction of the weighting value for the first prediction pixel has different possibilities: from left to right, from right to left, from upper to lower, from lower to upper, etc., for example, the weighting value for the first prediction pixel gradually increases from upper left (the calculated distance is negative) to lower right (the calculated distance is positive).

Exemplarily, in the embodiments of the present disclosure, the slice-level change start position information *sliceStartPosParm* may be used to indicate that the gradient start position is a straight line with a slope of $\alpha_1$ and an intercept of $\beta_1$ (or an angle of $\theta_1$ and a distance of $d_1$ represented in a polar coordinate). That is, the straight line is the gradient start position. The upper/lower limit weight value is for the upper left of this position . The weight value for the position specified by the parameter may be determined as the lower limit weight value *minWvalue* in combination with the direction specified by *sliceDirParm.* That is, the gradient lower limit information is determined.

Exemplarily, in the embodiments of the present disclosure, the slice-level change end information *sliceEndPosParm* may be used to indicate that the gradient end position is a straight line with a slope of $\alpha_2$ and an intercept of $\beta_2$ (or an angle of $\theta_2$ and a distance of $d_2$ represented in a polar coordinate). That is, the gradient ends at the straight line. The lower/upper limit weight value is for the lower right of this position. The weight value for the position specified by the parameter may be determined as the upper limit weight value *maxWvalue* in combination with the direction specified by *sliceDirParm.* That is, the gradient upper limit information is determined.

That is, in the embodiments of the present disclosure, the lower limit weight and the upper limit weight may be determined according to the gradient mode information, the change start position information, the change end position information, and the change direction information under a requirement of a predefined calculation accuracy. Also, a distance between a pixel and the gradient start position and a distance between the pixel and the gradient end position may be further determined with reference to the position information of a sample in the current block. The first distance may be determined according to the position information of the sample in the current block and the change start position information, and the second distance may be determined according to the position information of the sample in the current block and the change end position information.

Exemplarily, in the embodiments of the present disclosure, if the gradient mode information indicates that the gradient mode is a linear oblique gradient mode, for each CU in the slice, the first distance $d_{L0s}[x0][y0]$ between the position of the sample in the current block and the gradient start position *sliceStartPosParm,* and the second distance $d_{L0e}[x0][y0]$ between the position of the sample in the current block and the gradient end position *sliceEndPosParm* may be calculated, respectively, so that the weight parameter $w_{L0}[x0][y0]$ for the pixel may be further determined according to the first distance and the second distance. The at least one pixel weight value may be determined according to the first distance, the second distance, the lower limit weight, and the upper limit weight.

Further, in the embodiments of the present disclosure, when the weight parameter $w_{L0}[x0][y0]$ for the pixel may be determined from the first distance $d_{L0s}[x0][y0]$ and the second distance $d_{L0e}[x0][y0]$ according to the formula (12). Here, *maxWvalue* is the upper limit weight, i.e., the gradient upper limit information, and *minWvalue* is the lower limit weight, i.e., the gradient lower limit information

Further, in the embodiments of the present disclosure, for bidirectional prediction, a first prediction weight may be determined firstly according to the first distance, the second distance, the lower limit weight, and the upper limit weight. Then the value of the sum of weights is determined according to the lower limit weight and upper limit weight. Finally, a second prediction weight may be determined based on the first prediction weight and the value of the sum of weights.

It should be noted that, in the embodiments of the present disclosure, if the slice-level weighted prediction is bidirectional weighted prediction, then a value of the sum of the forward weight value and the backward weight value for the pixel is the same as a value of the sum of the upper limit weight value and the lower limit weight value. That is, according to the following formulas, after the value of the sum of the weights *sumValue* is determined, one already determined weight value (such as the forward weight value $w_{L0}[x0][y0]$) for a pixel may be used to determine the other weight value (such as the backward weight value $w_{L1}[x0][y0]$) for the pixel, as shown in the formulas (13) and (14).

Further, in the embodiments of the present disclosure, the at least one weight parameter for the current block may include at least one pixel weight value, or may include at least one pixel offset value. Here, for the pixel offset value, the pixel offset value may be set to a constant for transmission, or the pixel offset value may be acquired by using a determined pixel weight value.

It may be understood that in the embodiments of the present disclosure, at least one pixel offset value of the current block may be determined. Taking bidirectional prediction as an example, the offset parameters (offset values) $o\_L0$ $[x0][y0]$ and $o\_L1[x0][y0]$ may be transmitted separately as constants.

It may be understood that in the embodiments of the present disclosure, at least one pixel offset value may be determined according to at least one pixel weight value. Taking bidirectional prediction as an example, the offset parameters (offset values) $o\_L0[x0][y0]$ and $o\_L1[x0][y0]$ may be linearly related to $w_{L0}[x0][y0]$ and $w_{L1}[x0][y0]$, respectively.

Further, in the embodiments of the present disclosure, when at least one weight parameter for the current block is derived at the CU level, such as BCW weighting based on the pixel level weight, the lower limit weight and the upper limit weight may be determined according to the gradient mode information, gradient slope information, change direction information, and change center position information, under a requirement of a predefined calculation accuracy, and a weight for a change center position may be determined according to the upper limit weight and the lower limit weight. Next, a third distance may be determined according to the position information of the sample in the current block and the weight for the change center position. Finally, at least one pixel weight value may be determined according to the third distance and the weight for the change center position.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameter.

Exemplarily, in the embodiments of the present disclosure, it may be predefined that the lower limit weight is 0 and the upper limit weight is 8. Alternatively, the upper limit weight may be determined to be 16 based on a predefined calculation accuracy. Alternatively, the upper limit weight may be determined to be 32 based on the geometrical mode parameter.

It should be noted that, in the embodiments of the present disclosure, when the CU-level weighting based on the pixel-level weight is performed, several geometrical mode parameters related to the weight, including gradient mode information *modeParm,* CU-level gradient slope information *cbSlopeParm,* CU-level change direction information *cbDirParm,* and CU-level change center position information *cbCenterPosParm,* are determined based on the forward reference block of the current CU, and these geometrical mode parameters are used to determine a comprehensive weight parameter *cbwtParm* for the current CU, which is used to derive the weights $wL0_{ij}$, $wL1_{ij}$ and the offsets $o\_L0_{ij}$, $o\_L1_{ij}$ used in the CU-level bidirectional weighted prediction.

Exemplarily, in the embodiments of the present disclosure, the gradient mode information *modeParm* may be used to indicate that the gradient mode is a single-segment linear oblique gradient mode defined by a geometrical parameter.

Exemplarily, in the embodiments of the present disclosure, the CU-level gradient slope information *cbSlopeParm* may be used to indicate the gradient slope for the gradient mode. For example, *cbSlopeParm* may indicate that the gradient weight value reaches to be maximum or minimum when a distance from a specified position is n pixels.

Exemplarily, in the embodiments of the present disclosure, the CU-level change direction information *cbDirParm* may be used to indicate that a change direction of weighting values for the first prediction pixel has different possibilities: from left to right, from right to left, from upper to lower, from lower to upper, etc. For example, the weighting values for the first prediction pixel gradually increase from upper left (the calculated distance is negative) to lower right (the calculated distance is positive)

Exemplarily, when *cbDirParm* is 1, it is indicated that the weighting values for the first prediction pixel gradually decrease as the distance values change from negative to positive, and when *cbDirParm* is 0, it is indicated that the weighting values for the first prediction pixel gradually increase as the distance values change from negative to positive, and here the value of *cbDirParm* is taken to be 0.

Exemplarily, in the embodiments of the present disclosure, the CU-level change center position information *cbCenterPosParm* may be determined according to the slope and intercept of the center position in the oblique gradient mode. For example, it is determined to be a straight line with a slope $\alpha$ and an intercept $\beta$ (or an angle $\theta$ and a distance d represented in a polar coordinate).

Exemplarily, in the embodiments of the present disclosure, based on the change center position information *cbCenterPosParm,* combined with the information given by *cbDirParm* and *cbSlopeParm,* a position that is -n pixels away from the straight line is a gradient start position, and the lower limit weight min*Wvalue* is for the left or the lower of the start position, that is, the gradient lower limit information is determined. A position that is n pixels away from the straight line is a gradient end position, and the upper limit weight max*Wvalue* is for the right or upper of the end position, that is, the gradient lower limit information is determined. The weights change gradually in the range from the start position to end position.

That is, in the embodiments of the present disclosure, a gradient range [-n, n] and a gradient direction may be determined based on *modeParm, cbSlopeParm,* and *cbDirParm.* Further, the lower limit weight min*Wvalue* and the upper limit weight max*Wvalue* may be determined by using the gradient range [-n, n] and the gradient direction. Then, in the case of linear gradient, a weight for the change center position may be determined based on the upper limit weight max*Wvalue* and the lower limit weight min*Wvalue* and the change center position information *cbCenterPosParm.* The weight *wCenterPos* for the change center position information *cbCenterPosParm* should be an average value of the upper limit weight max*Wvalue* and the lower limit weight min*Wvalue,* as shown in the formula (15).

It is assumed that *minWvalue* is 0, and *maxWvalue* is 1.

Further, in the embodiments of the present disclosure, if the gradient mode information indicates that the gradient mode is a linear oblique gradient mode, a third distance firstly needs to be determined when calculating at least one pixel weight value $w[x0][y0]$ which linearly changes according to the distance. The third distance may be determined according to the position information of the sample in the current block and the change center position information.

Exemplarily, in the embodiments of the present disclosure, for each pixel in the forward reference block of the current CU, a distance parameter L1, that is, the third distance, between a sample in the current block and a pixel determined from the gradient center position *cbCenterPosParm* of the forward reference block is calculated according to the position information of the sample in the current block, as shown in the formula (16).

Here, $\rho$ represents a distance between the gradient center position and an original point. It is assumed that the original point is at the center point of the entire block area, and then, for a block with width cbWidth and height cbHeight, distances dx and dy of the upper left pixel relative to the original point may be shown as formulas (17) and (18).

Then further, it is determined that the third distance L1 may be calculated according to the formula (19). Here, offset values *offsetX* and *offsetY* describe horizontal and vertical components of a distance between the gradient center position line and the original point, respectively.

Further, in the embodiments of the present disclosure, after the third distance is determined, the third distance and the weight for the change center position may be used to finally determine at least one pixel weight value, which includes a first prediction weight value $w_{L0}[x0][y0]$ (for example, a weight for a pixel in a forward reference block or a weight for a pixel in a reference block for intra prediction, etc.,) and a second prediction weight value $w_{L1}[x0][y0]$ (for example, a weight for a pixel in a backward reference block or a weight for a pixel in a reference block for intra prediction, etc.).

Exemplarily, in the embodiments of the present disclosure, the first prediction weight value $w_{L0}[x0][y0]$ may be calculated by using the third distance L1, according to the formulas (20) and (21).

It may be understood that in the embodiments of the present disclosure, in order to ensure the operation accuracy, the intermediate operation result of the above calculation process may be appropriately amplified and restored to an appropriate size before the clip operation, that is, fixed-point qualification may be used in the intermediate operation process, and the amplifying operation may be performed according to the accuracy requirement, for example, as shown in formulas (22) to (24). Here, shift0 is a factor related to data amplification for intermediate operations in order to retain sufficient accuracy.

When the values of n, shift0, and shift1 are fixed, most of the data in the above formulas except x0, *offsetX,* y0 and *offsetY* are constants, and the calculation may be combined and simplified. For example, when max*Wvalue* and n are both powers of 2, the calculation process may be the formulas (25) to (27).

It may be understood that, in the embodiments of the present disclosure, the operation of amplifying the intermediate operation result to ensure accuracy includes the appropriately enlarging of weight itself. The shift1 corresponds to this amplifying operation, and then it is restored to an appropriate pixel value range when the weighted prediction value is calculated below.

Further, in the embodiments of the present disclosure, after the first prediction weight value $w_{L0}[x0][y0]$ (for example, a weight for a pixel in a forward reference block or a weight for a pixel in a reference block for intra prediction, etc.,) is determined, a second prediction weight value $w_{L1}[x0][y0]$ (for example, a weight for a pixel in a backward reference block or a weight for a pixel in a reference block for intra prediction, etc.,) may be further derived by using $w_{L0}[x0][y0]$ according to the formula (28).

Further, in the embodiments of the present disclosure, when deriving at least one weight parameter for the current block in the process of CIIP weighting based on the pixel-level weight, the lower limit weight and the upper limit weight may be determined according to the gradient mode information, the gradient slope information, the change direction information, and the change center position information under the requirement of the predefined calculation accuracy. Then a weight for a change center position may be determined according to the upper limit weight and the lower limit weight. Next, a fourth distance may be determined according to position information of a sample in the current block and the change center position information. Finally, at least one pixel weight value may be determined based on the fourth distance, the lower limit weight, the upper limit weight, and the weight for the change center position.

It may be understood that in the embodiments of the present disclosure, the upper limit weight and the lower limit weight may be determined based on the geometrical mode parameter in combination with the predefined calculation accuracy.

It should be noted that in the embodiments of the present disclosure, the upper limit weight and the lower limit weight may be determined from one or more of the geometrical mode parameters, or may be predefined. That is, the preset upper limit weight and lower limit weight may be directly used without referring to the geometrical mode parameters.

Exemplarily, in the embodiments of the present disclosure, it may be predefined that the lower limit weight is 0 and the upper limit weight is 8. Alternatively, the upper limit weight may be determined to be 16 based on a predefined calculation accuracy. Alternatively, the upper limit weight may be determined to be 32 based on the geometrical mode parameter.

It should be noted that, in the embodiments of the present disclosure, the determination of the CIIP intra prediction weight *wt* based on the pixel level is related to the coding modes of the top and left neighboring blocks of the current CU in addition to *modeParm, cbSlopeParm, cbDirParm* and *cbCenterPosParm* of the current CU. The encoding modes of the neighboring blocks may be identified by two Flags: *isIntraTop* and *isIntraLeft*. Here, when *isIntraTop* is 1, the top neighboring block is available and the coding mode is the intra mode, and when *isIntraLeft* is 1, the left neighboring block is available and the coding mode is the intra mode.

A comprehensive parameter *cbwtParm* is determined by several parameters including *modeParm, cbSlopeParm, cbDirParm* and *cbCenterPosParm,* and the coding mode information *isIntraTop* and *isIntraLef* of neighboring blocks. The weight wt [*x0*][*y0*] for each pixel when the intra mode is adopted for the current block may be determined by using the comprehensive parameter. Here, $x0 = 0...cbwidth-1$, $y0 = 0...cbHeight-1$.

Exemplarily, in the embodiments of the present disclosure, the gradient mode information *modeParm* may be used to indicate that the gradient mode is a single-segment linear oblique gradient mode defined by a geometrical parameter.

Exemplarily, in the embodiments of the present disclosure, the gradient slope information *cbSlopeParm* may be used to indicate the gradient slope of the gradient mode. For example, *cbSlopeParm* may indicate that the gradient weight value reaches to maximum or minimum when a distance from a specified position is 4 pixels.

Exemplarily, in the embodiments of the present disclosure, the change direction information *cbDirParm* may be used to indicate that the change direction of the weighting values for the first prediction pixel has different possibilities: from left to right, from right to left, from upper to lower, from lower to upper, etc. For example, the weighting value for the first prediction pixels gradually increase from upper left (the calculated distance is negative) to lower right (the calculated distance is positive).

For example, when *cbDirParm* is 1, it is indicated that the weighting values for the first prediction pixel gradually decrease as the distance values change from negative to positive, and when *cbDirParm* is 0, it is indicated that the weighting values for the first prediction pixel gradually increase as the distance values change from negative to positive, and here the value of *cbDirParm* is taken to be 0.

Exemplarily, in the embodiments of the present disclosure, the change center position information *cbCenterPosParm* may be determined according to the slope and intercept of the center position in the oblique gradient mode. For example, it is determined to be a straight line with a slope $\alpha$ and an intercept $\beta$ (or an angle $\theta$ and a distance d represented in a polar coordinate).

Exemplarily, in the embodiments of the present disclosure, based on the change center position information *cbCenterPosParm,* combined with the information given by *cbDirParm* and *cbSlopeParm,* a position that is -n pixels away from the straight line is a gradient start position, and the lower limit weight min *Wvalue* is for the left or the lower of the start position, that is, the gradient lower limit information is determined. A position that is n pixels away from the straight line is a gradient end position, and the upper limit weight max*Wvalue* is for the right or upper of the end position, that is, the gradient lower limit information is determined. The weights change gradually in the range from the start position to end position.

That is, in the embodiments of the present disclosure, a gradient range [-n, n] and a gradient direction may be determined based on *modeParm, cbSlopeParm,* and *cbDirParm.* Further, the lower limit weight min*Wvalue* and the upper limit weight max*Wvalue* may be determined by using the gradient range [-n, n] and the gradient direction. Then, in the case of linear gradient, a weight for the change center position may be determined based on the upper limit weight max*Wvalue* and the lower limit weight min*Wvalue* and the change center position information *cbCenterPosParm.* The weight *wCenterPos* for the change center position information *cbCenterPosParm* should be an average value of the upper limit weight max*Wvalue* and the lower limit weight min*Wvalue,* as shown in the formula (29). It is assumed that *minWvalue* is 0, and *maxWvalue* is 1.

Further, in the embodiments of the present disclosure, if the gradient mode information indicates that the gradient mode is a linear oblique gradient mode, a fourth distance firstly needs to be determined when calculating at least one pixel weight value $w[x0][y0]$ which linearly changes according to the distance. The fourth distance may be determined according to the position information of the sample in the current block and the change center position information.

Exemplarily, in the embodiments of the present disclosure, for each pixel in a forward reference block of the current CU, a distance parameter L2, that is, the fourth distance, between a sample in the current block and a pixel determined from the gradient center position *cbCenterPosParm* of the forward reference block is calculated according to the position information of the sample, as shown in the formula (30).

Here, a distance between the gradient center position and an original point. It is assumed that the original point is at the center point of the entire block area, and then, for a block with width cbWidth and height cbHeight, the distances dx and dy of the upper left pixel relative to the original point may be shown as formulas (31) and (32).

Then further, it is determined that the fourth distance L2 may be calculated according to the formula (33).

Here, the offset values *offsetX* and *offsetY* describe the horizontal and vertical components of the distance between the gradient center position line and the original point, respectively.

Further, in the embodiments of the present disclosure, after the fourth distance is determined, the fourth distance, the upper limit weight, lower limit weight and the weight for the change center position may be used to determine at least one pixel weight value, which includes a first prediction weight value $w_{L0}[x0][y0]$ (for example, a weight for a pixel in a forward reference block or a weight for a pixel in a reference block for intra prediction, etc.) and a second prediction weight value $w_{L1}[x0][y0]$ (for example, a weight for a pixel in a backward reference block or a weight for a pixel in a reference block for intra prediction etc.).

Exemplarily, in the embodiments of the present disclosure, the first prediction weight value $w_{L0}[x0][y0]$ may be calculated by using the fourth distance L2 according to the formulas (34) and (35).

Here, the gradient pixels on both sides of the gradient center position are n pixels, and the offset values *offsetX* and *offsetY* of the current CU block are determined according to the size and gradient mode of the current CU block.

It may be understood that in the embodiments of the present disclosure, in order to improve the calculation accuracy, the weight value here may be appropriately multiplied by a coefficient, or shifted left by shift3 bits to amplify. Alternatively, the amplifying of the weight value is pre-considered when specifying min*Wvalue* and max*Wvalue,* for example, they are amplified by $2^{shift3}$ times than the real weights, respectively.

It should be noted that in the embodiments of the present disclosure, for bidirectional weighted prediction, a value of the sum of the forward weight value and the backward weight value for the pixel is the same as a value of the sum of the upper limit weight value and the lower limit weight value. That is, according to the following formulas, after the value of the sum of the weights *sumValue* is determined, one already determined weight value (such as the forward weight value $w_{L0}[x0][y0]$) for a pixel may be used to determine the other weight value (such as the backward weight value $w_{L1}[x0][y0]$) for the pixel, as shown in formulas (36) and (37).

Further, in the embodiments of the present disclosure, the at least one weight parameter for the current block may be a pixel-level weight parameter or a weight parameter for at least one sub-block of the current block. That is, the at least one weight parameter may include a weight value for at least one sub-block of the current block.

It may be understood that in the embodiments of the present disclosure, when the weighting parameter is applied to derive the predicted pixel value, the weighting parameters that change gradually at the pixel level may be selected to perform calculation for the pixels at different positions. In order to reduce calculation complexity, a same method for determining the weight with a unit of sub-blocks (for example, sub-blocks with a size of $2 \times 2$ or $4 \times 4$) is adopted.

Further, in the embodiments of the present disclosure, weighting parameters on a plane may be changed according to a certain geometrical rule with reference to positions of pixels, or may be changed according to combined multiple different geometrical rules. For example, the pixel-level weight value may change with the distance of the pixel from the center change position, and when the distance value is between [0, L1], it is changed in first gradient mode, and when the distance value is between (L1, L2], it is changed in the second gradient mode.

Further, in the embodiments of the present disclosure, not only the pixel-level weight value may change with the distance between the pixel and the center change position, but also different linear or nonlinear gradient modes may be determined for different positions. For example, when the distance value is between [0, L1], the gradient mode is a linear gradient mode, and when the distance is between (L1, L2], the gradient mode is a nonlinear gradient mode, etc.

It may be seen that the encoding and decoding method proposed in the embodiments of the present disclosure may be used for unidirectional prediction or bidirectional prediction. It may be used in the case where all prediction is derived from inter prediction, or in the case where part or all of the predicted pixel values are derived from intra prediction.

It may be understood that in the embodiments of the present disclosure, the case for unidirectional prediction is similar to the WP mode, and pixel-level weighting parameter (weight parameter) for only one prediction source is derived, which may include a weighting coefficient (weight value) and an offset.

It may be understood that in the embodiments of the present disclosure, the case used for bidirectional prediction may be similar to the WP mode, and pixel-level weighting parameters (weight parameters) for two prediction sources may be derived, which may include weighting coefficients (weight values) and offsets. The case used for bidirectional prediction may also be similar to BCW or CIIP, and only pixel-level weighting coefficients (weight values) for two prediction sources are derived.

Further, in the embodiments of the present disclosure, when determining at least one pixel-level weight parameter for the current block, a weight for a pixel may be calculated by using coordinates of the pixel, may be generated by selecting a predefined weight parameter using a preset matrix, or may be derived from the weight parameters for pixels at adjacent top and left positions of the pixel.

That is, in the embodiments of the present disclosure, for position information of one sample in the current block, the pixel weight for the position information of the sample may be determined according to the pixel weight for the position information of other sample adjacent to the position information of the sample.

Exemplarily, in the embodiments of the present disclosure, a weight $w_c$ for one pixel may be derived from the weights wt, $w_l$ for pixels at adjacent top and left positions of the coordinates of the pixel, as shown in the formula (38).

In operation 203, a prediction value of the current block is determined based on the at least one reference prediction value and the at least one weight parameter.

In the embodiments of the present disclosure, after determining at least one reference prediction value of the current block according to the information of at least one motion vector and determining at least one weight parameter for the current block according to the type indication parameter and/or the geometrical mode parameter, the prediction value of the current block may be further determined based on the at least one reference prediction value and the at least one weight parameter.

Further, in the embodiments of the present disclosure, after determining at least one weight parameter for the current block including at least one pixel weight value, or including at least one pixel weight value and at least one pixel offset value, the prediction process may be performed based on the at least one pixel weight value (or at least one pixel weight value and at least one pixel offset value) and at least one reference prediction value of the current block, to obtain the prediction value of the current block.

It may be understood that in the embodiments of the present disclosure, in the process of calculating the prediction value for the slice-level weighted prediction, the prediction value of the current block may be determined according to at least one reference prediction value, at least one pixel weight, and at least one pixel offset value.

Exemplarily, in the embodiments of the present disclosure, after acquiring a syntax element for the slice-level weighted prediction and the reference pixel value (reference prediction value) of each CU of the current slice, in a case of unidirectional prediction, taking forward prediction as an example, the weighted prediction process may be performed according to the formula (39) to determine the prediction value $Pred_{WP}$ of the current block.

Exemplarily, in the embodiments of the present disclosure, after acquiring the syntax element for the slice-level weighted prediction and the reference pixel value (reference prediction value) of each CU of the current slice, in case of unidirectional prediction, taking the backward prediction as an example, the weighted prediction processing may be performed according to the formula (40) to determine the prediction value $Pred_{WP}$ of the current block.

Exemplarily, in the embodiments of the present disclosure, after acquiring the syntax element for the slice-level weighted prediction and the reference pixel value (reference prediction value) of each CU of the current slice, in case of bidirectional prediction, the weighted prediction process may be performed according to the formula (41) to determine the prediction value $Pred_{WP}$ of the current block.

It should be noted that in the embodiments of the present disclosure, for a luma block, the formula (42) is provided.

It should be noted that in the embodiments of the present disclosure, for a chroma block, the formula (43) is provided.

Here, *PredSamplesL*0 and *PredSamplesL*1 are reference pixel values in the reference lists List0 and List1, respectively. $w_{L0}[x0][y0]$ and $w_{L1}[x0][y0]$ are pixel-level weight values for the forward reference block and the backward reference block, respectively, i.e., pixel-level weight values for the current block, and o_L0[x0][y0] and o_L1[x0][y0] represent corresponding offsets, i.e., pixel-level offset values of the current block.

It may be understood that in the embodiments of the present disclosure, in order to improve the prediction accuracy, the intermediate operation result has higher accuracy than the reference pixel value. *log*2_*weight_denom* and *chroma_log*2_*weight_denom* represent an improved accuracy of weighting coefficients. *shift*1 is an improved accuracy of reference pixel value in the calculation process of sub-pixel interpolation (the whole pixel value is also amplified). Clip () operation is to clamp the pixel value within a valid range. For example, the valid value of 8 bits is [0, 255] and the valid value of 10 bits is [0, 1023].

It may be understood that in the embodiments of the present disclosure, for the BCW weighting based on the pixel-level weight, in the process of calculating the prediction value, the prediction value of the current block may be determined according to at least one reference prediction value and at least one pixel weight.

It should be noted that, in the embodiments of the present disclosure, both the forward reference list List0 and the backward reference list List1 are used for bidirectional prediction. The information of the forward motion vector MV0 in the forward reference list List0 is used for performing motion compensation prediction to obtain the forward prediction value (forward reference value) PredSamplesL0, and information of a backward motion vector MV1 in the backward reference list List1 is used for performing motion compensation prediction to obtain the backward prediction value (backward reference value) PredSamplesL1.

It may be understood that in the embodiments of the present disclosure, the BCW is initiated only for the CU adopting the bidirectional prediction, only a small number of predefined weights are used, and indexes of which are encoded.

Exemplarily, in the embodiments of the present disclosure, when BCW with pixel-level weights is adopted, the prediction value of the current block, that is, the weighted prediction value is calculated according to the formula (44).

Here, *PredSamplesL*0 and *PredSamplesL*1 are reference pixel values in the reference lists List0 and List1, respectively. $w_{L1}[x0][y0]$ is a weight for a backward reference pixel value at a relative position $(x0, y0)$ in a block. $w_{L0}[x0][y0]$ is a weight for a forward reference pixel value at the relative position $(x0, y0)$ in the block. Here, $x0 = 0...cbWidth-1$, $y0 = 0...cbHeight -1$, and maxTempBitDepth is the maximum bit depth allowed during the operation intermediate process.

It may be understood that in the embodiments of the present disclosure, for the CIIP weighting based on the pixel-level weight, in the process of calculating the prediction value, the prediction value of the current block may be determined according to at least one reference prediction value and at least one pixel weight.

It should be noted that, in the embodiments of the present disclosure, when calculating the CIIP weighted prediction value based on the pixel-level weight, the used $P_{intra}$ is an intra prediction value obtained after the normal intra prediction process is performed on the current block through the Planar mode, the $P_{inter}$ is an inter prediction value, and *wt*[x0][y0] is a weight for the intra prediction.

Exemplarily, in the embodiments of the present disclosure, when CIIP with pixel-level weight is adopted, the prediction value of the current block, that is, the weighting prediction value $Predsamples_{CIIP}$ is calculated according to the formula (45).

Here, $w_{L0}[x0][y0]$ is a weight for the forward reference pixel value, and $w_{L1}[x0][y0]$ is a weight for the backward reference pixel value, shift3 is a parameter that is obtained by amplifying a weight value in the previous operation to improve the operation accuracy, and the right shift is used to restore the prediction pixel value to a reasonable value range. If no amplification, $Predsamples_{CIIP}$ may be simply written as the formula (46).

Thus, in the embodiments of the present disclosure, when the encoding and decoding method proposed in the present disclosure is applied to weighting based on slice level, two Inter prediction weighting at the CU level (BCW) and one Inter and one Intra prediction weighting at the CU level (CIIP), respectively, the determination of pixel-level weighting parameters may be completed, thus the encoding efficiency and performance of weighted prediction can be improved.

That is, in the embodiments of the present disclosure, since the weight value at the pixel level is used in the weighted prediction process, the weight value for the entire forward reference block or the backward reference block is no longer fixed to a fixed value, and the weighting parameter for the current Slice or the CU may be adaptively adjusted according to factors such as brightness changes in a sequence of contents. That is, the weight value at the pixel level is used to perform the inter weighted prediction instead of the weight value at each reference block level being a fixed value, which further improves the accuracy of the inter weighted prediction, and thus can improve the encoding efficiency for the weighted prediction.

It should be noted that, in the embodiments of the present disclosure, although slice-level weighting, two Inter prediction weighting at the CU level, and one Inter and one Intra prediction weighting at the CU level are illustratively described, the encoding and decoding method proposed in the embodiments of the present disclosure does not have a different design for the slice level or the CU level alone, and does not have a different design when each prediction participating in the weighting comes from the Inter or Intra prediction method.

The embodiments of the present disclosure propose an encoding method. An encoder may determine information of at least one motion vector of a current block, and a type indication parameter and/or a geometrical mode parameter; determine at least one reference prediction value of the current block according to the information of at least one motion vector; determine at least one weight parameter for the current block according to the type indication parameter and/or the geometrical mode parameter; and determine a prediction value of the current block based on the at least one reference prediction value and the at least one weight parameter. It may be understood that in the embodiments of the present disclosure, during coding and decoding process, the pixel-level weight parameter for the current block may be determined from the type indication parameter and/or the geometrical mode parameter, and then the prediction process may be performed on the current block according to the pixel-level weight parameter. It may be seen that in the embodiments of the present disclosure, the weight used for the prediction process is no longer fixed, but the pixel-level weight value adapted to the change of the pixels is selected, which greatly improves the accuracy of the weighted prediction, thereby improving the encoding efficiency and the compression performance.

Based on the above embodiments, in the encoding and decoding method proposed in the embodiments of the present disclosure, a pixel-level weighting parameter may be determined for a reference block during weighted prediction. The solution may be applied to various inter weighted prediction technology scenarios. The pixel-level weighting parameter is derived from a small number of control parameters. The control parameters include a type index (type indication parameter) and/or a geometrical parameter (type indication parameter). The geometrical parameter may be given directly according to the geometrical meaning, or a candidate in a selectable set may be given in the form of indexes.

The type index parameter is used to select the type of the pixel-level weighting parameter. The types of pixel-level weighting parameter may include, but are not limited to, the following types: a weighting parameter defined by a pre-stored matric, a weighting parameter defined by the geometrical parameter.

In the weighting mode defined by the pre-stored matrix, the number and dimensions of the pre-defined matrixes are limited. For a weighting matrix with predefined dimensions, it may be applied to multiple areas with different dimensions and different accuracy requirements through interpolation and other manners.

The weighting parameter defined by the geometrical parameter refers to the weighting parameter calculated from the geometrical parameter. The weighting parameters on the plane change according to a certain geometrical rule with the position of the pixels. Such a weighting parameter *wtParm* changing according to a certain geometrical rule may be expressed by at least one of several parameters including gradient mode information *modeParm,* gradient slope information *slopeParm,* change direction information *dirParm,* change start position information *startPosParm,* change center position information *centerPosParm,* change end position information *endPosParm,* gradient upper/lower limit information *minParm*/*maxParm,* and change segment information *segParm* .

The gradient mode information *modeParm* may indicate the gradient mode, and indicate the type of the gradient mode, which includes, but is not limited to, a horizontal gradient weighting, a vertical gradient weighting, an oblique gradient weighting, a radiation gradient weighting, an affine gradient weighting, and the like.

When the weighting parameter may be obtained from a pre-stored matrix or be calculated from a gradient weighting mode defined by a geometrical parameter, the weighting mode indicated by an index is as shown in table 1. When the weighting parameter is calculated only from a certain gradient weighting mode defined by the geometrical parameter, the weighting mode indicated by an index is as shown in table 2. When the weighting parameter is calculated by a certain nonlinear weighting mode defined by the geometrical parameter, the weighting mode indicated by the index is as shown in table 3. When the weighting parameter is calculated from a certain nonlinear weighting mode defined by the geometrical parameter, the weighting mode indicated by an index is as shown in table 4.

The gradient slope *slopeParm* may indicate the speed of change of the gradient weight parameters with the distance between the pixel and the specified position (the position of the point or line). For example, the linear gradient slope is indicated by an index. Specifically, 0 represents no gradient and direct jump, m indicates that the gradient weight parameters reach the maximum or minimum when the distance from the specified position reaches $(2^{m-1})/M$ pixel, the gradient weight parameters are linearly gradient when closer to the specified position, and remain the maximum or minimum when farther away from the specified position. Here, the value of m may be 2, 1, 1/2, etc. For example, the linear gradient slope is indicated by an index. Specifically, 0 represents that w is a constant, with no gradient or jump, m indicates that the gradient weight parameters reach the maximum or minimum when the distance reaches t width/$(2^{m-1})$. Here, width is the width corresponding to a unit (slice width or coding block width) for which the gradient weight parameter is calculated, and t is a constant.

The change direction information *dirParm* may indicate a direction in which the gradient slope of the weight parameter for the first prediction pixel changes, for example, 0 represents from minimum to maximum, and 1 represents from maximum to minimum.

The change start position information *startPosParm* may include different numbers of parameters according to different gradient types. For example, in horizontal gradient mode, the change start position information includes a coordinate position at the a horizontal axis. For example, in the oblique gradient mode, the change start position information includes a set of parameters representing a straight line in a Cartesian coordinate system, one of which represents a slope and the other represents an intercept. For example, in the oblique gradient mode, the change start position information includes a set of parameters representing a straight line in a polar coordinate system, one of which represents an angle and the other represents a distance. For example, in the radiation gradient mode, the change start position information includes a set of parameters representing a radiation shape and its corresponding position. For example, in the case that the radiation shape is a circle, when the start position is a point, the set of parameters include a horizontal and a vertical coordinate in the Cartesian coordinate system, or includes an angle and a distance in the polar coordinate system. For example, in affine gradient mode, the change start position information includes a set of parameters representing positions of multiple control points or positions of multiple control lines. It should be noted that the oblique gradient may include horizontal and vertical gradient modes.

The change center position information *centerPosParm* indicates a position where a median value of the weight parameters for a gradient area is located (when the gradient interval is from 0 to 1, the median value is 0.5), and the weight parameter gradually increases or decreases to both sides based on this position. The change center position information may include different numbers of parameters according to different gradient types. For example, in the horizontal gradient mode, the change center position information includes a coordinate position at a horizontal axis. For example, in the oblique gradient mode, the change center position information includes a set of parameters representing a straight line in a Cartesian coordinate system, one of which represents a slope and the other represents an intercept. For example, in the oblique gradient mode, the change center position information includes a set of parameters representing a straight line in a polar coordinate system, one of which represents an angle and the other represents a distance. For example, in the radiation gradient mode, the change center position information includes a set of parameters representing a radiation shape and its corresponding position. For example, in the case that the radiation shape is a circle, the center positions form a circle, and the set of parameters includes a horizontal and a vertical coordinate and a radius in the Cartesian coordinate system, or includes position information of a center point and a radius in the polar coordinate system. When the center point is aligned with the original point, the set of parameters includes only radius information. For example, in the affine gradient mode, the change center position information includes a set of parameters representing positions of multiple control points or positions of multiple control line .

The change end position information *endPosParm* may include different numbers of parameters according to different gradient types. For example, in the horizontal gradient mode, the change end position information includes a coordinate position at a horizontal axis. In the oblique gradient mode, the end position information includes a set of parameters representing a straight line in a Cartesian coordinate system, one of which represents a slope and the other represents an intercept. In the oblique gradient mode, the change end position information includes a set of parameters representing a straight line in a polar coordinate system, one of which represents an angle and the other represents a distance. In the radiation gradient mode, the end position information includes a set of parameters representing a radiation shape and its corresponding position. For example, in the case that radiation shape is a circle, the end positions form a circle, the end position information refers to a horizontal and a vertical coordinate and a radius in the Cartesian coordinate system, or the end position information refers to position information of a center point and radius in the polar coordinate system. When the center point is aligned with the original point, the end position information includes only the radius information. In the affine gradient mode, the end position information includes a set of parameters representing positions of multiple control points or positions of multiple control lines.

The gradient upper/lower limit information min *Wvalue* / max *Wvalue* specifically refers to the upper/lower limit information of the weight parameter. For example, values corresponding to the weights 0 and 1 under a corresponding accuracy requirement (when the accuracy reaches the third place after the decimal point in binary representation, then after fixed-point quantization, the lower limit 0 corresponds to 0, and the upper limit 1 corresponds to 8; when the accuracy reaches the fifth place after the decimal point in binary representation, then after fixed-point quantization, the lower limit 0 corresponds to 0 and the upper limit 1 corresponds to 32). The lower limit of the weighting parameter generally corresponds to 0. That is, the reference pixel at the corresponding position is not used to perform the weighting. The upper limit of weighting parameter generally corresponds to 1. That is, only the reference pixel at corresponding position is used to perform weighting. The gradient upper/lower limit information min *Wvalue* / max *Wvalue* may not be a weight value corresponding to 0 or 1. For example, it may be a value corresponding to 0.2 or 0.4 under a corresponding accuracy requirement.

The changing segment information *segParm* may indicate information related to a continuous gradient composed of multiple segments, and may include information whose meaning covers the above-described multiple parameters. For example, the change segment information includes information of multiple segments, such as gradient slope information, change direction information, change start position information, and change end position information for each segment. Alternatively, the change segment information *segParm* may include information of multiple segments, such as change direction information, change start position information, change end position information, gradient upper limit and gradient lower limit information for each segment.

Each type of the above-described information may be represented in an index form through quantization. For example, different possibilities may be specified for the change start position, the change center position, and the change end position and all possible lines are predefined as an ordered set, so these positions may be specified by only one index.

The derivation of the weighting parameters may be implemented at different levels, for example at the slice level or at the CU/coding block level. The weighting parameter has certain accuracy and upper and lower limits. The weighting parameters with sub-pixel accuracy may be obtained by performing interpolation filtering for the already derived whole pixel weighting parameter.

This solution may be used for unidirectional prediction and bidirectional prediction. It may be used in the case where all prediction is derived from inter prediction, or in the case where part or all of the predicted pixel values are derived from intra prediction.

The case for unidirectional prediction is similar to that for the WP mode, pixel-level weighting parameter for only one prediction source is derived, which includes a weighting coefficient and an offset.

The case for the bidirectional prediction may be similar to that for the WP mode, pixel-level weighting coefficients and offsets may be derived for two prediction sources. Alternatively, the case for the bidirectional prediction may be similar to that for BCW or CIIP, only pixel-level weighting coefficients for two prediction sources may be derived.

In the encoding and decoding according to the embodiments of the present disclosure, taking the bidirectional prediction at CU/coding block level as an example, the weighted prediction processes according to the embodiments of the present disclosure are as follows. Information of the forward motion vector MV0 and information of backward motion vector MV1 of the current block are acquired firstly. Then, MV0 and MV1 are used to respectively perform motion compensation, so as to obtain the forward prediction value PredSampleL0 and backward prediction value PredSampleL1 of the current block. Next, the geometrical parameters of the current block may be used to determine the pixel-level weights wL0ij, wL1ij for the forward prediction block and the backward prediction block, or to determine wL0ij, wL1ij, and the offsets oL0ij, oL1ij. Here, one or more of the gradient slope parameter slopeParm, the change direction parameter dirParm, the change segment parameter segParm, the change start position parameter startPosParm, the change center position parameter centerPOsParm, and the change end position parameter endPosParm may be determined firstly, and then the pixel-level weights wL0ij, wL1ij for the forward prediction and backward prediction, or wL0ij, wL1ij and the offsets oL0ij, oL1ij are determined according to the acquired one or more parameters. Finally, weighted prediction process may be performed, that is, luma weighted prediction and chroma weighted prediction may be performed sequentially.

Hereinafter, specific details of the present technical solution are described by taking technologies similar to three weighting technologies, i.e., slice-level weighted prediction, BCW, and CIIP, respectively, as examples.

For the Slice-level weighting based on the pixel-level weight, in the present technical solution, six parameters *modeParm , sliceDirParm , sliceStartPosParm, sliceEndPosParm, minWvalue* and *maxWvalue ,* related to weight are determined for the current Slice through the Slice-level weighting based on the pixel-level weight. A comprehensive weight parameter *slicewtParm* may be determined for the current Slice by using the six parameters. The weight $wLX_{ij}$ and offset $o\_LX_{ij}$ used in the Slice-level weighted prediction are derived from the parameter. X is the reference list index. When X is 0, it represents the forward reference list L0, otherwise it represents the backward reference list L1.

For example, information indicated by the acquired parameter is as follows:

*modeParm* indicates that the mode is a single-segment linear oblique gradient mode defined by the geometry parameter.

*sliceDirParm* indicates that the change direction of the weighting value for the first prediction pixel has different possibilities: from left to right, from right to left, from upper to lower, from lower to upper, etc., for example, the weighting value for the first prediction pixel gradually increases from upper left (the calculated distance is negative) to lower right (the calculated distance is positive).

*sliceStartPosParm* indicates that the gradient start position is a straight line with a slope of $\alpha_1$ and an intercept of $\beta_1$ (or an angle of $\theta_1$ and a distance of $d_1$ represented in a polar coordinate). That is, the gradient is started from the straight line, and the upper/lower limit weight value is for the upper left of this position. The weight value for the position specified by the parameter is the lower limit weight value *minWvalue* in combination with the direction specified by *sliceDirParm.*

*sliceEndPosParm* indicates that the gradient end position is a straight line with a slope of $\alpha_2$ and an intercept of $\beta_2$ (or an angle of $\theta_2$ and a distance of $d_2$ represented in a polar coordinate). That is, the gradient ends at the straight line. The lower/upper limit weight value is for the lower right of this position. The weight value for the position specified by the parameter is the upper limit weight value *maxWvalue* in combination with the direction specified by *sliceDirParm .*

Then weight w[x0][y0] which changes linearly according to the distance may be calculated by the following operations.

For each CU in the Slice, a distance $d_{L0s}[x0][y0]$ between a position of a sample in the current block and the gradient start position *sliceStartPosParm,* a distance $d_{L0e}[x0][y0]$ between the position of the sample in the current block and the gradient end position *sliceEndPosParm* are respectively calculated, and the weight parameter $w_{L0}[x0][y0]$ of the pixel is determined according to the distances, as shown in the following formula:

$$w_{L0}\left[x0\right]\left[y0\right]=\begin{cases}\min Wvalue, d_{L0s}\left[x0\right]\left[y0\right]<0\\ \min Wvalue+\dfrac{d_{L0s}\left[x0\right]\left[y0\right]\left(\max Wvalue-\min Wvalue\right)}{d_{L0s}\left[x0\right]\left[y0\right]-d_{L0e}\left[x0\right]\left[y0\right]}, d_{L0s}\left[x0\right]\left[y0\right]\geq 0 \text{ and } d_{L0e}\left[x0\right]\left[y0\right]\leq 0\\ \max Wvalue, d_{L0e}\left[x0\right]\left[y0\right]>0\end{cases}$$

$$(47)$$

When the Slice weighted prediction is the BCW:

$$sumValue = minWvalue + maxWvalue$$
$$w_{L1}\left[x0\right]\left[y0\right] = sumValue - w_{L0}\left[x0\right]\left[y0\right]$$

$$(48)$$

In the embodiments of the present disclosure, the offset parameters $o\_L0[x0][y0]$ and $o\_L1[x0][y0]$ may be transmitted separately as constants, or may be linearly related to $w_{L0}[x0][y0]$ and $w_{L1}[x0][y0]$. If the acquisitions of the syntax element of the Slice-level weighted prediction and the reference pixel value of each CU of the current Slice are not changed, the acquisition process of the Slice weighted prediction value is as follows.

For the unidirectional prediction, the following formula (49) or (50) is provided.

$$Pred_{WP} = Clip\left(\left(\left(PredSampleL0 \cdot w_{L0}[x0][y0] + 2^{\log_2 W_d - 1}\right)? \quad \log_2 W_d\right) + o\_L0[x0][y0]\right) \tag{49}$$

$$Pred_{WP} = Clip\left(\left(\left(PredSampleL1 \cdot w_{L1}[x0][y0] + 2^{\log_2 W_d - 1}\right)? \quad \log_2 W_d\right) + o\_L1[x0][y0]\right) \tag{50}$$

For the bidirectional prediction, the following formula (51) is provided.

$$Pred_{WP} = Clip\left(\left(\begin{array}{l}0redSampleL0 \cdot w_{L0}[x0][y0] + PredSampleL1 \cdot w_{L1}[x0][y0] + \\ \left(o\_L0[x0][y0] + o\_L1[x0][y0] + 1\right) = \quad \log_2 W_d\end{array}\right)? \quad \left(\log_2 W_d + 1\right)\right) \tag{51}$$

For a luma block, the following formula (52) is provided.

$$\log_2 W_d = luma\_log2\_weight\_denom + shift1 \tag{52}$$

For a chroma block, the following formula (53) is provided.

$$\log_2 W_d = chroma\_log2\_weight\_denom + shift1 \tag{53}$$

Here, *PredSamplesL0* and *PredSamplesL1* are reference pixel values in the reference lists list0 and list1, respectively. $w_{L0}[x0][y0]$ and $w_{L1}[x0][y0]$ are pixel-level weight values for the forward reference block and backward reference block, respectively. $o\_L0[x0][y0]$ and $o\_L1[x0][y0]$ represent corresponding offsets. In order to improve the prediction accuracy, the intermediate operation result has higher accuracy than the reference pixel value. *log2 _weight_denom* and *chroma _log2 _weight _denom* represent the improved accuracy of weighting coefficients. *shift*1 is the improved accuracy of reference pixel value in the calculation process of sub-pixel interpolation (the whole pixel value is also amplified). Clip () operation is used to clamp the pixel value within the valid range, such as the valid value of 8 bits is [0, 255] and the valid value of 10 bits is [0, 1023].

For the BCW weighting based on the pixel-level weight, for example, four parameters, *modeParm, cbSlope-Parm, cbDirParm* and *cbCenterPosParm,* related to weight are determined for the current CU through the BCW weighting based on pixel-level weight. A comprehensive weight parameter *cbwtParm* may be determined for the current Slice by using the four parameters. The weights wL0ij, wL1ij and offsets o_L0ij, o_L1ij used in CU-level bidirectional weighted prediction are derived from the parameter.

*modeParm* represents that the mode is a single-segment linear oblique gradient mode.

*cbSlopeParm* represents the gradient slope of the gradient mode. The gradient weight value reaches to maximum or minimum when a distance from a specified position is n pixels.

*cbDirParm* represents that the weighting values for the first prediction pixel gradually increase from left or lower (the calculated distance is negative) to right or upper (the calculated distance is positive). For example, when *cbDirParm* is 1, it is indicated that the weighting values for the first prediction pixel gradually decrease as the distance values change from negative to positive, and when *cbDirParm* is 0, it is indicated that the weighting values for the first prediction pixel gradually increase as the distance values change from negative to positive, and here the value of *cbDirParm* is taken to be 0.

*cbCenterPosParm* determines the gradient center position according to the slope and intercept of the center position in the oblique gradient mode. The gradient center position is a straight line with a slope $\alpha$ and an intercept $\beta$ (or an angle $\theta$ and a distance d represented in a polar coordinate). Combined with the information given by *cbDirParm* and *cbSlopeParm,* a position that is -n pixels away from the straight line is a gradient start position, and the lower limit weight is for the left or the lower of the start position. A position that is n pixels away from the straight line is a gradient end position, and the upper limit weight is for the right or upper of the end position. The weights change gradually in the range from the start position to end position.

The gradient range [-n, n] and the gradient direction may be determined according to the two parameters *cbSlopeParm* and *cbDirParm*.

According to the upper limit max*Wvalue* and lower limit min*Wvalue*, in the case of linear gradient, it may be known that the weight value *wCenterPos* at the gradient center position *cbCenterPosParm* should be the average value of the upper limit weight max*Wvalue* and lower limit weight min*Wvalue,* that is,

$$wCenterPos = \left(maxWvalue + minWvalue + 1\right) ? \quad 1 \tag{54}$$

It is assumed that *minWvalue* is 0, and *maxWvalue* is 1. The weight value *w*[*x*0][*y*0] which linearly changes according to the distance may be calculated by the following operations.

For each pixel in the forward reference block of the current CU, the distance parameter L between a sample in the current block and a pixel determined from the gradient center position *cbCenterPosParm* of the forward reference block is calculated according to the position information of the sample in the current block.

$$L = x0 * \cos\partial - y0 * \sin\partial + \rho \tag{55}$$

Here, $\rho$ represents the distance between the gradient center position and the original point.

It is assumed that the original point is at the center point of the entire block area, and then, for a block with width cbWidth and height cbHeight, the distances dx and dy of the upper left pixel relative to the original point relative to the upper left pixel may be shown as follows.

$$dx = cbWidth/2\text{-}0.5 \text{ pixels} \tag{56}$$

$$dy = cbHeight/2\text{-}0.5 \text{ pixels} \tag{57}$$

The distance L may be calculated by the following formula:

$$L = \left(x0 + offsetX + 0.5\right) * \cos\partial - (y0 + offsetY + 0.5) * \sin\partial \tag{58}$$

Here, the offset values *offsetX* and *offsetY* describe horizontal and vertical components of a distance between the gradient center position line and the original point, respectively.

The weight value $w_{L0}$[*x*0][*y*0] for the pixel of the forward reference block is determined according to the parameter (i.e. the distance L), and the weight value is acquired as shown in the following formula:

$$wl = cbDirParm?\left(n + L\right):\left(n - L\right)$$
$$w_{L0}\left[x0\right]\left[y0\right] = Clip3(0,1, \quad wl * wCenterPos / n) \tag{59}$$

In order to ensure the operation accuracy, the intermediate operation results of the above calculation process may be appropriately amplified and restored to an appropriate size before the clip operation, that is, the intermediate operation process may be fixed-point, and the amplifying operation may be performed according to the accuracy requirement. For example,

$$L = \left(\left(x0 + offsetX\right) << 1 + 1\right) * (\cos\partial * 2^{shift0}) - ((y0 + offsetY) << 1 + 1) * (\sin\partial * 2^{shift0})$$
$$wl = cbDirParm?\left(n << (shift0 + 1) + L\right):\left(n << (shift0 + 1) - L\right) \tag{60}$$
$$w_{L0}\left[x0\right]\left[y0\right] = Clip3(0,1 << shift1, \left(\left(wl * wCenterPos\right) >> (shift0 + 1)\right) / n)$$

Here, shift0 is a factor related to data amplification for intermediate operations in order to retain sufficient accuracy.

When the values of n, shift0, and shift1 are fixed, most of the data in the above formulas except x0, offsetX, y0 and offsetY are constants, and the calculation may be combined and simplified. For example, when max*Wvalue* and n are both powers of 2, the calculation process may become:

$$L1 = \left( (x0 + offsetX) << 1 + 1 \right) * (\cos \partial * 2^{shift0}) - ((y0 + offsetY) << 1 + 1) * (\sin \partial * 2^{shift0})$$

$$wl = cbDirParm ? \left( n << (shift0 + 1) + L1 \right) : \left( n << (shift0 + 1) - L1 \right) \qquad (61)$$

$$w_{L0}[x0][y0] = Clip3(0, 1 << shift1, \; wl >> (shift0 + 1 + \log_2 n - \log_2 wCenterPos))$$

In the embodiments of the present disclosure, the operation of amplifying the intermediate operation result to ensure accuracy includes the appropriately amplifying of weight itself. The shift1 corresponds to this amplifying operation, and then the weight is restored to an appropriate pixel value range when the weighted prediction value is calculated below.

The weight value of the pixel for the backward reference block may be obtained by the weight for the forward reference block, that is,

$$w_{L1}[x0][y0] = 1 << shift1 - w_{L0}[x0][y0] \qquad (62)$$

For the bidirectional prediction, both the forward reference list List0 and the backward reference list List1 are used. The information of the forward motion vector MV0 in the forward reference list List0 is used to perform motion compensation prediction to obtain the forward prediction value PredSamplesL0, and the information of the backward motion vector MV1 in the backward reference list List1 is used to perform motion compensation prediction to obtain the backward prediction value PredSamplesL1.

The BCW is initiated only for the CU adopting the bidirectional prediction, only a small number of predefined weights are used, and the indexes of which are encoded.

When BCW with pixel-level weight is adopted, the weighted prediction value is:

$$\Pr edSamples = Clip\left( \left( \begin{array}{c} \Pr edSamplesL0 \; \times \; w_{L1}[x0][y0] + \\ \Pr edSamplesL1 \; \times \; w_{L0}[x0][y0] + offset1 \end{array} \right) >> (shift1 + shift2) \right)$$

$$offset1 = 1 << (shift1 + shift2 - 1) \qquad (63)$$

$$shift2 = Max(2, \max TempBitDepth - bitDepth)$$

Here, *PredSamplesL*0 and *PredSamplesL*1 are reference pixel values in the reference lists list0 and list1, respectively. *w*[*x*0][*y*0] is a weight for a backward reference pixel value at a relative position (*x*0, *y*0) in a block. (*sumWvalue* - *w*[*x*0][*y*0]) is a weight for a forward reference pixel value at the relative position (*x*0, *y*0) in a block. Here, *x*0 = 0...cbWidth-1, *y*0 = 0...cbHeight -1 , and maxTempBitDepth is the maximum bit depth allowed by the operation intermediate process

The determination of the CIIP intra prediction weight wtbased on the pixel level is related to the encoding modes for the top and left neighboring blocks of the current CU in addition to *modeParm, cbSlopeParm, cbDirParm* and *cbCenterPosParm* of the current CU. Coding modes for the neighboring blocks may be identified by two Flags: *isIntraTop* and *isIntraLeft*. Here, when *isIntraTop* is 1, the upper neighboring block is available and the coding mode is the intra mode, and when *isIntraLeft* is 1, the left neighboring block is available and the coding mode is the intra mode. A comprehensive parameter *cbwtParm* is determined by several parameters including *modeParm, cbSlopeParm, cbDirParm* and *cbCenterPosParm,* and the encoding mode information *isIntraTop* and *isIntraLef* of neighboring blocks. The weight wt[*x*0][*y*0] for each pixel when the intra mode is adopted for the current block may be determined by using the comprehensive parameter. Here, *x*0 = 0...cbWidth-1, *y*0 = 0...cbHeight-1.

For example, the acquired parameter indication information is as follows.

*modeParm* indicates that the mode is a single-segment linear oblique gradient mode.

*cbSlopeParm* indicates that the gradient weight value reaches to maximum or minimum when a distance from a specified position is 4 pixels.

*cbDirParm* indicates that the weighting value for the first prediction pixel gradually increases from upper left (the calculated distance is negative) to lower right (the calculated distance is positive).

*cbCenterPosParm* indicates the gradient center position according to the slope and intercept of the center position in the oblique gradient mode. For example, the gradient center position is a straight line with a slope α and an intercept β (or an angle θ and a distance d represented in a polar coordinate). Combined with the information given by *cbDirParm* and *cbSlopeParm,* a position that is -n pixels away from the straight line is a gradient start position, and the lower limit weight is for the left or the lower of the start position. A position that is n pixels away from the straight line is a gradient end position, and the upper limit weight max*Wvalue* is for the right or upper of the end position. The weights change gradually in the range from the start position to end position.

Then the weight which changes linearly according to the distance may be calculated by the following operations.

A gradient range [-n, n] and a gradient direction are determined according to the two parameters *cbSlopeParm* and *cbDirParm.*

A weight upper limit max*Wvalue* and a weight lower limit min*Wvalue* are adaptively derived according to the derived gradient range [-n, n].

It is ensured that the weight value *wCenterPos* for the gradient center position *cbCenterPosParm* is an average value of the weight upper limit max*Wvalue* and weight lower limit min*Wvalue,* that is,

$$wCenterPos = (maxWvalue + minWvalue) ? \ 1 \tag{64}$$

According to the values of the above variables, the weight for each pixel is calculated as follows.

For each pixel point in the forward reference block of the current CU, a distance parameter L between a sample in the current block and a pixel determined from the gradient center position *cbCenterPosParm* of the forward reference block is calculated according to the position information of the sample in the current block:

$$L = x0 * \cos\partial - y0 * \sin\partial + \rho \tag{65}$$

Here, $\rho$ represents a distance between the gradient center position and an original point. It is assumed that the original point is at the center point of the entire block area, and then, for a block with width cbWidth and height cbHeight, the distances of the upper left pixel relative to the original point may be shown as follows:

$$dx = cbWidth/2 - 0.5 \text{ pixels} \tag{66}$$

$$dy = cbHeight/2 - 0.5 \text{ pixels} \tag{67}$$

The distance may be calculated by the following formula:

$$L = (x0 + offsetX + 0.5) * \cos\partial - (y0 + offsetY + 0.5) * \sin\partial \tag{68}$$

The offset values *offsetX* and *offsetY* describe horizontal and vertical components of the distance between the gradient center position line and the original point, respectively. A weight value $w_{L0}[x0][y0]$ for a pixel of a forward reference block is determined according to the parameter (i.e. offset values), and the weight value is acquired according to the following formula. Here, the gradient pixels on both sides of the gradient center position are n pixels, and the offset values *offsetX* and *offsetY* of the current CU block is determined according to the size and gradient mode of the current CU block.

$$wl = cbDirParm ? (n + L) : (n - L)$$
$$w_{L0}[x0][y0] = minWvalue + Clip3(0, \ maxWvalue - minWvalue, \tag{69}$$
$$wl * (wCenterPos - \min Wvalue) / n)$$

In order to improve the calculation accuracy, the weight here may be appropriately multiplied by a coefficient, or shifted left by shift3 bits to amplify. Alternatively, the amplifying of the weight value is pre-considered when specifying min*Wvalue* and max*Wvalue,* for example, they are amplified by $2^{shift3}$ times than the real weights, respectively. The weight value for the pixel of the backward reference block may be obtained according to the weight for the forward reference block, that is,

$$sumValue = minWvalue + maxWvalue$$
$$w_{L1}[x0][y0] = sumValue - w_{L0}[x0][y0] \tag{70}$$

Finally, the CIIP weighted prediction value based on the pixel-level weight is calculated according to the following formula. Here, $P_{intra}$ is an intra prediction value obtained after the normal intra prediction process is performed on the current block through the Planar mode, $P_{inter}$ is an inter prediction value, and *wt*[x0][y0] is an intra prediction weight.

$$Predsamples_{CIIP} = \left(w_{L1}[x0][y0] * P_{inter} + w_{L0}[x0][y0] * P_{intra} + offset2\right)?\quad shift3$$
$$offset2 = 1 << (shift3 - 1)$$

(71)

Here, shift3 is a parameter that amplifies the weight value in the previous operation to improve the operation accuracy, and the right shift is used to restore the prediction pixel value to a reasonable value range. If no amplification, $Predsamples_{CIIP}$ may be simply written as:

$$Predsamples_{CIIP} = w_{L1}[x0][y0] * P_{inter} + w_{L0}[x0][y0] * P_{intra}$$

(72)

The above three embodiments introduce different calculation methods for slice-level weighting, two Inter prediction weighting at the CU level, and one Inter and one Intra prediction weighting at the CU level. However, these calculation methods do not have a different design for the slice level or the CU level alone, and do not have a different design when each prediction participating in the weighting comes from the Inter or Intra prediction method.

In the embodiments of the present disclosure, since the weight value at the pixel level is used in the weighted prediction process, the weight value for the entire forward reference block or the backward reference block is no longer fixed to a fixed value, and the weighting parameter for the current Slice or the CU may be adaptively adjusted according to factors such as brightness changes in a sequence of contents. Therefore, the encoding efficiency for the weighted prediction can be further improved.

In the embodiments of the present disclosure, the weight value at the pixel level is used to perform the inter weighted prediction instead of the weight value of each reference block level being a fixed value, which further improves the accuracy of the inter weighted prediction, and thus can improve the encoding efficiency.

In the embodiments of the present disclosure, when the weighting parameter is applied to derive the prediction pixel value, the weighting parameter that changes at the pixel level may be calculated for the pixels at different positions. In order to reduce calculation complexity, a method in which the same weight is taken for a unit of sub-blocks (for example, sub-blocks with a size of 2 × 2 or 4 × 4) is adopted.

In the embodiments of the present disclosure, the weighting parameter on the plane may be changed according to a certain geometrical rule with the positions of the pixels, or may be changed according to combined multiple different geometrical rules. For example, the weight value may change with the distance of the pixel from the center change position, and when the distance value is between [0, L1], it is changed in first gradient mode, and when the distance value is between (L1, L2], it is changed in the second gradient mode.

In the embodiments of the present disclosure, different linear or non-linear gradient modes may be determined for different positions. For example, when the distance value is between [0, L1], the gradient mode is a linear gradient mode, and when the distance is between (L1, L2], the gradient mode is a nonlinear gradient mode, etc.

In the embodiments of the present disclosure, when the parameters such as gradient slope information and change direction information of respective CUs are basically consistent, one or more weight matrices may be predefined firstly, and the pixel-level weight for the coding unit block may be obtained by performing upsampling, downsampling, or intercept on the predefined weight matrix.

In the embodiments of the present disclosure, the weight for the current pixel may be generated not only by calculating according to coordinates (main solution) or predefined weight parameters (the first item in Table 2.1, or the third extension solution), and but also the weight parameters may also be derived according to the weight parameters for the pixels at adjacent top and left positions of the current pixel, for example, wc=(wl+wt+1)/2.

In the embodiments of the present disclosure, an optimal gradient mode of the current CU/coding block may be determined through template matching. Specifically, pixels at the upper row and/or left column of the current CU/coding block are used as a template. In the process of constructing pixel values predicted from the template, gradient weighting process is performed on prediction values from different sources, and geometrical parameters of an optimal gradient weighting scheme are selected as parameters of the gradient weighting scheme for the current CU/coding block.

In the embodiments of the present disclosure, for a CU/coding block with small size, some gradient modes having a greater gradient width range may be skipped. For a CU/coding block with large size, some gradient modes having a small gradient width range may be skipped.

In the embodiments of the present disclosure, for a sequence with a higher resolution or a block with a larger size, the number of segments for the gradient mode may be adaptively increased, thereby improving the prediction accuracy.

The embodiments of the present disclosure provide an encoding and decoding method. A decoder or an encoder can determine information of at least one motion vector of a current block, and a type indication parameter and/or a geometrical mode parameter of the current block, determine at least one reference prediction value of the current block according to the information of at least one motion vector, determine at least one weight parameter for the current block according to the type indication parameter and/or the geometrical mode parameter, and determine a prediction value of the current block based on the at least one reference prediction value and the at least one weight parameter. It can be understood that in the embodiments of the present disclosure, The decoder or encoder can determine the pixel-level weight parameter for the current block through the type indication parameter and/or the geometrical mode parameter, and then can perform prediction process on the current block according to the pixel-level weight parameter. It can be seen that in the embodiments of the present disclosure, the weight used for the prediction processing is no longer fixed, but the pixel-level weight value adapted to the change of the pixel is selected, which greatly improves the accuracy of the weighted prediction, thereby improving the encoding efficiency and the compression performance.

Based on the above embodiments, in yet another embodiment of the present disclosure, and based on the same inventive concept as the above embodiments, FIG. 21 is the first schematic structure diagram of an encoder. As illustrated in FIG. 21, the encoder 30 may include the first determining unit 31.

The first determining unit 31 is configured to determine information of at least one motion vector of a current block, and at least one of a type indication parameter or a geometrical mode parameter of the current block, determine at least one reference prediction value of the current block according to the information of at least one motion vector, determine at least one weight parameter for the current block according to at least one of the type indication parameter or the geometrical mode parameter, and determine a prediction value for the current block based on the at least one reference prediction value and the at least one weight parameter.

It may be understood that in the present embodiment, the "unit" may be part of a circuit, part of a processor, part of program or software, or the like, and of course, it may be a module, or may be non-modular. Moreover, various components in this embodiment may be integrated in one processing unit, each unit may physically exist separately, or two or more units may be integrated in one unit. The above integrated unit may be implemented in the form of hardware or software functional modules.

If the integrated unit is implemented in the form of a software functional module and is not sold or used as an independent product, it may be stored in a computer readable storage medium. With this understanding, the technical solution of the present embodiment in essence or in part contributing to the prior art, or all or part of the technical solution may be embodied in the form of a software product. The computer software product is stored in a storage medium, and includes instructions for causing a computer device (which may be a personal computer, a server, a network device, etc.,) or a processor to perform all or part of the steps of the methods of the present embodiments. The above storage medium includes a U disk, a removable hard disk, a Read Only Memory (ROM), a Random Access Memory (RAM), a magnetic disk or an optical disk and other medium capable of storing program codes.

Accordingly, the embodiments of the present disclosure provide a computer readable storage medium. The computer readable storage medium is applied to the encoder 30, and the computer readable storage medium stores a computer program that, when executed by the first processor, implements the method of any one of the foregoing embodiments.

Based on the structure of the encoder 30 and the computer readable storage medium described above, FIG. 22 is the second structure schematic diagram of the encoder. As illustrated in FIG. 22, the encoder 30 may include the first memory 32, the first processor 33, the first communication interface 34, and the first bus system 35. The first memory 32, the first processor 33, and the first communication interface 34 are coupled together by the first bus system 35. It should be understood that the first bus system 35 is used to implement connection communication between these components. The first bus system 35 includes a power bus, a control bus, and a status signal bus in addition to a data bus. However, for clarity of illustration, the various buses are illustrated as the first bus system 35.

The first communication interface 34 is configured to receive and transmit signals in the process of transmitting/receiving information to/from other external network elements.

The first memory 32 is configured to store a computer program executable on the first processor.

The first processor 33 is configured to, when executing the computer program, determine information of at least one motion vector of a current block, and at least one of a type indication parameter or a geometrical mode parameter of the current block, determine at least one reference prediction value of the current block according to the information of at least one motion vector, determine at least one weight parameter for the current block according to the at least one of the type indication parameter or the geometrical mode parameter, and determine a prediction value of the current block based on the at least one reference prediction value and the at least one weight parameter.

It may be understood that the first memory 32 in the embodiments of the present disclosure may be a volatile memory or a non-volatile memory, or may include both volatile and non-volatile memory. The non-volatile memory may be a ROM, a Programmable ROM (PROM), an Erasable PROM (EPROM), an Electrically EPROM (EEPROM), or a flash memory. The volatile memory may be a RAM, which serves as an external cache. By way of illustration but not limitation, many forms of RAM are available, such as a static RAM (SRAM), a dynamic RAM (DRAM), a synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The first memory 32 of the systems and methods described herein is intended to include, but is not limited to, these and any other suitable type of memory.

The first processor 33 may be an integrated circuit chip having signal processing capabilities. In implementation, the operations of the above method may be accomplished by an integrated logic circuit of hardware in the first processor 33 or instructions in the form of software. The above first processor 33 may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as RAM, flash memory, ROM, PROM, or EEPROM, register, etc. The storage medium is located in the first memory 32, and the first processor 33 reads the information in the first memory 32, and completes the steps of the above method in combination with its hardware.

It may be understood that the embodiments described herein may be implemented in hardware, software, firmware, middleware, microcode, or a combination thereof. For hardware implementation, the processing unit may be implemented in one or more ASICs, DSPs, DSP Devices (DSPDs), Programmable Logic Devices (PLDs), FPGAs, general-purpose processors, controllers, microcontrollers, microprocessors, other electronic units for performing the functions described herein, or combinations thereof. For software implementation, the techniques described herein may be implemented by modules (e.g., procedures, functions, etc.) that perform the functions described herein. The software code may be stored in a memory and executed by a processor. The memory may be implemented in the processor or external to the processor.

Alternatively, as another embodiment, the first processor 33 is further configured to perform the method of any one of the preceding embodiments when executing the computer program.

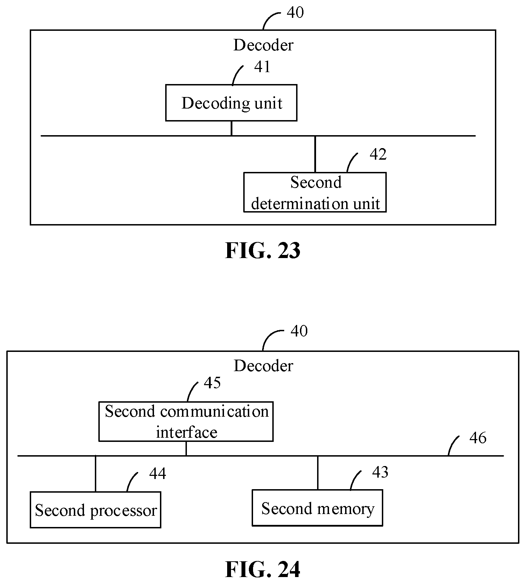

FIG. 23 is the first structure schematic diagram of a decoder. As illustrated in FIG. 23, the decoder 40 may include: a decoding unit 41 and the second determining unit 42.

The decoding unit 41 is configured to decode a bitstream.

The second determination unit 42 is configured to determine information of at least one motion vector of a current block, and at least one of a type indication parameter or a geometrical mode parameter of the current block, determine at least one reference prediction value of the current block according to the information of at least one motion vector, determine at least one weight parameter for the current block according to the at least one of the type indication parameter and/or the geometrical mode parameter, and determine a prediction value of the current block based on the at least one reference prediction value and the at least one weight parameter.

It may be understood that in the present embodiment, the "unit" may be part of a circuit, part of a processor, part of program or software, or the like, and of course, it may be a module, or may be non-modular. Moreover, in this embodiment, various components may be integrated in one processing unit, each unit may physically exist separately, or two or more units may be integrated in one unit. The above integrated unit may be implemented in the form of hardware or software functional modules.

If the integrated unit is implemented in the form of a software functional module and is not sold or used as an independent product, it may be stored in a computer readable storage medium. With this understanding, the technical solution of the present embodiment in essence or in part contributing to the prior art, or all or part of the technical solution may be embodied in the form of a software product. The computer software product is stored in a storage medium, and includes instructions for causing a computer device (which may be a personal computer, a server, a network device, etc.,) or a processor to perform all or part of the steps of the methods of the present embodiments. The above storage medium includes a U disk, a removable hard disk, a ROM, a RAM, a magnetic disk or an optical disk and other medium capable of storing program codes.

Accordingly, the embodiments of the present disclosure provide a computer readable storage medium. The computer readable storage medium is applied to the decoder 40, the computer readable storage medium stores a computer program that, when executed by the first processor, implements the method of any one of the preceding embodiments.

Based on the structure of the decoder 40 and the computer readable storage medium described above, FIG. 24 is a second structure schematic diagram of the decoder. As illustrated in FIG. 24, the decoder 40 may include the second memory 43, the second processor 44, the second communication interface 45, and the second bus system 46. The second memory 43, the second processor 44 and the second communication interface 45 are coupled together by the second bus system 46. It should be understood that the second bus system 46 is used to implement connection communication between these components. The second bus system 46 includes a power bus, a control bus, and a status signal bus in addition to a data bus. However, for clarity of illustration, the various buses are illustrated as the second bus system 46.

The second communication interface 45 is configured to receive and transmit signals in the process of transmitting/receiving information to/from other external network elements.

The second memory 43 is configured to store a computer program executable on the second processor.

The second processor 44 is configured to, when executing the computer program, decode a bitstream to determine information of at least one motion vector of a current block, and at least one of a type indication parameter or a geometrical mode parameter, determine at least one reference prediction value of the current block according to the information of at least one motion vector, determine at least one weight parameter for the current block according to the at least one of the type indication parameter or the geometrical mode parameter, and determine a prediction value of the current block based on the at least one reference prediction value and the at least one weight parameter.

It may be understood that the second memory 43 in the embodiments of the present disclosure may be a volatile memory or a non-volatile memory, or may include both volatile and non-volatile memory. The non-volatile memory may be a ROM, a PROM, an EPROM, an EEPROM, or a flash memory. The volatile memory may be a RAM, which serves as an external cache. By way of illustration but not limitation, many forms of RAM are available, such as a SRAM, a DRAM, a SDRAM, a DDRSDRAM, an ESDRAM, a SLDRAM and a DRRAM. The second memory 43 of the systems and methods described herein is intended to include, but is not limited to, these and any other suitable type of memory.

The second processor 44 may be an integrated circuit chip having signal processing capabilities. In implementation, the operations of the above method may be accomplished by an integrated logic circuit in hardware in the second processor 44 or instructions in the form of software. The above second processor 44 may be a general-purpose processor, a DSP, an ASIC, a FPGA or other programmable logic device, a discrete gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as RAM, flash memory, ROM, PROM, or EEPROM, register, etc. The storage medium is located in the second memory 43, and the second processor 44 reads the information in the second memory 43, and completes the steps of the above method in combination with its hardware.

It may be understood that the embodiments described herein may be implemented in hardware, software, firmware, middleware, microcode, or a combination thereof. For hardware implementation, the processing unit may be implemented in one or more ASICs, DSPs, DSPDs, PLDs, FPGAs, general-purpose processors, controllers, microcontrollers, microprocessors, other electronic units for performing the functions described herein, or combinations thereof. For software implementation, the techniques described herein may be implemented by modules (e.g., procedures, functions, etc.) that perform the functions described herein. The software code may be stored in a memory and executed by a processor. The memory may be implemented in the processor or external to the processor.

The embodiments of the present disclosure provide a codec. At a decoding end, the codec can determine information of at least one motion vector of a current block, and at least one of a type indication parameter or a geometrical mode parameter, determine at least one reference prediction value of the current block according to information of the at least one motion vector, determine at least one weight parameter for the current block according to the at least one of the type indication parameter or the geometrical mode parameter, determine a prediction value of the current block based on the at least one reference prediction value and the at least one weight parameter. It may be understood that in the embodiments of the present disclosure, the codec can determine the pixel-level weight parameter for the current block from the type indication parameter and/or the geometrical mode parameter, and then can perform prediction process on the current block according to the pixel-level weight parameter. It may be seen that in the embodiments of the present disclosure, the weight used for the prediction process is no longer fixed, but the pixel-level weight value adapted to the change of the pixels is selected, which greatly improves the accuracy of the weighted prediction, thereby improving the encoding efficiency and the compression performance.

In yet another embodiment of the present disclosure, the embodiments of the present disclosure further provide a bitstream. The bitstream is generated by bit encoding according to to-be-encoded information. The to-be-encoded information may include at least one of: an inter prediction mode parameter of a current block, information of at least one motion vector of the current block, a type indication parameter, and/or a geometrical mode parameter.

It should be noted that in the present disclosure, the terms "comprising", "including" or any other variation thereof are intended to encompass a non-exclusive inclusion such that a process, method, article, or apparatus including a series of elements includes not only those elements, but also other elements not explicitly listed, or elements inherent to such a process, method, article, or apparatus. Without further limitation, an element defined by the statement "including a" does not preclude the presence of additional identical elements in a process, method, article, or apparatus that includes the element.

The above-described serial numbers of the embodiments of the present disclosure are for description only, and do not represent the advantages and disadvantages of the embodiments.

The methods disclosed in several method embodiments provided in the present disclosure may be arbitrarily combined without conflict to obtain new method embodiments.

The features disclosed in several product embodiments provided in the present disclosure may be arbitrarily combined without conflict to obtain new product embodiments.

The features disclosed in several method or device embodiments provided in the present disclosure may be arbitrarily combined without conflict to obtain new method or device embodiments.

The above is merely specific embodiments of the present disclosure, but the scope of protection of the present disclosure is not limited thereto, and any person skilled in the art can easily think of changes or substitutions within the technical scope disclosed in the present disclosure, which should be covered within the scope of protection of the present disclosure. Therefore, the scope of protection of the present disclosure should be based on the scope of protection of the claims.

INDUSTRIAL PRACTICALITY

Embodiments of the present disclosure provide an encoding and decoding method, an encoder, a decoder, a bitstream, and a storage medium. The encoder and the decoder can determine information of at least one motion vector of a current block, and a type indication parameter and/or a geometrical mode parameter, determine at least one reference prediction value of the current block according to the information of at least one motion vector, determine at least one weight parameter for the current block according to the type indication parameter and/or the geometrical mode parameter, and determine a prediction value of the current block based on the at least one reference prediction value and the at least one weight parameter. It can be understood that in the embodiments of the present disclosure, the encoder and the decoder can determine the pixel-level weight parameter for the current block through the type indication parameter and/or the geometrical mode parameter, and then can perform prediction process on the current block according to the pixel-level weight parameter. It can be seen that in the embodiments of the present disclosure, the weight used for the prediction processing is no longer fixed, but the pixel-level weight value adapted to the change of the pixel is selected, which greatly improves the accuracy of the weighted prediction, thereby improving the encoding efficiency and the compression performance.

**Claims**

1. A decoding method, applied to a decoder, comprising:

   decoding a bitstream to determine information of at least one motion vector of a current block, and at least one of a type indication parameter or a geometrical mode parameter of the current block;
   determining at least one reference prediction value of the current block according to the information of at least one motion vector, determining at least one weight parameter for the current block according to at least one of the type indication parameter or the geometrical mode parameter; and
   determining a prediction value of the current block based on the at least one reference prediction value and the at least one weight parameter.

2. The method of claim 1, wherein,
   the geometrical mode parameter comprises one or more of: gradient mode information, gradient slope information, change direction information, change start position information, change center position information, change end position information, change range width information, or change segment information.

3. The method of claim 1, wherein,
   the geometrical mode parameter is used to indicate a geometrical change set, wherein the geometrical change set comprises change start position information, change center position information, and change end position information.

4. The method of claim 2 or 3, further comprising:

   when the type indication parameter indicates that the geometrical mode parameter is not used, determining a pre-stored matrix, and determining the at least one weight parameter according to the pre-stored matrix; and
   when the type indication parameter indicates that the geometrical mode parameter is used, determining, according to the geometrical mode parameter, the at least one weight parameter.

5. The method of claim 1, wherein,
   the information of at least one motion vector comprises at least one of a forward motion vector or a backward motion vector.

6. The method of claim 1, wherein,
   the at least one reference prediction value comprises at least one of a forward reference value or a backward reference value.

7. The method of claim 2, wherein,
   the at least one weight parameter comprises at least one pixel weight value.

8. The method of claim 7, further comprising:
   determining the at least one pixel weight value according to position information of a sample in the current block and the geometrical mode parameter.

9. The method of claim 8, further comprising:

   determining a lower limit weight and an upper limit weight according to the gradient mode information, the change start position information, the change end position information, and the change direction information under a requirement of a predefined calculation accuracy;
   determining a first distance according to the position information of the sample in the current block and the change start position information, and determining a second distance according to the position information of the sample in the current block and the change end position information; and
   determining the at least one pixel weight value according to the first distance, the second distance, the lower limit weight, and the upper limit weight.

10. The method of claim 8, further comprising:

    determining a lower limit weight and an upper limit weight according to the gradient mode information, the gradient slope information, the change direction information, and the change center position information under a requirement of a predefined calculation accuracy, and determining a weight for a change center position according to the upper limit weight and the lower limit weight;
    determining a third distance according to the position information of the sample in the current block and the change center position information; and
    determining the at least one pixel weight value according to the third distance and the weight for the change center position.

11. The method of claim 8, further comprising:

    determining a lower limit weight and an upper limit weight according to the gradient mode information, the gradient slope information, the change direction information, and the change center position information under a requirement of a predefined calculation accuracy, and determining a weight for a change center position according to the upper limit weight and the lower limit weight;
    determining a fourth distance according to the position information of the sample in the current block and the change center position information; and
    determining the at least one pixel weight value based on the fourth distance, the lower limit weight, the upper limit weight, and the weight for the change center position.

12. The method of any one of claims 9 to 11, further comprising:
    presetting the upper limit weight and the lower limit weight.

13. The method of any one of claims 9 to 12, wherein the pixel weight value comprises a first prediction weight and a second prediction weight, and the method further comprises:

    determining a value of a sum of weights according to the lower limit weight and the upper limit weight; and
    determining the second prediction weight based on the first prediction weight and the value of the sum of the weights.

14. The method of claim 9, wherein
    the at least one weight parameter comprises at least one pixel offset value.

15. The method of claim 14, further comprising:

decoding the bitstream to determine the at least one pixel offset value.

16. The method of claim 14, further comprising:
determining, according to the at least one pixel weight value, the at least one pixel offset value.

17. The method of claim 15 or 16, further comprising:
determining the prediction value of the current block according to the at least one reference prediction value, the at least one pixel weight, and the at least one pixel offset value.

18. The method of claim 10 or 11, further comprising:
determining the prediction value of the current block according to the at least one reference prediction value and the at least one pixel weight.

19. The method of claim 2, wherein,
the at least one weight parameter comprises a weight value for a sub-block of the current block.

20. The method of claim 8, further comprising:
for position information of a sample in the current block, determining a pixel weight for the position of the sample according to pixel weights for positions of other samples adjacent to the position of the sample.

21. The method of claim 1 further comprising:

decoding the bitstream to determine an inter prediction mode parameter of the current block; and
when the inter prediction mode parameter indicates that a pixel-level weight value is used to determine an inter prediction value of the current block, performing a process of determining at least one of the type indication parameter or the geometrical mode parameter.

22. A encoding method, applied to an encoder, comprising:

determining information of at least one motion vector of a current block, and at least one of a type indication parameter or a geometrical mode parameter of the current block;
determining at least one reference prediction value of the current block according to the information of at least one motion vector, determining at least one weight parameter for the current block according to at least one of the type indication parameter or the geometrical mode parameter; and
determining a prediction value of the current block based on the at least one reference prediction value and the at least one weight parameter.

23. The method of claim 22, wherein
the geometrical mode parameter comprises one or more of: gradient mode information, gradient slope information, change direction information, change start position information, change center position information, change end position information, change range width information, or change segment information.

24. The method of claim 22, wherein
the geometrical mode parameter is used to indicate a geometrical change set, wherein the geometrical change set comprises change start position information, change center position information, and change end position information.

25. The method of claim 23 or 24, further comprising:

when the type indication parameter indicates that the geometrical mode parameter is not used, determining a pre-stored matrix, and determining the at least one weight parameter according to the pre-stored matrix; and
when the type indication parameter indicates that the geometrical mode parameter is used, determining the at least one weight parameter according to the geometrical mode parameter.

26. The method of claim 21, wherein
the information of at least one motion vector comprises at least one of a forward motion vector or a backward motion vector.

27. The method of claim 21, wherein
the at least one reference prediction value comprises at least one of a forward reference value or a backward reference value.

28. The method of claim 23, wherein,
the at least one weight parameter comprises at least one pixel weight value.

29. The method of claim 28, further comprising:
determining the at least one pixel weight value according to position information of a sample in the current block and the geometrical mode parameter.

30. The method of claim 29, further comprising:

determining a lower limit weight and an upper limit weight according to the gradient mode information, the change start position information, the change end position information, and the change direction information under a requirement of a predefined calculation accuracy;
determining a first distance according to the position information of the sample in the current block and the change start position information, and determining a second distance according to the position information of the sample in the current block and the change end position information; and
determining the at least one pixel weight value according to the first distance, the second distance, the lower limit weight, and the upper limit weight.

31. The method of claim 29, further comprising:

determining a lower limit weight and an upper limit weight according to the gradient mode information, the gradient slope information, the change direction information, and the change center position information under a requirement of a predefined calculation accuracy, and determining a weight for a change center position according to the upper limit weight and the lower limit weight;
determining a third distance according to the position information of the sample in the current block and the change center position information; and
determining the at least one pixel weight value according to the third distance and the weight for the change center position.

32. The method of claim 29, further comprising:

determining a lower limit weight and an upper limit weight according to the gradient mode information, the gradient slope information, the change direction information, and the change center position information under a requirement of a predefined calculation accuracy, and determining a weight for a change center position according to the upper limit weight and the lower limit weight;
determining a fourth distance according to the position information of the sample in the current block and the change center position information; and
determining the at least one pixel weight value based on the fourth distance, the lower limit weight, the upper limit weight, and the weight for the change center position.

33. The method of any one of claims 30 to 32, wherein,
the upper limit weight and the lower limit weight are preset.

34. The method of any one of claims 30 to 33, wherein the pixel weight value comprises a first prediction weight and a second prediction weight, and the method further comprises:

determining a value of a sum of weights according to the lower limit weight and the upper limit weight; and
determining the second prediction weight based on the first prediction weight and the value of the sum of the weights.

35. The method of claim 30, wherein,
the at least one weight parameter comprises at least one pixel offset value.

36. The method of claim 35, further comprising:

decoding the bitstream to determine the at least one pixel offset value.

37. The method of claim 35, further comprising:
determining the at least one pixel offset value according to the at least one pixel weight value.

38. The method of claim 36 or 37, further comprising:
determining the prediction value of the current block according to the at least one reference prediction value, the at least one pixel weight, and the at least one pixel offset value.

39. The method of claim 31 or 32, further comprising:
determining the prediction value of the current block according to the at least one reference prediction value and the at least one pixel weight.

40. The method of claim 23, wherein,
the at least one weight parameter comprises a weight value for a sub-block of the current block.

41. The method of claim 29, further comprising:
for position information of a sample in the current block, determining a pixel weight for the position of the sample according to pixel weights for positions of other samples adjacent to the position of the sample.

42. The method of claim 22, further comprising:

determining an inter prediction mode parameter of the current block; and
when the inter prediction mode parameter indicates that a pixel-level weight value is used to determine an inter prediction value of the current block, performing a process of determining at least one of the type indication parameter or the geometrical mode parameter.

43. An encoder, comprising:
a first determining unit, configured to: determine information of at least one motion vector of a current block, and at least one of a type indication parameter or a geometrical mode parameter; determine at least one reference prediction value of the current block according to the information of at least one motion vector, determine at least one weight parameter for the current block according to at least one of the type indication parameter or the geometrical mode parameter; and determine a prediction value of the current block based on the at least one reference prediction value and the at least one weight parameter.

44. An encoder, comprising a first processor and a first memory storing instructions executable by the first processor, the instructions, when executed by the first processor, implement the method of any one of claims 22 to 42.

45. A decoder, comprising:

a decoding unit, configured to decode a bitstream; and
a second determining unit, configured to: determine information of at least one motion vector of a current block, and at least one of a type indication parameter or a geometrical mode parameter of the current block; determine at least one reference prediction value of the current block according to the information of at least one motion vector; determine at least one weight parameter for the current block according to at least one of the type indication parameter or the geometrical mode parameter; and determine a prediction value of the current block based on the at least one reference prediction value and the at least one weight parameter.

46. A decoder, comprising a second processor and a second memory storing instructions executable by the second processor, the instructions, when executed by the second processor, implement the method of any one of claims 1 to 21.

47. A bitstream, generated by bit encoding according to to-be-coded information, wherein the to-be-encoded information comprises at least one of: an inter prediction mode parameter of a current block, information of at least one motion vector of the current block, and at least one of a type indication parameter or a geometrical mode parameter.

48. A computer storage medium, storing a computer program that, when executed by a first processor, implements the method of any one of claims 22 to 42 or, when executed by a second processor, implements the method of any one of claims 1 to 21.

**FIG. 1**

Input video signal

Partitioned into coding blocks

Transform and quantization unit ~501

Quantized transform coefficients

Inverse transform and inverse quantization unit ~506

Filter control analysis unit ~507

Filter control data

Intra estimation unit ~502

503

Selecting inter or intra

Intra prediction unit

Filter unit ~508

Intra prediction data

Encoding unit ~509

Output bitstream

Inter prediction unit ~504

Motion data

Motion estimation unit ~505

Decoded picture buffer unit ~510

Output video signal

50

EP 4 629 614 A1

**FIG. 2**

inter or intra selection

Inter prediction unit ⌐604

Intra prediction unit ⌐603

⌐60

Filter unit ⌐605

Decoded picture buffer unit ⌐606

Output video signal

Input bitstream

Decoding unit ⌐601

Inverse transform and inverse quantization unit ⌐602

**FIG. 3**

1N

Interactive

01

Network

Interactive

15

Interactive

Interactive

14

Interactive

13

Interactive

16

**FIG. 4**

Decode a bitstream to determine information of at least one motion vector of a current block, and at least one of a type indication parameter or a geometric mode parameter of the current block — 101

Determine, according to the information of at least one motion vector, at least one reference prediction value of the current block, and determine, according to at least one of the type indication parameter or the geometric mode parameter, at least one weight parameter for the current block — 102

Determine, based on the at least one reference prediction value and the at least one weight parameter, a prediction value of the current block — 103

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

| Determine information of at least one motion vector of a current block, and at least one of a type indication parameter or a geometric mode parameter of the current block | ⌐ 201 |

↓

| Determine, according to the information of at least one motion vector information, at least one reference prediction value of the current block, and determine, according to at least one of the type indication parameter or the geometric mode parameter, at least one weight parameter for the current block | ⌐ 202 |

↓

| Determine, based on the at least one reference prediction value and the at least one weight parameter, a prediction value of the current block | ⌐ 203 |

**FIG. 20**

⌐ 30

| Encoder |
| ⌐ 31 |
| First determining unit |

**FIG. 21**

⌐ 30

| Encoder |
| ⌐ 34 |
| First communication interface |
| ⌐ 35 |
| ⌐ 33 | ⌐ 32 |
| First processor | First memory |

**FIG. 22**

40

Decoder

41

Decoding unit

42

Second
determination unit

**FIG. 23**

40

Decoder

45

Second communication
interface

46

44

Second processor

43

Second memory

**FIG. 24**

## INTERNATIONAL SEARCH REPORT

| International application No. |
| --- |
| **PCT/CN2022/135906** |

### A. CLASSIFICATION OF SUBJECT MATTER

H04N19/00(2014.01)i

According to International Patent Classification (IPC) or to both national classification and IPC

### B. FIELDS SEARCHED

Minimum documentation searched (classification system followed by classification symbols)

    IPC：H04N

Documentation searched other than minimum documentation to the extent that such documents are included in the fields searched

Electronic data base consulted during the international search (name of data base and, where practicable, search terms used)

    CNABS, CNTXT, ENTXT, ENTXTC, CJFD, JVET: 几何分割, 几何划分, 帧间预测, 权值, 权重, 加权, 矩阵, 运动矢量, 运动向量, 像素, GEO, GPM, inter-prediction, weight+, matrix, MV, motion-vector, pixel+

### C. DOCUMENTS CONSIDERED TO BE RELEVANT

| Category* | Citation of document, with indication, where appropriate, of the relevant passages | Relevant to claim No. |
| --- | --- | --- |
| X | CN 115315953 A (GUANGDONG OPPO MOBILE COMMUNICATIONS CO., LTD.) 08 November 2022 (2022-11-08) description, paragraphs [0140]-[0235] | 1, 5-6, 8, 22, 26-27, 29, 43-48 |
| X | CN 113810686 A (HANGZHOU HIKVISION DIGITAL TECHNOLOGY CO., LTD.) 17 December 2021 (2021-12-17) description, paragraphs [0068]-[0097] and [0326]-[0337] | 1-8, 22-29, 43-48 |
| A | CN 114666580 A (GUANGDONG OPPO MOBILE COMMUNICATIONS CO., LTD.) 24 June 2022 (2022-06-24) entire document | 1-48 |
| A | CN 114651447 A (TENCENT AMERICA LLC) 21 June 2022 (2022-06-21) entire document | 1-48 |
| A | CN 115136601 A (DOUYIN VISION CO., LTD. et al.) 30 September 2022 (2022-09-30) entire document | 1-48 |
| A | US 2022224923 A1 (HUAWEI TECHNOLOGIES CO., LTD.) 14 July 2022 (2022-07-14) entire document | 1-48 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 July 2023** | **01 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 629 614 A1

**INTERNATIONAL SEARCH REPORT**
**Information on patent family members**

International application No.

**PCT/CN2022/135906**

| Patent document cited in search report | | | Publication date (day/month/year) | Patent family member(s) | | | Publication date (day/month/year) |
|---|---|---|---|---|---|---|---|
| CN | 115315953 | A | 08 November 2022 | WO | 2021196220 | A1 | 07 October 2021 |
| | | | | TW | 202139700 | A | 16 October 2021 |
| | | | | EP | 4131958 | A1 | 08 February 2023 |
| | | | | US | 2023042640 | A1 | 09 February 2023 |
| CN | 113810686 | A | 17 December 2021 | CN | 113766222 | A | 07 December 2021 |
| | | | | WO | 2021244496 | A1 | 09 December 2021 |
| | | | | TW | 202209891 | A | 01 March 2022 |
| | | | | HK | 40064059 | A0 | 30 June 2022 |
| | | | | AU | 2021286043 | A1 | 05 January 2023 |
| | | | | KR | 20230003054 | A | 05 January 2023 |
| | | | | CN | 113810686 | B | 24 February 2023 |
| | | | | EP | 4145827 | A1 | 08 March 2023 |
| | | | | CN | 113766222 | B | 24 March 2023 |
| CN | 114666580 | A | 24 June 2022 | WO | 2021134627 | A1 | 08 July 2021 |
| | | | | CN | 114270846 | A | 01 April 2022 |
| | | | | IN | 202217016700 | A | 08 July 2022 |
| | | | | US | 2022224910 | A1 | 14 July 2022 |
| | | | | KR | 20220122969 | A | 05 September 2022 |
| | | | | EP | 4087248 | A1 | 09 November 2022 |
| | | | | JP | 2023514469 | W | 06 April 2023 |
| CN | 114651447 | A | 21 June 2022 | EP | 4082212 | A1 | 02 November 2022 |
| | | | | KR | 20210135311 | A | 12 November 2021 |
| | | | | CA | 3134981 | A1 | 01 July 2021 |
| | | | | SG | 11202110603 | QA | 28 October 2021 |
| | | | | WO | 2021133456 | A1 | 01 July 2021 |
| | | | | US | 2022210427 | A1 | 30 June 2022 |
| | | | | AU | 2023202101 | A1 | 04 May 2023 |
| | | | | JP | 2022526161 | A | 23 May 2022 |
| | | | | US | 2021195200 | A1 | 24 June 2021 |
| | | | | US | 11317094 | B2 | 26 April 2022 |
| | | | | AU | 2020414351 | A1 | 28 October 2021 |
| | | | | AU | 2020414351 | B2 | 05 January 2023 |
| CN | 115136601 | A | 30 September 2022 | WO | 2021155865 | A1 | 12 August 2021 |
| US | 2022224923 | A1 | 14 July 2022 | WO | 2021061020 | A1 | 01 April 2021 |
| | | | | EP | 4022900 | A1 | 06 July 2022 |
| | | | | EP | 4022900 | A4 | 09 November 2022 |

Form PCT/ISA/210 (patent family annex) (July 2022)